# EUROPÄISCHE PATENTSCHRIFT

(11) **EP 3 596 878 B1**
(45) Veröffentlichungstag und Bekanntmachung des Hinweises auf die Patenterteilung: **22.05.2024**
(21) Anmeldenummer: 18711921.9
(22) Anmeldetag: 16.03.2018
(51) Int. Cl.: H04L 9/00, H04L 9/32

(54) **PROTOKOLLIEREN VON ZUSTANDSDATEN EINER VORRICHTUNG IN EINER BLOCKCHAIN**
LOGGING OF CONDITION DATA OF A DEVICE IN A BLOCKCHAIN
ENREGISTREMENT DE DONNÉES D'ÉTAT D'UN DISPOSITIF DANS UNE CHAÎNE DE BLOCS

(30) Priorität: 17.03.2017 DE 102017204538
(43) Veröffentlichungstag der Anmeldung: 22.01.2020
(73) Patentinhaber: Bundesdruckerei GmbH, 10969 Berlin (DE)
(72) Erfinder: RÜCKRIEMEN, Jörg, 10999 Berlin (DE); EHREKE, Jens, 12587 Berlin (DE)
(74) Vertreter: Richardt Patentanwälte PartG mbB
(86) Internationale Anmeldenummer: PCT/EP2018/056620
(87) Internationale Veröffentlichungsnummer: WO 2018/167253

(56) Entgegenhaltungen:
- US-A1- 2016 261 690
- YUAN YONG ET AL: "Towards blockchain-based intelligent transportation systems", 2016 IEEE 19TH INTERNATIONAL CONFERENCE ON INTELLIGENT TRANSPORTATION SYSTEMS (ITSC), IEEE, 1. November 2016 (2016-11-01), Seiten 2663-2668, XP033028713, DOI: 10.1109/ITSC.2016.7795984 [gefunden am 2016-12-22]
- Satoshi Nakamoto: "Bitcoin: A Peer-to-Peer Electronic Cash System", , 4 July 2010 (2010-07-04), pages 1-9, XP055546007, Retrieved from the Internet: URL:https://bitcoin.org/bitcoin.pdf [retrieved on 2019-01-22]

## Beschreibung

Die Erfindung betrifft ein Verfahren zum Protokollieren von Zustandsdaten einer Vorrichtung in einer Blockchain sowie ein System zur Ausführung des Verfahrens.

Beispielsweise im Fall eines Fahrzeugs richtet sich der Wert einer gebrauchten Vorrichtung, d.h. eines Fahrzeugs, und damit auch der auf dem Gebrauchtwagenmarkt erzielbare Preis maßgeblich nach dem Zustand des zu verkaufenden Fahrzeugs. Den tatsächlichen Zustand eines Fahrzeugs zu ermitteln gestaltet sich jedoch unter Umstanden schwierig. Insbesondere der Verschleiß einzelner Komponente und die sich daraus ergebende Wahrscheinlichkeit für Ausfälle und notwendige Reparaturen lässt sich anhand des äußeren Erscheinungsbilds der entsprechenden Komponenten bisweilen nur schwer abschätzen. Eine verlässliche Bewertung wäre gegebenenfalls auf Basis eingehender Untersuchen möglich, welche sich jedoch im Allgemeinen aufgrund des hohen Aufwands und den damit einhergehenden Kosten als unverhältnismäßig erweisen.

Für eine einfache und effiziente Bewertung werden daher Hilfsgrößen zur Hand genommen, um den Zustand einer entsprechenden Vorrichtung abzuschätzen. Eine weitverbreitete indirekte Hilfsgröße zum Bewerten des Zustands eines Fahrzeugs ist beispielsweise dessen Kilometerstand. Mithin hat der Kilometerstand direkten Einfluss auf den Wiederverkaufswert des Fahrzeugs.

Um auf dem Gebrauchtwagenmarkt einen höheren Gewinn zu erzielen, kommt es daher vor, dass Kilometerstände an Fahrzeugen manipuliert und eine geringere Laufleistung vorgetäuscht wird. Grundsätzlich können aus dem Zustand eines Fahrtzeugs zwar Rückschlüsse auf den ungefähren Kilometerstand gezogen werden, aber gerade diesen Zustand gilt es ja zu ermitteln und zu bewerten. Je älter das Fahrzeug und je erheblicher die Diskrepanzen zwischen manipuliertem Kilometerstand und tatsächlichem Kilometerstand ist, desto leichter mögen sich offensichtliche Unstimmigkeiten noch anhand des äußeren Erscheinungsbilds des Fahrzeugs erkennen lassen. Je jünger jedoch das Fahrzeug und je weniger gravierenden die Abweichungen zum tatsächlichen Kilometerstand sind, desto schwieriger gestaltet es sich die Manipulation zu erkennen.

Kilometerstände von Fahrzeugen sind ein Beispiel für Zustandsdaten von Vorrichtungen, deren zuverlässige und manipulationssichere Erfassung und Protokollierung wichtig ist, um ein Bild des Zustands der entsprechenden Vorrichtung zu erhalten.

Der Artikel "Towards blockchain-based intelligent transportation systems" von Yuan Yong et al. in 2016 IEEE 19th International Conference on Intelligent Transportation Systems (ITSC), November 2016, Seiten 2663-2668, präsentiert eine vorläufige Studie über Blockchain-Technologie und mögliche Anwendungen in der Verkehrsforschung. Es wird ein für intelligente Transportsysteme ("intelligent transportation systems"/IST) ausgelegtes, siebenschichtiges konzeptionelles Modell beschrieben, ein Forschungsrahmen für blockchain-basierte intelligente Transportsysteme ("Blockchain-based intelligent transportation systems"/B²ITS) vorgestellt. Ferner werden Forschungsschwerpunkte diskutiert. Schließlich wird die Beziehung zwischen B²ITS und parallele Transportmanagementsysteme ("parallel transportation management systems"/PtMS) in der Literatur untersucht.

Die US 2016/261690 A1 beschreibt Systeme und Verfahren, die das Kommunizieren von Nachrichten an eine weitgehend skalierbare Anzahl von Geräten unabhängig von einer zentralisierten Ressource ermöglichen. Eine Computervorrichtung oder eine Anzahl von Vorrichtungen empfangen von einer Verwaltungseinheit eine oder mehrere Nachrichten über eine Blockchain, die von mehreren dezentralisierten Knoten in einem Peer-to-Peer-Netzwerk verwaltet wird. Das Gerät oder die Geräteführen die in der Nachricht identifizierten Anweisungen aus und geben gegebenenfalls Ergebnisse zurück.

Der Erfindung liegt daher die Aufgabe zugrunde, ein einfaches, effizientes und sicheres Verfahren zum Protokollieren von Zustandsdaten einer Vorrichtung zu schaffen.

Die der Erfindung zugrundeliegende Aufgabe wird jeweils mit den Merkmalen der unabhängigen Patentansprüche gelöst. Ausführungsformen der Erfindung sind in den abhängigen Patentansprüchen angegeben.

Ausführungsformen umfassen ein Verfahren zum Protokollieren von Zustandsdaten einer Vorrichtung in einer Blockchain.

Die Vorrichtung umfasst ein Vorrichtungscomputersystem. Ferner umfasst das Vorrichtungscomputersystem einen Speicher. In dem Speicher, beispielsweise in einem geschützten Speicherbereich des Speichers, ist ein privater kryptographischer Schlüssel eines der Vorrichtung zugeordneten asymmetrischen Schlüsselpaars gespeichert. Das Vorrichtungscomputersystem umfasst zudem eine Kommunikationsschnittstelle zur Kommunikation über ein erstes Kommunikationsnetzwerk.

Die Blockchain umfasst in einem Block ein Programmmodul mit ersten Programminstruktionen, welches der Vorrichtung zugeordnet ist. Durch Ausführen der ersten Programminstruktionen wird ein dem Programmmodul zugeordneter Eintrag mit Zustandsdaten der Vorrichtung in der Blockchain erzeugt. Ferner identifizier das Programmmodul einen öffentlichen kryptographischen Schlüssel des der Vorrichtung zugeordneten asymmetrischen Schlüsselpaars.

Das Verfahren zum Protokollieren von Zustandsdaten der Vorrichtung umfasst:
- Empfangen von Zustandsdaten der Vorrichtung durch das Vorrichtungscomputersystem,
- Erstellen eines ersten Datensatzes zum Eintragen in die Blockchain, wobei der erste Datensatz die Zustandsdaten der Vorrichtung umfasst und das der Vorrichtung zugeordnete Programmmodul identifiziert,
- Signieren des ersten Datensatzes durch das Vorrichtungscomputersystem mit dem privaten kryptographischen Schlüssel,
- Senden des signierten ersten Datensatzes durch das Vorrichtungscomputersystem über das erste Kommunikationsnetzwerk an einen Blockchain-Server einer Mehrzahl von Blockchain-Servern eines Blockchain-Netzwerks, wobei die Blockchain-Server dazu konfiguriert sind, zusätzliche Blöcke für die Blockchain zu erstellen,
- Empfangen des signierten ersten Datensatzes durch den Blockchain-Server,
- Ausführen der ersten Programminstruktionen des durch den Datensatz identifizierten Programmmoduls durch den Blockchain-Server, wobei das Ausführen der ersten Programminstruktionen ein Prüfen der Signatur des ersten Datensatzes unter Verwendung des von dem Programmmodul identifizierten öffentlichen kryptographischen Schlüssels umfasst und, im Falle einer gültigen Signatur, ein Hinzufügen eines ersten Eintrag mit dem signierten ersten Datensatz und einem ersten Zeitstempel zu einem zusätzlichen Block für die Blockchain.

Ausführungsformen können den Vorteil haben, dass sich in einfacher Weise eine Protokollierung von Zustandsdaten einer Vorrichtung implementieren lässt, welche eine hohe Fälschungssicherheit aufweist. Die sich daraus ergebende fälschungssichere Vorrichtungshistorie kann als Nachweis dienen, dass es zu keinen Unregelmäßigkeiten gekommen ist. Mithin lässt sich so beispielsweise ein höherer Wiederverkaufswert für die Vorrichtung erzielen. Dabei kann die protokollierte Vorrichtungshistorie nicht nur dazu dienen zu belegen, dass es zu keinen Unregelmäßigkeiten bei der Erfassung von Zustandsdaten, wie etwa dem Kilometerstand im Falle eines Fahrzeugs, gekommen ist. Darüber hinaus lässt sich anhand der Vorrichtungshistorie beispielsweise auch ablesen, ob es zu besonderen Ereignissen, wie etwa Unfällen oder Funktionsstörungen gekommen ist.

Durch das Senden und externe Speichern der Zustandsdaten in manipulationssicherer Form in der Blockchain, welche selbst typischerweise verteilt gespeichert wird mit einer Mehrzahl an Kopien, kann sichergestellt werden, dass Manipulationen an der Vorrichtung keine Auswirkungen auf die in der Blockchain gespeicherten Zustandsdaten haben. Mit anderen Worten, werden die Zustandsdaten dadurch von der Vorrichtung entkoppelt. Für Manipulationen wäre also nicht nur ein Zugriff auf die Vorrichtung, sondern auch auf die Blockchain notwendig. Dabei sind aber insbesondere die Blockchain und die in ihr gespeicherten Zustandsdaten aufgrund der Struktur der Blockchain effektiv gegen nachträgliche Manipulationen geschützt.

Wird beispielswiese die Stromversorgung der Vorrichtung unterbrochen, etwa durch ein Abklemmen der Batterie bei einem Fahrzeug, um ein Senden von Zustandsdaten zu unterbinden, so ist nach Ausführungsformen aber auch die Vorrichtung aufgrund der Stromunterbrechung nicht betriebsfähig. Mithin ändert sich in dieser Zeit im Allgemeinen aber auch nicht der Zustand der Vorrichtung. Wird die Stromversorgung wiederhergestellt, so wird auch das Senden von Zustandsdaten fortgesetzt. Sollte sich während der Stromunterbrechung der Zustand der Vorrichtung dennoch geändert haben, etwa im Zuge einer Reparatur, so können Zustandsdaten, welche diese Änderung beschreiben, beispielsweise nach der Wiederherstellung der Stromversorgung gesendet werden. Beispielsweise kann nach einer Stromversorgung eine automatische Diagnoseroutine von dem Vorrichtungscomputersystem ausgeführt werden, um Zustandsänderungen während der Stromunterbrechung zu identifizieren. Betrachtet man beispielsweise im Falle eines Fahrzeugs den Kilometerstand, so stellt eine Stromunterbrechung kein Problem dar, da das Fahrzeug während der Stromunterbrechung nicht fährt.

Die in der Blockchain gespeicherten Zustandsdaten stellen, wenn diese konsistent sind, einen Nachweis dar, dass es zu keinen Manipulationen gekommen ist. Wird das Protokollieren der Zustandsdaten in der Blockchain auf irgendeine Weise unterbunden, so fehlt dieser Nachweis und es wird klar, dass etwas nicht korrekt abgelaufen ist. Im Falle einer Protokollierung von Kilometerständen im Falle eines Fahrzeugs zum Schutz vor Tachobetrug, besteht der Schutz in einer Protokollierung konsistenter Kilometerstände. Wird die Protokollierung unterdrückt, fehlt es an einem Nachweis durch manipulationssicher gespeicherte Aufzeichnungen von Zustandsdaten und/oder Aufzeichnungen konsistenter Zustandsdaten. Mithin kann nicht nachgewiesen werden, dass keine Manipulationen vorgenommen wurden.

Die protokollierten Zustandsdaten können ferner für eine aktuelle Fehlerdiagnostik herangezogen werden. Tritt ein Problem auf, kann geprüft werde, ob dies bereits früher einmal aufgetreten ist bzw. ob sich aus den protokollierten Zustandsdaten Hinweise auf die mögliche Ursache des beobachteten Problems ergeben.

Anhand der Zustandsdaten lässt sich beispielsweise der aktuelle Zustand der Vorrichtung ablesen. Dies kann beispielsweise für eine Überwachung des Betriebs der entsprechenden Vorrichtung verwendet werden. Somit lassen sich beispielsweise Fehlfunktion frühzeitig erkennen und vermeiden. Alternativer Weise oder zusätzlich lassen sich so Fehlerursachen im Nachhinein analysieren, erfassen und/oder für den weiteren Betrieb der Vorrichtung beheben. Ferner können die Zustandsdaten auch Verbrauchsdaten der entsprechenden Vorrichtung umfassen. Diese Verbrauchsdaten können beispielsweise Auskunft geben über einen Verbrauch einer Ressource, wie etwa einen Kraftstoffverbrauch, Stromverbrauch, Wasserverbrach, Ölverbrauch, Gasverbrauch etc. Ferner können die Zustandsdaten auch Produktivitätsdaten oder Förderdaten umfassen, welche eine Produktivität, etwa produzierte Stückzahlen, oder eine Fördermenge der Vorrichtung beschreiben.

Unter einer "Vorrichtung" wird hier allgemein eine technische Vorrichtung verstanden mit Sensoren zur Erfassung von Zustandsdaten der Vorrichtung und einem Vorrichtungscomputersystem zum Protokollieren der erfassten Zustandsdaten. Eine Vorrichtung umfasst beispielsweise ein Fahrzeug, eine Anlage, wie etwa eine Produktionsanlage, eine Verarbeitungsanlage, eine Förderanlage, eine Energiegewinnungsanlage, eine Wärmegewinnungsanlage, eine Steuerungsanlage, eine Überwachungsanlage, etc. sein.

Unter einem "Fahrzeug" wird hier ein mobiles Verkehrsmittel verstanden. Ein solches Verkehrsmittel kann beispielsweise dem Transport von Gütern (Güterverkehr), von Werkzeugen (Maschinen oder Hilfsmittel) oder Personen (Personenverkehr) dienen. Fahrzeuge umfassen insbesondere auch motorisierte Verkehrsmittel. Bei einem Fahrzeug kann es sich beispielsweise um ein Landfahrzeug, ein Wasserfahrzeug und/oder ein Luftfahrzeug handeln. Ein Landfahrzeug kann beispielsweise sein: ein Automobil, wie etwa ein Personenkraftwagen, Omnibus oder ein Lastkraftwagen, ein motorbetriebenes Zweirad, wie etwa ein Motorrad, Kleinkraftrad, Motorroller oder Motorfahrrad, ein landwirtschaftlicher Traktor, Gabelstapler, Golfmobil, Autokran. Darüber hinaus kann es sich bei einem Landfahrzeug auch um ein Schienen gebundenes Fahrzeug handeln. Wasserfahrzeug kann beispielsweise sein: ein Schiff oder Boot. Ferner kann ein Luftfahrzeug beispielsweise sein: ein Flugzeug oder Hubschrauber. Unter einem Fahrzeug wird insbesondere auch ein Kraftfahrzeug verstanden.

Unter einer "Blockchain" wird hier und im Folgenden eine geordnete Datenstruktur verstanden, welche eine Mehrzahl von miteinander verketteten Datenblöcken umfasst. Insbesondere wird unter einer Blockchain eine geordnete Datenstruktur verstanden, bei welcher jeder der Blöcke (außer dem ersten Block) einen Prüfwert, beispielsweise einen Hash-Wert, seines Vorgängerblocks umfasst und somit anhand jedes Blocks die Gültigkeit aller seiner Vorgängerblocks geprüft und ggf. bestätigt werden kann. Beispiele einer Blockchain vergleiche https://en.wikipedia.org/wiki/Block_chain_(database) und "Mastering Bitcoin", Chapter 7, The Blockchain, Seite 161 ff. Das Konzept der Blockchain wurde beispielsweise im Jahre 2008 in einem White Paper unter dem Pseudonym Satoshi Nakamoto zu Bitcoin beschrieben ("Bitcoin: Peer-to-Peer Electronic Cash System" (https://bitcoin.org/bitcoin.pdf)). Die darin beschriebene Blockchain besteht aus einer Reihe von Datenblöcken, in denen jeweils ein oder mehrere Einträge bzw. Transaktionen zusammengefasst und mit einer Prüfsumme in Form eines Hashwerts versehen sind. Zusätzliche Blöcke der Blockchain werden durch Blockchain-Server beispielsweise in einem rechenintensiven Prozess erzeugt, der auch als sogenanntes Mining bezeichnet wird. Diese zusätzlich erzeugten Blöcke werden anschließend der Blockchain hinzugefügt und über ein Netzwerk, d.h. dem Blockchain-Netzwerk, an alle Teilnehmer, bzw. Knoten des Netzwerks, verbreitet.

Ausführungsformen können den Vorteil haben, dass die Blockchain durch die Speicherung einer kryptografischeren Prüfsumme, z.B. eines Hashwerts, des vorangehenden Blocks im jeweils nachfolgenden Block ein hohes Maß an Sicherheit gegenüber nachträglichen Manipulationen bietet. Bei einer Blockchain werden die Einträge bzw. Transaktionen eines Blocks beispielsweise durch einen Merkle-Baum paarweise miteinander gehasht und nur der letzte auf diese Weise erhaltene Hashwert des Blocks, der sogenannte Root-Hashwert bzw. Wurzelhashwert, als Prüfsumme beispielsweise in einem Header des entsprechenden Blocks vermerkt. Das Verketten der Blöcke kann dann unter Verwendung dieser Root-Hashwerte überprüft werden. Jeder Block der Blockchain enthält in seinem Header beispielsweise den Hash des gesamten vorherigen Blockheaders. Somit wird die Reihenfolge der Blöcke eindeutig festgelegt und es entsteht eine Kettenstruktur. Durch die so implementierte Verkettung der einzelnen Blöcke miteinander wird erreicht, dass ein nachträgliches Modifizieren vorangegangener Blöcke bzw. einzelner Transaktionen praktisch ausgeschlossen ist, da hierfür die Hashwerte aller nachfolgenden Blöcke in kurzer Zeit ebenfalls neu berechnet und ersetzt werden müssten.

Der erste Block in der Blockchain ist vorgegeben und wird Genesisblock genannt. Nach Ausführungsformen sind die öffentlichen kryptographischen Schlüssel eines oder mehrerer Provider, welche zum Erstellen von Programmodulen berechtigt sind, in dem Genesisblock gespeichert. Der Genesisblock ist aufgrund der zuvor beschriebenen Kettenstruktur, derjenige Block, dessen Einträge das höchste Maß an Sicherheit aufweisen, da zu seiner Änderung die gesamte Blockchain durch eine neue Blockchain ersetzt werden müsste. Mithin kann der Eintrag des öffentlichen kryptographischen Schlüssels in den Genesisblock einen Vertrauensanker mit einem ausreichenden Maß an Sicherheit darstellen, sodass beispielsweise keine zusätzliche PKI-Prüfung notwendig ist, um der Authentizität des öffentlichen kryptographischen Schlüssels zu vertrauen. Dadurch kann die Sicherheit des Systems auch in einem Offline-Modus gewährt werden.

Zudem kann durch eine Anpassung der notwendigen Rechenintensität für die Erstellung jeweils zusätzlicher Blöcke die Sicherheit zusätzlich erhöht werden. Die für die Erstellung zusätzlicher Blöcke notwendige Rechenintensität lässt sich über Anforderungen an den Hashwert des zu erstellenden zusätzlichen Blocks steuern. Der resultierende Hash-Wert ist nicht vorhersagbar, vielmehr handelt es sich um eine zufallsverteilte Zahl. Es lässt sich aber berechnen, wieviel Zeit in Abhängigkeit von der aufgewendeten Rechenleistung im statistischen Mittel zum Auffinden eines gültigen zusätzlichen Blocks notwendig ist. Der Hashwert eines Blocks lässt sich beispielsweise durch Hinzufügen und Variieren eines Nounce variieren. Aufgrund der Kettenstruktur können Daten, die einmal in einer Blockchain gespeichert sind, nicht mehr geändert oder entfernt werden, ohne große Teile der Blockchain zu ersetzen. Eine solche Ersetzung scheidet jedoch als Folge einer ausreichend rechenintensiven Generierung zusätzlicher Blöcke aus. Bekannte Ausführungsformen einer Blockchain, wie etwa im Fall der Kryptowährung Bitcoin, basieren auf einer Anonymität der an den Transaktionen beteiligten Partner. Demgegenüber kann durch oben beschriebene Signatur der in die Transaktionen eingetragenen Datensätze, deren Authentizität belegt und ihr Ursprung nachgewiesen werden. Hierdurch kann die Fälschungssicherheit verbessert werden.

Eine Anforderung an einen gültigen Block kann beispielsweise darin bestehen, dass der Hashwert des Headers des Blocks kleiner gleich einem Grenzwert ist. Die Hashwertberechnung kann beispielsweise mit dem Secure Hash Algorithm (SHA) SHA 256 erfolgen. Der resultierende Hash-Wert ist in diesem Fall eine Zufallszahl zwischen 0 und 2²⁵⁶-1. Die Wahrscheinlichkeit, dass beim Anwenden des Hashalgorithmus einen bestimmten Hash herauskommt, ist somit (maximaler Hash-Wert+1)⁻¹, im Falle des SHA 256-Algorithums also 2⁻²⁵⁶. Die Wahrscheinlichkeit, dass der resultierende Hash-Wert kleiner gleich einem Grenzwert bzw. Zielwert (engl. target) ist, beträgt daher (target)/(max. Hash-Wert). Für einen beispielhaften maximalen Grenzwert von (2¹⁶-1)·2²⁰⁸ beträgt die Wahrscheinlichkeit [(2¹⁶-1)·2²⁰⁸]/ 2²⁵⁶ ≈ 2⁻³². Die Schwierigkeit S eine Hash-Wert zu erhalten, welcher kleiner gleich einem gewählten Grenzwert bzw. target ist, kann in Abhängigkeit eines maximalen Grenzwerts bzw. max. target wie folgt angegeben werden: S = (max. target)/target. Mithin ist die Wahrscheinlichkeit einen Hash-Wert zu erhalten, welcher kleiner gleich dem gewählten Grenzwert ist, für das zuvor gegebene Beispiel: 2⁻³²/S. Als Beispiel sei ein Computersystem mit einer bestimmten Hashrate betrachtet, welches im Durchschnitt alle x·Sek. einen Hash-Wert findet, welcher kleiner gleich dem gewählten Grenzwert ist. Soll das Computersystem anstelle aller x·Sek. im Durchschnitt alle y·Sek. einen Treffer erzielen, so kann die Schwierigkeit entsprechend angepasst werden: S_{y}=(x/y)·S. Entsprechende Anpassungen der Schwierigkeit können auch dazu verwendet werden die Trefferrate bei Veränderungen des Computersystems, z.B. Veränderungen der Rechenleistung durch Erhöhen oder Verringern der Anzahl an Blockchain-Servern, konstant zu halten. Wird die Schwierigkeit so angepasst, dass alle y·Sek. ein Treffer erzielt wird, kann die Hashrate R des Computersystems wie folgt parametrisiert werden: R = (2³²·S)/(y·Sek.).

Werden gültige Blöcke durch ein rechenintensive Verfahren, wie das zuvor Beschriebene erzeugt, so vertrauen die Teilnehmer des Blockchain-Netzwerks der längsten gültigen Blockchain, da hinter dieser die meiste Rechenleistung steht und somit angenommen werden kann, dass diese von der Mehrheit der Teilnehmer als gültig anerkannt wird. Kommt es beispielsweise dazu, dass ein Fork, d.h. eine Verzweigung, in der Blockchain entsteht, setzt sich irgendwann der Fork mit der größeren Kettenlänge durch, da anzunehmen ist, dass hinter diesem die Mehrheit der Teilnehmer steht.

Eine Blockchain kann beispielsweise auch in Form einer privaten Blockchain implementiert werden, wobei nur eine ausgewählte Gruppe von Teilnehmern eine Berechtigung zum Hinzufügen gültiger Blöcke besitzt. Eine entsprechende Berechtigung kann beispielsweise mittels einer Signatur unter Verwendung eines privaten kryptographischen Schlüssels nachgewiesen werden. Der private kryptographische Schlüssel kann zu einem asymmetrischen Schlüsselpaar gehören, zu welchem auch ein öffentlicher kryptographischer Schlüssel gehört, mit dem die Signatur geprüft werden kann. Dem asymmetrischen Schlüsselpaar kann zudem beispielsweise ein Zertifikat zugeordnet sein, welches die Berechtigung zum Erzeugen eines gültigen Blocks der Blockchain belegt. Dieses Zertifikat kann ferner einer PKI zugeordnet sein, welche die Authentizität des Zertifikats belegt. Nach einer weiteren Ausführungsform kann beispielsweise für jeden Teilnehmer aus der ausgewählte Gruppe ein öffentlicher Schlüssel in der Blockchain hinterlegt sein, beispielsweise in einem Genesisblock. Anhand dieser öffentlichen Schlüssel kann geprüft werden, ob Signaturen von Blöcken und damit die entsprechenden Blöcke selbst gültig sind.

Ein Konsens der Teilnehmer über die Gültigkeit eines Blocks bzw. über den oder die von diesem Block umfassten Einträge kann auch auf andere Weise in einer Blockchain implementiert werden. So kann etwa ein Konsens erreicht werden, indem über eine Aufnahme vorgeschlagener Einträge in die Blockchain abgestimmt wird. Beispielsweise führt jeder Teilnehmer eine eindeutige Liste anderer Teilnehmer, welchen er als Gruppe vertraut. Jeder Teilnehmer kann zusätzliche Einträge vorschlagen, die in einen zusätzlichen Block der Blockchain aufgenommen werden sollen. Über die Aufnahme und damit die Anerkennung der Gültigkeit der vorgeschlagenen Einträge wird abgestimmt. So stimmt beispielsweise jeder Teilnehmer nur über diejenigen Vorschläge ab, welche von Teilnehmer seiner Liste stammen. Mit anderen Worten werden für die Entscheidung, ob ein Vorschlag für einen zusätzlichen Eintrag als gültig anerkannt wird, d.h. ob bezüglich der Gültigkeit dieses Eintrages ein Konsens zwischen den Teilnehmern besteht, nur die Stimmen derjenigen Teilnehmer berücksichtig, die von der Liste desjenigen Teilnehmers umfasst sind, der den entsprechenden Vorschlag macht. Damit ein Vorschlag für einen Eintrag als gültig angenommen wird, muss ein bestimmter Minimumanteil an stimmberechtigten Teilnehmern mit Ja stimmen, beispielsweise 80%. Alle vorgeschlagenen Einträge, die dieses Kriterium erfüllen werden in die Blockchain aufgenommen. Eine solche Abstimmung kann mehrere Runden umfassen. Alle anderen Vorschläge, die das zuvor genannte Kriterium nicht erfüllen, werden verworfen oder bei der Abstimmung über den nächsten Block der Blockchain erneut zur Abstimmung gestellt. Die zuvor genannten Listen stellen Untergruppen des Blockchain-Netzwerks dar, denen der Teilnehmer, welcher die jeweilige Liste führt, als Gruppe insgesamt traut, ohne dass dies erfordert, dass er jedem einzelnen Teilnehmer der Liste traut. Ein Beispiel für ein solches Konsensverfahren bietet der Ripple Protokoll Konsens Algorithmus (David Schwartz et al.: "The Ripple Protocol Consensus Algorithm", Ripple Labs Inc., 2014, https://ripple.com/files/ripple_consensus_whitepaper.pdf).

Beispielsweise kann es sich bei der Blockchain um eine private oder öffentliche Blockchain handeln. Beispielsweise handelt es sich um eine Bitcoin-, Litecoin- oder Ethereum-Blockchain.

Ein "Programmmodul" bezeichnet hier ein eigenständiges Programm, welches in einer Blockchain gespeichert ist. Das Programmmodul kann dazu konfiguriert sein das Erstellen von dem Programmmodul zugeordneten Einträgen in der Blockchain zu steuern. Das Programmodul kann in einem Block der Blockchain oder über mehrere Blöcke der Blockchain verteilt gespeichert sein. Jeder Vorrichtung ist beispielsweise ein individuelles Programmmodul zugeordnet. Bei der Blockchain handelt es sich beispielsweise um eine spezielle Vorrichtungsblockchain. Beispielsweise ist die Blockchain einer individuellen Vorrichtung zugeordnet. Beispielsweise umfasst die Blockchain Zustandsdaten einer Mehrzahl von Vorrichtungen, d.h. ist einer Mehrzahl von Vorrichtungen zugeordnet. Bei einem Programmmodul kann es sich beispielsweise um einen "smart contract" handeln, wie er beispielsweise in der Open Source Ethereum Blockchain implementierbar ist.

Unter einem "Programm" bzw. "Programminstruktionen" wird hier ohne Einschränkung jede Art von Computerprogramm verstanden, welches maschinenlesbare Instruktionen zur Steuerung einer Funktionalität eines Computers bzw. eines Computersystems umfasst.

Unter einem "Zertifikat" wird hier ein digitales Zertifikat verstanden, welches auch als Public-Key-Zertifikat bezeichnet wird. Durch solche Zertifikate basierend auf asymmetrischen Schlüsselpaaren wird eine so genannte Public Key Infrastructure (PKI) realisiert. Bei einem solchen Zertifikat handelt es sich um strukturierte Daten, die dazu dienen, einen öffentlichen Schlüssel eines asymmetrischen Kryptosystems einer Identität, wie zum Beispiel einer Person oder einer Vorrichtung, zuzuordnen. Ein Zertifikat kann beispielsweise einen öffentlichen Schlüssel beinhalten und signiert sein. Alternativ sind auch Zertifikate basierend auf zero-knowledge Kryptosystemen möglich. Beispielsweise kann das Zertifikat dem Standard X.509 oder einem anderen Standard entsprechen. Beispielsweise handelt es sich bei dem Zertifikat um ein CV-Zertifikat oder auch Card Verifiable Certificate (CVC). Eine Implementierung von solchen CVCs ist beispielsweise in der ISO/IEC 7816-8 spezifiziert.

Die PKI stellt ein System zum Ausstellen, Verteilen und Prüfen digitaler Zertifikate dar. Ein digitales Zertifikat dient in einem asymmetrischen Kryptosystem dazu die Authentizität eines öffentlichen Schlüssels und/oder seinen zulässigen Anwendungs- und Geltungsbereich zu bestätigen. Das digitale Zertifikat ist selbst durch eine digitale Signatur geschützt, deren Echtheit mit dem öffentlichen Schlüssel des Ausstellers des Zertifikates geprüft werden kann. Um die Authentizität des Ausstellerschlüssels zu prüfen, wird wiederum ein digitales Zertifikat verwendet. Auf diese Weise lässt sich eine Kette von digitalen Zertifikaten aufbauen, die jeweils die Authentizität des öffentlichen Schlüssels bestätigen, mit dem das vorhergehende Zertifikat geprüft werden kann. Eine solche Kette von Zertifikaten bildet einen sogenannten Validierungspfad oder Zertifizierungspfad. Auf die Echtheit des letzten Zertifikats, des sogenannten Wurzelzertifikats, und des durch dieses Zertifikat zertifizierten Schlüssels, müssen sich die Teilnehmer der PKI ohne ein weiteres Zertifikat verlassen können. Das Wurzelzertifikat wird von einer sogenannten Wurzelzertifizierungsinstanz verwaltet, auf deren als gesichert vorausgesetzten Authentizität die Authentizität aller Zertifikate der PKI zurückgeht. Bei der PKI kann es sich beispielsweise um eine hierarchische PKI mit einer zentralen Wurzelzertifizierungsinstanz handeln.

Digitale Zertifikate sind bei der Absicherung elektronischer Kommunikation durch asymmetrische kryptographische Verfahren ein bewährtes Mittel um Berechtigungen nachzuweisen. Zertifikate sind strukturierte Daten, die die Authentizität und/oder weitere Eigenschaften/Berechtigungen des Eigentümers eines öffentlichen Schlüssels (Signaturprüfschlüssel) dokumentieren und durch eine unabhängige, glaubwürdige Instanz (Zertifizierungsdienstanbieter/ZDA), im Allgemeinen die das Zertifikat zuteilende Zertifizierungsstelle, bestätigen. Zertifikate werden in der Regel einem breiten Personenkreis zur Verfügung gestellt um diesem eine Prüfung elektronischer Signaturen auf Authentizität und Gültigkeit zu ermöglichen.

Ein Zertifikat kann einer elektronischen Signatur zugeordnet sein, wenn der zu dem öffentlichen Schlüssel gehörende private Schlüssel zur Generierung der zu prüfenden elektronischen Signatur verwendet wurde. Dadurch, dass ein ZDA ein Zertifikat in Assoziation mit einem öffentlichen Schlüssel der Allgemeinheit zur Verfügung stellt, ermöglicht ein ZDA den Nutzern asymmetrischer Kryptosysteme den öffentlichen Schlüssel einer Identität, beispielsweise einer Person, einer Organisation, einem Computersystem oder einer Vorrichtung, zuzuordnen.

Asymmetrische Schlüsselpaare werden für eine Vielzahl von Kryptosystemen eingesetzt und spielen auch bei der Signatur elektronischer Dokumente eine wichtige Rolle. Ein asymmetrisches Schlüsselpaar besteht aus einem öffentlichen Schlüssel, welcher zur Ver- und/oder Entschlüsselung von Daten verwendet wird und an Dritte, beispielsweise an einen Dienstanbieter, weitergegeben werden darf sowie einem privaten Schlüssel, welcher zur Ver- und/oder Entschlüsselung von Daten verwendet wird und im Regelfall geheim gehalten werden muss. Der öffentliche Schlüssel ermöglicht es jedermann, Daten für den Inhaber des privaten Schlüssels zu verschlüsseln, digitale Signaturen von dessen Dokumenten zu prüfen oder ihn zu authentifizieren. Ein privater Schlüssel ermöglicht es seinem Inhaber, mit dem öffentlichen Schlüssel verschlüsselte Daten zu entschlüsseln oder digitale Signaturen für elektronische Dokumente zu erstellen. Eine mit einem privaten Schlüssel erstellte Signatur kann mit dem zugehörigen öffentlichen Schlüssel verifiziert werden.

Digitale Signaturen werden zum sicheren elektronischen Datenaustausch, beispielsweise im Internet, eingesetzt und ermöglichen die Prüfung von Identitäten und/oder Berechtigungen und der Unverfälschtheit der ausgetauschten Daten. Um dies zu gewährleisten, ist in der Regel eine Public-Key-Infrastruktur notwendig, die die Gültigkeit der verwendeten Schlüssel durch Zertifikate bestätigt.

Die Erstellung einer digitalen Signatur, im Folgenden auch lediglich als "Signatur" bezeichnet, ist ein kryptographisches Verfahren, bei dem zu beliebigen Daten, zum Beispiel Zustandsdaten einer Vorrichtung, ein weiterer Datenwert, welcher als "Signatur" bezeichnet wird, berechnet wird. Die Signatur kann zum Beispiel ein verschlüsselter Hashwert der Zustandsdaten sein, insbesondere ein mit einem privaten Schlüssel eines einem Zertifikat zugeordneten kryptographischen Schlüsselpaares verschlüsselter Hashwert. Ein entsprechendes Verschlüsseln eines Hashwerts wird mithin als Signieren des Hashwerts bezeichnet. Die Besonderheit einer solchen Signatur besteht darin, dass deren Urheberschaft und Zugehörigkeit zu einer bestimmten Person oder Instanz durch jeden Dritten mittels des öffentlichen Schlüssels und des entsprechenden Zertifikats geprüft werden kann.

Unter einer digitalen Signatur wird hier auch ein digitales Siegel verstanden, welches nicht einer natürlichen Person, sondern einer juristischen Person zugeordnet ist. Ein digitales Siegel dient somit nicht der Abgabe einer Willenserklärung einer einzelnen Person, sondern einer Institution als Herkunftsnachweis. Es kann somit den Ursprung und die Unversehrtheit digitaler Daten sicherstellen und nachweisen, dass diese von einer bestimmten juristischen Person stammen.

Unter einem "Speicher" werden hier sowohl flüchtige als auch nicht flüchtige elektronische Speicher bzw. digitale Speichermedien verstanden.

Unter einem "nichtflüchtigen Speicher" wird hier ein elektronischer Speicher zur dauerhaften Speicherung von Daten verstanden. Ein nichtflüchtiger Speicher kann als nichtänderbarere Speicher konfiguriert sein, der auch als Read-Only Memory (ROM) bezeichnet wird, oder als änderbarer Speicher, der auch als Non-Volatile Memory (NVM) bezeichnet wird. Insbesondere kann es sich hierbei um ein EEPROM, beispielsweise ein Flash-EEPROM, kurz als Flash bezeichnet, handeln. Ein nichtflüchtiger Speicher zeichnet sich dadurch aus, dass die darauf gespeicherten Daten auch nach Abschalten der Energieversorgung erhalten bleiben.

Unter einem "flüchtigen elektronischen Speicher" wird hier ein Speicher zur vorübergehenden Speicherung von Daten, welcher dadurch gekennzeichnet ist, dass alle Daten nach dem Abschalten der Energieversorgung verloren gehe. Insbesondere kann es sich hierbei um einen flüchtigen Direktzugriffsspeicher, der auch als Random-Access Memory (RAM) bezeichnet wird, oder einen flüchtigen Arbeitsspeicher des Prozessors handeln.

Unter einem "geschützten Speicherbereich" wird hier ein Bereich eines elektronischen Speichers verstanden, auf den ein Zugriff, das heißt ein Lesezugriff oder ein Schreibzugriff, nur über einen Prozessor der Vorrichtung möglich ist, welche den Speicher mit dem geschützten Speicherbereich umfasst. Nach Ausführungsformen ist der Zugriff von dem mit dem Speicher gekoppelten Prozessor nur dann möglich, wenn eine hierzu erforderliche Bedingung erfüllt ist. Hierbei kann es sich zum Beispiel um eine kryptografische Bedingung, insbesondere eine erfolgreiche Authentisierung und/oder eine erfolgreiche Berechtigungsprüfung, handeln.

Unter einem "Prozessor" wird hier und im Folgenden eine Logikschaltung verstanden, die zur Ausführung von Programminstruktionen dient. Die Logikschaltung kann auf einem oder mehreren diskreten Bauelementen implementiert sein, insbesondere auf einem Chip. Insbesondere wird unter einem "Prozessor" ein Mikroprozessor oder ein Mikroprozessorsystem aus mehreren Prozessorkernen und/oder mehreren Mikroprozessoren verstanden.

Unter einer "Schnittstelle" wird hier eine Schnittstelle verstanden, über die Daten empfangen und gesendet werden können, wobei die Kommunikationsschnittstelle kontaktbehaftet oder kontaktlos konfiguriert sein kann. Bei der Kommunikationsschnittstelle kann es sich um eine interne Schnittstelle oder um eine externe Schnittstelle handeln, welche beispielsweise mittels eines Kabels oder kabellos mit einer zugeordneten Vorrichtung verbunden ist.

Eine Kommunikation kann beispielsweise über ein Netzwerk bzw. ein Kommunikationsnetzwerk erfolgen. Unter einem "Netzwerk" wird hier jedes Übertragungsmedium mit einer Anbindung zur Kommunikation verstanden, insbesondere eine lokale Verbindung oder ein lokales Netzwerk, insbesondere ein Local Area Network (LAN), ein privates Netzwerk, insbesondere ein Intranet, und ein virtuelles privates Netzwerk (Virtual Private Network - VPN). Beispielsweise kann ein Computersystem eine Standardfunkschnittstelle zur Anbindung an ein WLAN aufweisen. Ferner kann es sich um ein öffentliches Netzwerk, wie beispielsweise das Internet handeln. Je nach Ausführungsform kann diese Verbindung auch über ein Mobilfunknetz hergestellt werden.

Nach Ausführungsformen handelt es sich bei dem Kommunikationsnetzwerk um ein Mobilfunknetzwerk und bei der Kommunikationsschnittstelle um eine Mobilfunkschnittstelle zur Kommunikation über das Mobilfunknetzwerk. Eine Kommunikation über ein Mobilfunknetzwerk kann insbesondere im Falle mobiler Vorrichtungen, wie etwa Fahrzeugen, vorteilhaft sein.

Unter einem "Mobilfunknetzwerk" wird hier und im Folgenden ein digitales zellulares Mobilfunknetzwerk verstanden, welches nach einem Mobilfunkstandard wie zum Beispiel GSM, UMTS, LTE, CDMA oder einem anderen Standard aufgebaut sein kann.

Nach Ausführungsformen umfasst die Vorrichtung zumindest einen Sensor zum Erfassen von Zustandsdaten der Vorrichtung. Die Zustandsdaten der Vorrichtung werden durch das Vorrichtungscomputersystem von dem zumindest einen Sensor empfangen. Nach Ausführungsformen umfasst die Vorrichtung eine Mehrzahl von Sensoren zum Erfassen von Zustandsdaten der Vorrichtung. Ausführungsformen können den Vorteil haben, dass die vorrichtungseigene Sensorik genutzt werden kann, um den Zustand der Vorrichtung zu erfassen. Der Zustand der Vorrichtung kann beispielsweise beschrieben werden durch Angaben zu Kenngrößen des aktuellen Leistungsvermögens der Vorrichtung, wie etwa Kilometerstand bei einem Fahrzeug, Verbrauchswerte, Leistungswerte, Fehlermeldungen, Ergebnisse vordefinierter Prüfprotokolle und/oder Kennungen von Komponenten der Vorrichtung.

Kenngrößen des aktuellen Leistungsvermögens eines Fahrzeugs können zum Beispiel Drehzahl, Geschwindigkeit, Kraftstoffverbrauch, Abgaswerte, Getriebegang sein.

Fehlermeldungen können von dem Vorrichtungscomputersystem, z.B. Fahrzeugcomputersystem, unter Verwendung eines Fehlererkennungsprotokolls identifizierte Fehlfunktionen, d.h. Abweichungen durch Sensoren erfasster Messwerte von vordefinierten Werten oder Wertebereichen, angeben. Ein vordefiniertes Prüfprotokoll kann einzelne Komponenten abfragen und auf Basis der erhaltenen oder nicht erhaltenen Antworten eine Liste erstellen, welche nicht oder nicht wie erwartetet funktionierende Komponenten identifiziert.

Beispielsweise fragt das Vorrichtungscomputersystem Kennungen von Komponenten der Vorrichtungselektronik ab, wie etwa Serien-, Typ- und/oder Herstellerkennungen, die in den Komponenten der Vorrichtungselektronik gespeichert sind. Nach Ausführungsformen kann aus den Kennungen der einzelnen Komponenten eine Kennung der Vorrichtung berechnet werden. Diese Kennung ist ein Charakteristikum dieser Vorrichtung, welches die konkrete Zusammenstellung ihrer Komponenten und damit den Zustand der Vorrichtung definiert. Es handelt sich gewissermaßen um einen "Fingerabdruck" der Vorrichtung.

Nach Ausführungsformen sind in die Kennungen der Komponenten der Vorrichtungselektronik jeweils in einem Speicher der jeweiligen Komponente, beispielsweise in einem geschützten Speicherbereich des entsprechenden Speichers, gespeichert und kryptographisch gesichert an das Vorrichtungscomputersystem übertragen werden.

Unter einem "Sensor" wird hier ein Element zum Erfassen von Messdaten verstanden. Messdaten sind Daten, welche physikalische oder chemische Eigenschaften eines Messobjekts, wie beispielsweise Wärmemenge, Temperatur, Feuchtigkeit, Druck, Durchflussmenge, Schallfeldgrößen, Helligkeit, Beschleunigung, pH-Wert, lonenstärke, elektrochemisches Potential, und/oder dessen stoffliche Beschaffenheit qualitativ oder quantitativ wiedergeben. Messdaten werden mittels physikalischer oder chemischer Effekte erfasst und in ein elektronisch weiterverarbeitbares elektrisches Signal umgeformt. Ferner können Messdaten Zustände und/oder Zustandsänderung von elektronischen Geräten durch Außeneinflüsse und/oder in Folge einer Benutzung durch einen Nutzer wiedergeben.

Sensoren zum Erfassen von Zustandsdaten in einem Fahrzeug können beispielsweise umfassen: Kurbelwellensensor, Nockenwellensensor, Luftmassenmesser, Lufttemperatursensor, Kühlwassertemperatursensor, Drosselklappensensor, Klopfsensor, Getriebesensor, Wegstreckensensor, Getriebesensor, Niveausensor, Bremsverschleißsensor, Achslastsensor, Lenkwinkelsensor. Diese Sensoren erfassen und überwachen das Fahrverhalten des Fahrzeugs. Aus Abweichungen von Sollwerten und/oder einem Auftreten von bestimmter Muster lassen sich Fehlfunktionen erkennen und identifizieren. Teils lassen sich auch konkrete Fehlerursachen, wie ausgefallene Komponenten des Fahrzeugs, identifizieren. Sensoren können zudem auch Kennungen elektronischer Komponenten, die in das Fahrzeug eingebaut sind abfragen, um deren Identität zu prüfen.

Nach Ausführungsformen umfassen die Zustandsdaten den Kilometerstand des Fahrzeugs. Ausführungsformen können den Vorteil haben, dass der Kilometerstand eine einfach zu erfassende Kenngröße zur Erfassung des Zustands eines Fahrzeugs darstellt. Insbesondere ist der Kilometerstand bei einem Verkauf eines gebrauchten Fahrzeugs eine maßgebliche Größe zur Bewertung des Fahrzeugs und zur Ermittlung eines Kaufpreises. Insbesondere wird durch die Protokollierung der Kilometerstände des Fahrzeugs mit Zeitstempeln in der Blockchain eine fälschungssichere Zusammenfassung der zeitlichen Entwicklung des Kilometerstands bereitgestellt. Bei einer geeigneten Wahl der Protokollierungsintervalle kann somit sichergestellt werden, dass es zu keinen maßgeblichen Manipulationen gekommen ist. Wird der Kilometerstand derart manipuliert, dass er kleiner als der zuletzt protokollierte Kilometerstand ist, wird die Manipulation bei Prüfung der Blockchaineinträge leicht erkennbar. Ferner lässt sich an der Entwicklung der der Kilometerstände die Nutzungshistorie des Fahrzeugs nachvollziehen. Wurde es regelmäßig bzw. gleichmäßig genutzt oder unregelmäßig genutzt, d.h. gab es längere Ruhephasen und Zeiten sehr intensiver Nutzung, welche auf eine erhöhte Belastung des Fahrzeugs hindeuten können.

Über die Protokollierung der Kilometerstände lässt sich beispielsweise auch ein fälschungssicheres Fahrtenbuch in einfacherer Weise implementieren. Hierfür wird der Kilometerstand zumindest jeweils bei Beendigung einer Fahrt, beispielsweise auf ein Ausschalten der Zündung durch den Fahrzeugführer hin protokolliert. Zusätzlich kann auch der Kilometerstand zu Beginn der Fahrt, z.B. bei Einschalten der Zündung, mitprotokolliert werden. Ferner können der Ausgangs- und/oder Zielort der Fahrt automatisch miterfasst werden. Informationen über den aktuellen Aufenthaltsort werden beispielsweise durch ein Navigationssystem des Fahrzeugs bereitgestellt. Nach Ausführungsformen fordert das Fahrzeug den Fahrer schließlich auf seinen Namen und sowie den Zweck der Fahrt anzugeben. Die Eingabe kann über eine entsprechende Eingabeschnittstelle des Fahrzeugs erfolgen. Beispielsweise wird mittels Spracherkennung erfasst, was der Fahrer mündlich auf die Aufforderung hin erwidert. Nach Ausführungsformen authentifiziert sich der Nutzer gegenüber dem Fahrzeug mit einem ID-Token. Die als Eintrag des Fahrtenbuchs zusammengefassten Angaben werden beispielweise vollständig oder zumindest teilweise verschlüsselt an die Blockchain übertragen und dort eingetragen. Die Verschlüsselung erfolgt beispielsweise mit einem privaten oder öffentlichen kryptographischen Schlüssel eines asymmetrischen Schlüsselpaars, welches dem Fahrtenbuch zugeordnet ist. Somit kann nur wer über den zweiten Schlüssel des asymmetrischen Schlüsselpaars, d.h. den öffentlichen bzw. privaten kryptographischen Schlüssel verfügt, den Inhalt der Fahrtenbucheinträge im Entschlüsseln und im Klartext lesen. Nach Ausführungsformen werden Zeitstempel und Kilometerstände unverschlüsselt gespeichert, während persönliche Daten wie Ausgangs- und/oder Zielort, Namen des Fahrers oder Zweck der Fahrt verschlüsselt werden.

Nach Ausführungsformen umfassen die Zustandsdaten eine Störmeldung der Vorrichtung. Ausführungsformen können den Vorteil haben, dass anhand der Blockchain nachvollzogen werden kann, wann welche Störungen aufgetreten sind. Somit lässt sich aus der Blockchain ohne viel Aufwand ablesen, ob die Vorrichtung in der Vergangenheit störanfällig war, welche Fehler aufgetreten sind und es lassen sich beim Auftreten neuer Fehler mögliche Zusammenhänge mit bereits in der Vergangenheit aufgetretenen Problemen erkennen und somit Fehlerursachen besser identifizieren.

Nach Ausführungsformen umfassen die Zustandsdaten eine Software-ID eines Softwareupdates des Vorrichtungscomputersystems. Ausführungsformen können den Vorteil haben, dass das nachvollzogen werden kann, wann welche Software bzw. Softwareversion auf dem Vorrichtungscomputersystem installiert war. Da in modernen Vorrichtungen, wie etwa Fahrzeugen, die Vorrichtungssoftware weiterreichenden Einfluss auf die Steuerung der technischen Komponenten der Vorrichtung, wie etwa die Motorsteuerung bei einem Fahrzeug, besitzt, kann eine Identifikation der Software wichtige Informationen zum Zustand und das Funktionsverhalten der Vorrichtung liefern.

Nach Ausführungsformen umfassen die Zustandsdaten eine einer Mehrzahl von Elektronikkomponenten der Vorrichtung zugeordnete Kennung. Ausführungsformen können den Vorteil haben, dass die Kennung eine Kombination von Elektronikkomponenten kennzeichnet. Diese Kennung kann beispielsweise aus Serien-, Typ- und/oder Herstellerkennungen, die in den Komponenten der Vorrichtungselektronik gespeichert sind, berechnet werden. Es kann sich bei dieser Kennung somit beispielsweise um eine der individuellen Vorrichtung zugeordnete Kennung handeln, welche ein Charakteristikum der Vorrichtung darstellt, das durch die konkrete Kombination der Elektronikkomponenten definiert ist. Mit anderen Worten kann die Kombination der Elektronikkomponenten eine Art "Fingerabdruck" der Vorrichtung darstellen.

Anhand der Kennung können sich insbesondere Änderung in der Zusammensetzung der Elektronikkomponenten der Vorrichtung erkennen lassen. Beispielsweise umfasst jede der Elektronikkomponenten eine eigene Kennung. Hierbei kann es sich beispielsweise um eine individuelle Kennung handeln. Wird eine Komponente entfernt und/oder ausgetauscht ändert sich die Kombination der Elektronikkomponenten und damit die zugeordnete Kennung. Somit können die Elektronikkomponenten selbst als Sensoren zum Erfassen einer Zusammensetzung von Elektronickomponenten in der Vorrichtung verstanden werden. Nach Ausführungsformen umfassen die Zustandsdaten eine Mehrzahl von Kennungen einzelner Elektronikkomponenten. Nach Ausführungsformen umfassen die Zustandsdaten im Falle einer Änderung einer Kennung, die einer Mehrzahl von Elektronikkomponenten zugeordnet ist, Kennungen einzelner Elektronikkomponenten der Mehrzahl von Elektronickomponenten, welche sich geändert haben.

Nach Ausführungsformen empfängt das Vorrichtungscomputersystem die Zustandsdaten von einem Wartungs- und/oder Reparaturcomputersystem. Die von dem Wartungs- und/oder Reparaturcomputersystem empfangenen Zustandsdaten sind signiert mit einem privaten kryptographischen Schlüssel eines dem Wartungs- und/oder Reparaturcomputersystem zugeordneten asymmetrischen Schlüsselpaars. Das Verfahren umfasst ferner: Prüfen der Signatur der von dem Wartungs- und/oder Reparaturcomputersystem empfangenen Daten unter Verwendung eines öffentlichen kryptographischen Schlüssels des dem Wartungs- und/oder Reparaturcomputersystem zugeordneten asymmetrischen Schlüsselpaars und, im Falle einer gültigen Signatur, Verwenden der von dem Wartungs- und/oder Reparaturcomputersystem empfangenen Daten zum Erstellen des ersten Datensatzes. Ausführungsformen können den Vorteil haben, dass zusätzliche Daten zum Zustand der Vorrichtung von dem Wartungs- und/oder Reparaturcomputersystem bereitgestellt und in die Blockchain eingetragen werden können. Diese zusätzlichen Zustandsdaten können beispielsweise von einer Werkstatt oder einem Wartungs- und/oder Reparaturservice ausgeführte Reparatur- und Wartungsarbeiten betreffen. Beispielsweise wird der Grund einer Reparatur, d.h. der behobene Fehler, sowie die durchgeführten Reparaturmaßnahmen, z.B. ein Ersetzten von Vorrichtungsteilen, angegeben. Nach Ausführungsformen umfassen die Daten Kennungen von ausgebauten sowie von neu eingebauten Vorrichtungsteilen. Zudem können die von dem Wartungs- und/oder Reparaturcomputersystem bereitgestellten Daten Zustände der Vorrichtung beschreiben, welche nicht von vorrichtungseigenen Sensoren erfasst werden, wie etwa eine Beschädigung einer Windschutzscheibe durch Steinschlag oder einen Blechschaden bei einem Fahrzeug.

Zudem können auf diese Weise Daten zu durchgeführten Wartungsarbeiten gemäß einem vordefinierten Serviceplan, auch Wartungsplan genannt, gespeichert werden. Der Serviceplan wird vom Hersteller der Vorrichtung vorgegeben und kann neben Art und Modell der Vorrichtung, etwa einem Fahrzeugmodell, vom Intervall oder der Intensität der Nutzung abhängen. Die Wartung kann dabei insbesondere auf verschiedene Prüfpunkte ausgelegt sein, die auf vermuteten oder erkannten Schwächen der Vorrichtung beruhen. Unter anderem werden dabei beispielsweise die Abnutzung und die Wahrscheinlichkeit technischer Defekte berücksichtigt. Insbesondere kann die Wartung auch ein Softwareupdate umfassen.

Der Serviceplan dient vorwiegend zur Erhaltung der Funktionsfähigkeit und der Betriebssicherheit der Vorrichtung. Zudem kann die Einhaltung der Serviceintervalle durch autorisierte Werkstätten oder autorisierte Wartungs- und/oder Reparaturservices eine Grundvoraussetzung für die Gewährleistung seitens des Herstellers sein. Anhand der Blockchain lässt sich somit ablesen, ob der Serviceplan eingehalten wurde und/oder welche Maßnahmen im Zuge der Wartung von der Werkstatt oder dem Wartungs- und/oder Reparaturservice durchgeführt wurden.

Nach Ausführungsformen umfasst der erste Datensatz zusätzlich eine ID des Wartungs- und/oder Reparaturcomputersystems als Ursprung der Zustandsdaten. Ausführungsformen können den Vorteil haben, dass das sich eindeutig identifizieren lässt, durch wen welche zusätzlichen Daten zur Verfügung gestellt wurden. Beispielsweise ist so ersichtlich, ob Wartungs- und/oder Reparaturarbeiten durch eine autorisierte Instanz, etwa eine Werkstatt oder Wartungs- und/oder Reparaturservice durchgeführt wurden.

Nach Ausführungsformen umfasst der erste Datensatz als ID des Wartungs- und/oder Reparaturcomputersystems die Signatur der von dem Wartungs- und/oder Reparaturcomputersystem empfangen Zustandsdaten. Ausführungsformen können den Vorteil haben, dass die Identität des Wartungs- und/oder Reparaturcomputersystems durch die Signatur an den Datensatz gebunden wird und sich diese mittels eines öffentlichen kryptographischen Schlüssels des Wartungs- und/oder Reparaturcomputersystems, welcher einem zum Erstellen der Signatur verwendeten geheimen kryptographischen Schlüssel zugeordnet ist, auf ihre Authentizität hin prüfen lässt.

Nach Ausführungsformen umfassen die von dem Wartungs- und/oder Reparaturcomputersystem empfangenen Zustandsdaten Daten über ausgeführte Wartungs- und/oder Reparaturmaßnahmen.

Nach Ausführungsformen umfassen die von dem Wartungs- und/oder Reparaturcomputersystem empfangenen Zustandsdaten zumindest eine Vorrichtungsteil-ID eines ausgetauschten Vorrichtungsteils. Ausführungsformen können den Vorteil haben, dass nachvollzogen werden kann, welche Vorrichtungsteile ein Vorrichtung tatsächlich umfasst. Diese Angaben können beispielsweise im Falle von elektronischen Komponenten mit den Kennungen der Komponenten abgeglichen werden, welche das Vorrichtungscomputersystem erfasst und in der Blockchain speichert. So lassen sich effektiv Unstimmigkeiten und mögliche Manipulationen aufdecken.

Nach Ausführungsformen umfasst die Blockchain einen Eintrag mit der Vorrichtungs-ID und dem öffentlichen kryptographischen Schlüssel des der Vorrichtung zugeordneten asymmetrischen Schlüsselpaars. Ausführungsformen können den Vorteil haben, ein leichter Zugriff auf den öffentlichen kryptographischen Schlüssel der Vorrichtung und eine effiziente Überprüfung der Signatur der Datensätze der Vorrichtung ermöglicht wird. Somit lassen sich allein auf Basis der Blockchain die Datensätze der Vorrichtung auf ihre Authentizität hin prüfen.

Nach Ausführungsformen erfolgt das Erstellen des ersten Datensatzes nach Ablauf eines vordefinierten Zeitintervalls. Ausführungsformen können den Vorteil haben, dass Daten in regelmäßigen Intervallen in die Blockchain eingefügt werden.

Nach Ausführungsformen erfolgt das Erstellen des ersten Datensatzes auf den Empfangen der Zustandsdaten, wenn die Zustandsdaten ein vordefiniertes Kriterium erfüllen. Ausführungsformen können den Vorteil haben, dass das Erstellen eines Datensatzes und dessen Einfügen in die Blockchain beispielsweise nutzungs- oder ereignisabhängig erfolgen kann. Ein Datensatz wird beispielsweise auf eine bestimmte Fehlermeldung hin erzeugt und umfasst diese Fehlermeldung ggf. zusammen mit weiteren Sensordaten, aus denen sich der Vorrichtungszustand bei Auftreten der Fehlermeldung ableiten lässt.

Nach Ausführungsformen ist das Kriterium ein Erreichen eines vordefinierten Kilometerstands. Ausführungsformen können den Vorteil haben, dass sich aus den in der Blockchain gespeicherten Daten ablesen lässt, zu welchem Zeitpunkt und in welchen zeitlichen Abständen bestimmte Kilometerstände erreicht wurden. Dies hat den Vorteil, dass die Menge an Blockchaineinträgen im Falle einer nur geringen Nutzung einer Vorrichtung ebenfalls entsprechend begrenzt bleibt, wodurch die zum Speichern der Blockchain benötige Speichergröße begrenzt werden kann.

Nach Ausführungsformen ist das Kriterium ein Erreichen einer vordefinierten Verbrauchs- und/oder Durchflussmenge. Dies kann beispielsweise im Fall eines Sensors in Form eines Verbrauchs- und/oder Durchflusszählers vorteilhaft sein. Beispielsweise kann so ein Verbrauch von Ressourcen, wie etwa Strom, Wasser oder Gas, protokolliert werden. Nach Ausführungsformen ist das Kriterium ein Erreichen einer vordefinierten Produktions-, Erzeugungs-, und/oder Fördermenge.

Nach Ausführungsformen identifiziert das Programmmodul den öffentlichen kryptographischen Schlüssel des dem Wartungs- und/oder Reparaturcomputersystem zugeordneten asymmetrischen Schlüsselpaars. Zudem ist in einem Speicher des Wartungs- und/oder Reparaturcomputersystems, beispielsweise in einem geschützten Speicherbereich des Speichers, der private kryptographische Schlüssel des dem Wartungs- und/oder Reparaturcomputersystem zugeordneten asymmetrischen Schlüsselpaars gespeichert. Ferner umfasst das Wartungs- und/oder Reparaturcomputersystem eine Kommunikationsschnittstelle zur Kommunikation über ein zweites Kommunikationsnetzwerk. Das Verfahren umfasst ferner:
- Erstellen eines zweiten Datensatzes zum Eintragen in die Blockchain durch das Wartungs- und/oder Reparaturcomputersystem, wobei der zweite Datensatz Zustandsdaten der Vorrichtung umfasst und das der Vorrichtung zugeordnete Programmmodul identifiziert,
- Signieren des zweiten Datensatzes durch das Wartungs- und/oder Reparaturcomputersystem mit dem privaten kryptographischen Schlüssel des Wartungs- und/oder Reparaturcomputersystems,
- Senden des signierten zweiten Datensatzes durch das Wartungs- und/oder Reparaturcomputersystem über das zweite Kommunikationsnetzwerk an einen Blockchain-Server des Blockchain-Netzwerks,
- Empfangen des signierten zweiten Datensatzes durch den Blockchain-Server,
- Ausführen der ersten Programminstruktionen des durch den zweiten Datensatz identifizierten Programmmoduls durch den Blockchain-Server, wobei das Ausführen der ersten Programminstruktionen ein Prüfen der Signatur des zweiten Datensatzes unter Verwendung des von dem Programmmodul identifizierten öffentlichen kryptographischen Schlüssels des dem Wartungs- und/oder Reparaturcomputersystem zugeordneten asymmetrischen Schlüsselpaars umfasst und, im Falle einer gültigen Signatur, ein Hinzufügen eines zweiten Eintrags mit dem signierten zweiten Datensatz und einem zweiten Zeitstempel zu einem zusätzlichen Block für die Blockchain.

Ausführungsformen können den Vorteil haben, dass das Wartungs- und/oder Reparaturcomputersystem auch selbstständig Einträge mit Zustandsdaten der Vorrichtung in der Blockchain vornehmen kann. Somit steht neben der Vorrichtung eine weitere unabhängige Datenquelle zur Verfügung. Durch Abgleich der von der Vorrichtung und von dem Wartungs- und/oder Reparaturcomputersystem vorgenommen Einträge in der Blockchain, können Unstimmigkeiten und mögliche Manipulationen erkannt werden.

Nach Ausführungsformen identifiziert das Programmmodul einen öffentlichen kryptographischen Schlüssel eines einem Hersteller der Vorrichtung zugeordneten asymmetrischen Schlüsselpaars. In einem Speicher eines Computersystems des Vorrichtungsherstellers, beispielsweise in einem geschützten Speicherbereich des Speichers, ist ein privater kryptographischer Schlüssel des dem Vorrichtungshersteller zugeordneten asymmetrischen Schlüsselpaars gespeichert. Das Computersystem des Vorrichtungsherstellers umfasst eine Kommunikationsschnittstelle zur Kommunikation über ein drittes Kommunikationsnetzwerk. Ferner umfasst das Verfahren:
- Erstellen eines dritten Datensatzes zum Eintragen in die Blockchain durch das Computersystem des Vorrichtungsherstellers, wobei der dritte Datensatz Zustandsdaten der Vorrichtung umfasst und das der Vorrichtung zugeordnete Programmmodul identifiziert,
- Signieren des dritten Datensatzes durch das Computersystem des Vorrichtungsherstellers mit dem privaten kryptographischen Schlüssel des Vorrichtungsherstellers,
- Senden des signierten dritten Datensatzes durch das Computersystem des Vorrichtungsherstellers über das dritte Kommunikationsnetzwerk an einen Blockchain-Server des Blockchain-Netzwerks,
- Empfangen des signierten dritten Datensatzes durch den Blockchain-Server,
- Ausführen der ersten Programminstruktionen des durch den dritten Datensatz identifizierten Programmmoduls durch den Blockchain-Server, wobei das Ausführen der ersten Programminstruktionen ein Prüfen der Signatur des dritten Datensatzes unter Verwendung des von dem Programmmodul identifizierten öffentlichen kryptographischen Schlüssels des dem Vorrichtungshersteller zugeordneten asymmetrischen Schlüsselpaars umfasst und, im Falle einer gültigen Signatur, ein Hinzufügen eines dritten Eintrags mit dem signierten dritten Datensatz und einem dritten Zeitstempel zu einem zusätzlichen Block für die Blockchain.

Ausführungsformen können den Vorteil haben, dass der Hersteller der Vorrichtung selbstständig Einträge zu der Vorrichtung in der Blockchain vornehmen kann. Da Einträge in der Blockchain aufgrund der Kettenstruktur, bei der jeder Block auf den vorausgehenden Blöcken beruht, nicht gelöst werden können, wird dem Vorrichtungshersteller ermöglicht grundlegende Angaben zu der Vorrichtung bereitzustellen, auf die jederzeit zurückgegriffen werden kann. Insbesondere wird es dem Vorrichtungshersteller ermöglicht die Vorrichtung so zu initialisieren bzw. das Programmmodul zu personalisieren. Hierbei können initiale Zustandsdaten der Vorrichtung in die Blockchain eingetragen werden. Somit steht neben der Vorrichtung eine weitere unabhängige Datenquelle zur Verfügung.

Nach Ausführungsformen umfasst der dritte Datensatz technische Vorrichtungsspezifikationen. Ausführungsformen können den Vorteil haben, dass ein solcher Datensatz Auskunft erteilt über die grundlegenden Eigenschaften der Vorrichtung. Insbesondere kann ein solcher Eintrag nachträglich nicht mehr manipuliert werden. Beispielsweise kann der Datensatz im Falle eines Fahrzeugs eine Fahrgestellnummer, eine Motornummer, Angaben zu Fahrzeugeigenschaften und/oder einen Hash der Zulassungsbescheinigung, d.h. Zulassungsbescheinigung Teil I und/oder II, des Fahrzeugs umfassen. Zudem kann ein solcher Eintrag auch einen initialen Kilometerstand des Fahrzeugs umfassen. Die Angaben zu den Fahrzeugeigenschaften können beispielsweise die Angaben gemäß Zulassungsbescheinigung Teil I und/oder II umfassen, wie etwa Datum der Erstzulassung, Fahrzeugklasse, Art des Aufbaus, Fahrzeug-Identifizierungsnummer, Marke, Typ/ Variante/ Version, Handelsbezeichnungen, Hersteller-Kurzbezeichnung, Bezeichnung der Fahrzeugklasse und des Aufbaus, für die EG-Typgenehmigung maßgebliche Schadstoffklasse, Bezeichnung der nationalen Emissionsklasse, Kraftstoffart oder Energiequelle, Hubraum, Ausnahmen, Anzahl der Achsen, Anzahl der Antriebsachsen, Nennleistung, Nenndrehzahl, Höchstgeschwindigkeit, Länge, Breite, Höhe, Leermasse, Rauminhalt des Tanks, Stützlast, Leistungsgewicht, CO₂-Emission, technisch zulässige Gesamtmasse, Achslasten der einzelnen Achsen, Lautstärke Standgeräusch, Lautstärke Fahrgeräusch, technisch zulässige Anhängelast (gebremst/ungebremst), Anzahl Sitzplätze, Anzahl Stehplätze, Bereifung, Farbe des Fahrzeugs, Nummer der EG-Typgenehmigung und/oder Allgemeine Betriebserlaubnis.

Nach Ausführungsformen identifiziert das Programmmodul einen öffentlichen kryptographischen Schlüssel eines einem Besitzer der Vorrichtung zugeordneten asymmetrischen Schlüsselpaars. In einem Speicher eines Computersystems des Vorrichtungsbesitzers, beispielsweise in einem geschützten Speicherbereich des Speichers, ist ein privater kryptographischer Schlüssel des dem Vorrichtungsbesitzer zugeordneten asymmetrischen Schlüsselpaars gespeichert. Das Computersystem des Vorrichtungsbesitzers umfasst zudem eine Kommunikationsschnittstelle zur Kommunikation über ein viertes Kommunikationsnetzwerk. Das Verfahren umfasst ferner:
- Erstellen eines vierten Datensatzes zum Eintragen in die Blockchain durch das Computersystem des Vorrichtungsbesitzers, wobei der vierte Datensatz Zustandsdaten der Vorrichtung umfasst und das der Vorrichtung zugeordnete Programmmodul identifiziert,
- Signieren des vierten Datensatzes durch das Computersystem des Vorrichtungsbesitzers mit dem privaten kryptographischen Schlüssel des Vorrichtungsbesitzers,
- Senden des signierten vierten Datensatzes durch das Computersystem des Vorrichtungsbesitzers über das vierte Kommunikationsnetzwerk an einen Blockchain-Server des Blockchain-Netzwerks,
- Empfangen des signierten vierten Datensatzes durch den Blockchain-Server,
- Ausführen der ersten Programminstruktionen des durch den vierten Datensatz identifizierten Programmmoduls durch den Blockchain-Server, wobei das Ausführen der ersten Programminstruktionen ein Prüfen der Signatur des vierten Datensatzes unter Verwendung des von dem Programmmodul identifizierten öffentlichen kryptographischen Schlüssels des dem Vorrichtungsbesitzer zugeordneten asymmetrischen Schlüsselpaars umfasst und, im Falle einer gültigen Signatur, ein Hinzufügen eines vierten Eintrags mit dem signierten vierten Datensatz und einem vierten Zeitstempel zu einem zusätzlichen Block für die Blockchain.

Ausführungsformen können den Vorteil haben, dass der Besitzer der Vorrichtung auch selbstständig Einträge mit Zustandsdaten der Vorrichtung in der Blockchain vornehmen kann. Somit steht neben der Vorrichtung eine weitere unabhängige Datenquelle zur Verfügung. Durch Abgleich der von der Vorrichtung und von dem Besitzer vorgenommen Einträge in der Blockchain, können Unstimmigkeiten und mögliche Manipulationen erkannt werden.

Nach Ausführungsformen umfasst der vierte Datensatz einen Indikator eines Diebstahls und/oder einer Stilllegung der Vorrichtung. Ausführungsformen können den Vorteil haben, dass selbst bei einem Abhandenkommen der Vorrichtung, einer Aufgabe der Vorrichtung und/oder einer Funktionsunfähigkeit diese abschließenden Vorrichtungszustände in die Blockchain eingetragen werden können. Ein solcher Eintrag ermöglicht es beispielsweise beim Erwerb einer Vorrichtung, etwa eines Fahrzeugs, ohne großen Aufwand zu prüfen, ob sie als gestohlen vermerkt ist. Nach Ausführungsbeispielen kann ein Indikator eines Diebstahls und/oder einer Stilllegung der Vorrichtung auch in einem Datensatz enthalten sein, welcher von der Vorrichtung selbst oder dem Vorrichtungshersteller erzeugt und in die Blockchain eingebracht wird. Ein Indikator einer Stilllegung der Vorrichtung kann beispielsweise auch in einem Datensatz enthalten sein, welcher von einem Wartungs- und/oder Reparaturcomputersystem erzeugt und in die Blockchain eingebracht wird.

Nach Ausführungsformen ist in einem Speicher eines Computersystems eines Providers des Programmmoduls, beispielsweise in einem geschützten Speicherbereich des Speichers, ein privater kryptographischer Schlüssel einer ersten Adresse gespeichert, welche dem Provider des Programmmoduls zugeordnet ist. Das Computersystem des Providers umfasst eine Kommunikationsschnittstelle zur Kommunikation über ein fünftes Kommunikationsnetzwerk. Zudem ist in dem Speicher des Computersystems des Vorrichtungsherstellers, beispielsweise in dem geschützten Speicherbereich des Speichers, ein privater kryptographischer Schlüssel einer zweiten Adresse gespeichert ist, welche dem Vorrichtungshersteller zugeordnet ist. Das Verfahren umfasst ferner:
- Erstellen einer ersten Transaktionsanweisung zur Transaktion des Programmmoduls von der dem Provider des Programmmoduls zugeordneten ersten Adresse an die dem Vorrichtungshersteller zugeordneten zweite Adresse durch das Computersystem des Providers,
- Signieren der ersten Transaktionsanweisung durch das Computersystem des Providers mit dem privaten kryptographischen Schlüssel der ersten Adresse,
- Senden der signierten ersten Transaktionsanweisung durch das Computersystem des Providers über das fünfte Kommunikationsnetzwerk an einen Blockchain-Server des Blockchain-Netzwerks,
- Empfangen der signierten ersten Transaktionsanweisung durch den Blockchain-Server,
- Prüfen durch den Blockchain-Server, ob die erste Transaktionsanweisung mit dem der ersten Adresse zugeordneten privaten kryptographischen Schlüssel signiert ist,
- im Falle einer gültigen Signatur, Hinzufügen der ersten Transaktionsanweisung zu einem zusätzlichen Block für die Blockchain.

Ausführungsformen können den Vorteil haben, dass das Programmmodul von einem Provider erstellt und in die Blockchain eingebracht werden. Das Programmmodul kann beispielsweise zum Ausführen der zuvor beschriebenen Ausführungsformen des Verfahrens konfiguriert sein. Insbesondere kann das Programmmodul zum Erzeugen zusätzlicher Einträge in die Blockchain und zum Auffinden alter, beispielsweise durch das Programmmodul erzeugten Blockchaineinträgen konfiguriert sein.

Das so erzeugte Programmmodul kann derart konfiguriert sein, dass eine bestimmte Funktionalität nur ausgeführt werden kann, wenn zu deren Bestätigung eine Signatur mit einem privaten kryptographischen Schlüssel bereitgestellt wird, welcher einer Instanz zugeordnet ist, die eine Berechtigung zum Ausführen dieser Funktionalität besitzt. Bei einem solchen privaten kryptographischen Schlüssel kann es sich beispielsweise um einen privaten kryptographischen Schlüssel einer in der Blockchain gespeichert Adresse des Programmmoduls handeln. Mit anderen Worten kann dies beispielsweise ein privater kryptographischer Schlüssel einer Adresse sein, welche durch einen dem privaten kryptographischen Schlüssel zugeordneten öffentlichen kryptographischen Schlüssel definiert ist und für die die Blockchain einen Eintrag umfasst, welcher festhält, dass das Programmmodul an diese Adresse übertragen bzw. diesem öffentlichen kryptographischen Schlüssel zugeordnet wurde. Nur wer im Besitz des entsprechenden privaten kryptographischen Schlüssels ist, kann bestimmte Funktionen ausführen und besitzt zugleich die Verfügungshoheit über das Programmmodul. Ein solcher privater kryptographischer Schlüssel kann als Generalschlüssel oder Masterkey dienen.

Ferner kann die Blockchain dem Programmmodul zugeordnete Einträge umfassen, welche einen öffentlichen kryptographischen Schlüssel umfassen und einem dem öffentlichen kryptographischen Schlüssel zugeordneten asymmetrischen Schlüsselpaar die Berechtigung zum Ausführen einer oder mehrerer Funktionalitäten des Programmmoduls zuweisen. Die Einträge können beispielsweise unter Verwendung eines dem Provider des Programmmoduls zugeordneten privaten kryptographischen Schlüssel signiert sein. Nach Ausführungsformen können die Einträge mit einem privaten kryptographischen Schlüssel eines asymmetrischen Schlüsselpaars signiert sein, welchem die Berechtigung hierzu zugewiesen wurde. Somit können Berechtigungsketten implementiert werden, welche auf eine Signatur des Providers des Programmmoduls zurückgeführt werden können.

Die Verfügungshoheit über das Programmmodul kann von einem privaten kryptographischen Schlüssel an einen anderen übertragen werden, indem das Programmmodul von einer Adresse bzw. einem ersten öffentlichen kryptographischen Schlüssel, der bzw. dem ein erster privaten kryptographischen Schlüssel zugeordnet ist, an eine andere Adresse bzw. einen zweiten öffentlichen kryptographischen Schlüssel, der bzw. dem ein zweiter privaten kryptographischen Schlüssel zugeordnet ist, übertragen wird. Eine solche Transaktion wird durch einen entsprechenden Eintrag in der Blockchain definiert.

Durch die Transaktion des Programmmoduls von einer dem Provider des Programmmoduls zugeordneten Adresse an eine dem Vorrichtungshersteller zugeordneten Adresse geht die Verfügungsgewalt über das Programmmodul von dem Provider des Programmmoduls an den Vorrichtungshersteller über. Beispielsweise wird der Vorrichtungshersteller durch die Transaktion berechtigt unter Verwendung des der zweiten Adresse zugeordneten privaten kryptographischen Schlüssels das Programmodul für eine bestimmte Vorrichtung zu personalisieren, d.h. das Programmodul einer bestimmten Vorrichtung zuzuordnen. "Personalisierung" wird hier als Zuordnung zu einer individuellen Vorrichtung verstanden. Eine Personalisierung kann unter Verwendung von Attributen implementiert werden, welche die entsprechende Vorrichtung identifizieren. Beispielsweise kennzeichnen diese Attribute einzeln für sich genommen oder in Kombination miteinander die Vorrichtung eindeutig.

Der Besitzer des Masterkey ist beispielsweise in der Lage Funktionalitäten des Programmmoduls für andere Teilnehmer freizuschalten. So kann etwa die Funktion Datensätze mit Zustandsdaten der Vorrichtung gültig einzutragen unter Verwendung des Masterkeys freigeschaltet werden, wobei ein mit dem Masterkey signierter Eintrag in der Blockchain erzeugt wird, welcher einen öffentlichen kryptographischen Schlüssel umfasst. Durch einen solchen Eintrag wird der entsprechende öffentliche kryptographische Schlüssel identifiziert. Hierbei kann anhand der Blockchain jederzeit nachgeprüft werden, dass der zur Signatur des entsprechenden Eintrags verwendete Masterkey einer Adresse bzw. einem öffentlichen kryptographischen Schlüssel zugeordnet ist, welcher dem Programmmodul zum Zeitpunkt der Aufnahme des Eintrags in die Blockchain entspricht.

Das Erzeugen und Einbringen des Programmmoduls in die Blockchain umfasst beispielsweise:
- Erstellen des Programmmoduls durch das Computersystem des Providers,
- Erstellen einer Eintragungsaufforderung zur Eintragung des Programmmoduls mit einer dem Provider zugeordnete Initialadresse durch das Computersystem des Providers, wobei die Eintragungsaufforderung das Programmmodul umfasst und der Initialadresse ein privater kryptographischer Schlüssel zugeordnet ist,
- Signieren der Eintragungsaufforderung durch das Computersystem des Providers mit dem privaten kryptographischen Schlüssel der Initialadresse,
- Senden der signierten Eintragungsaufforderung durch das Computersystem des Providers über das fünfte Kommunikationsnetzwerk an einen Blockchain-Server des Blockchain-Netzwerks,
- Empfangen der signierten Eintragungsaufforderung durch den Blockchain-Server,
- Prüfen durch den Blockchain-Server, ob die Eintragungsaufforderung mit dem der Initialadresse zugeordneten privaten kryptographischen Schlüssel signiert ist,
- im Falle einer gültigen Signatur, Hinzufügen des Programmmoduls zu einem zusätzlichen Block für die Blockchain.

Nach Ausführungsformen wird zudem ein dem asymmetrischen Schlüsselpaar der Initialadresse zugeordnetes Zertifikat in die Blockchain eingetragen. Beispielsweise wird das Zertifikat zusammen mit dem Programmmodul in die Blockchain eingetragen. Bei dem Zertifikat kann es sich beispielsweise um ein Zertifikat einer PKI, beispielsweise einer hierarchischen PKI mit einer zentralen Wurzelzertifizierungsinstanz, handeln. Ausführungsformen können den Vorteil haben, dass durch das Zertifikat ein Vertrauensanker geschaffen wird, durch welchen sichergestellt werden kann, dass es sich bei dem Programmmodul um einen authentischen Eintrag handelt, welcher zu einer offiziell anerkannten Ausgangsinstanz in Form des Providers des Programmmoduls zurückverfolgt werden kann. Von diesem Vertrauensanker kann das Vertrauen in alle nachfolgenden Einträge in der Blockchain zu dieser Vorrichtung abgeleitet werden. Beispielsweise müssen die für die Authentifizierung der nachfolgenden Einträge verwendeten kryptographischen Schlüssel zunächst durch den zertifizierten privaten kryptographischen Schlüssel der Initialadresse direkt oder indirekt über eine Signatur- bzw. Zertifikatskette bestätigt werden.

Nach Ausführungsformen kann das Programmmodul über eine Mehrzahl von Blöcken der Blockchain verteilt eingetragen werden.

Nach Ausführungsformen verbleibt die Verfügungsgewalt über das Programmmodul bei dem Vorrichtungshersteller.

Nach Ausführungsformen ist in dem Speicher des Computersystems des Vorrichtungsbesitzers, beispielsweise in dem geschützten Speicherbereich des Speichers, ein privater kryptographischer Schlüssel einer dritten Adresse gespeichert, welche dem Vorrichtungsbesitzer zugeordnet ist und das Verfahren umfasst:
- Erstellen einer zweiten Transaktionsanweisung zur Transaktion des Programmmoduls von der dem Vorrichtungshersteller zugeordneten zweiten Adresse an die dem Vorrichtungsbesitzer zugeordnete dritte Adresse durch das Computersystem des Vorrichtungsherstellers,
- Signieren der zweiten Transaktionsanweisung durch das Computersystem des Vorrichtungsherstellers mit dem privaten kryptographischen Schlüssel der zweiten Adresse,
- Senden der signierten zweiten Transaktionsanweisung durch das Computersystem des Vorrichtungsherstellers über das dritte Kommunikationsnetzwerk an einen Blockchain-Server des Blockchain-Netzwerks,
- Empfangen der zweiten Transaktionsanweisung durch den Blockchain-Server,
- Prüfen durch den Blockchain-Server, ob die zweite Transaktionsanweisung mit dem der zweiten Adresse zugeordneten privaten kryptographischen Schlüssel signiert ist,
- im Falle einer gültigen Signatur, Hinzufügen der zweiten Transaktionsanweisung zu einem zusätzlichen Block für die Blockchain.

Ausführungsformen können den Vorteil haben, dass durch die Transaktion des Programmmoduls von der dem Vorrichtungshersteller zugeordneten Adresse an die dem Vorrichtungsbesitzer zugeordnete Adresse die Verfügungsgewalt über das Programmodul an den Vorrichtungsbesitzer übergeht. Somit wird die Verfügungsgewalt über an den Besitz der Vorrichtung gekoppelt. Bei einem Verkauf der Vorrichtung kann beispielsweise eine weitere Transaktion an den neuen Besitzer der Vorrichtung erfolgen.

Nach Ausführungsformen ist in einem Speicher eines Computersystems eines neuen Vorrichtungsbesitzers, beispielsweise in einem geschützten Speicherbereich des Speichers, ein privater kryptographischer Schlüssel einer vierten Adresse gespeichert, welche dem neuen Vorrichtungsbesitzer zugeordnet ist und das Verfahren umfasst ferner:
- Erstellen einer dritten Transaktionsanweisung zur Transaktion des Programmmoduls von der dem bisherigen Vorrichtungsbesitzer zugeordneten dritten Adresse an die dem neuen Vorrichtungsbesitzer zugeordnete vierte Adresse durch das Computersystem des bisherigen Vorrichtungsbesitzers,
- Signieren der dritten Transaktionsanweisung durch das Computersystem des bisherigen Vorrichtungsbesitzers mit dem privaten kryptographischen Schlüssel der dritten Adresse,
- Senden der signierten dritten Transaktionsanweisung durch das Computersystem des bisherigen Vorrichtungsbesitzers über das dritte Kommunikationsnetzwerk an einen Blockchain-Server des Blockchain-Netzwerks,
- Empfangen der dritten Transaktionsanweisung durch den Blockchain-Server,
- Prüfen durch den Blockchain-Server, ob die dritte Transaktionsanweisung mit dem der dritten Adresse zugeordneten privaten kryptographischen Schlüssel signiert ist,
- im Falle einer gültigen Signatur, Hinzufügen der dritten Transaktionsanweisung zu einem zusätzlichen Block für die Blockchain.

Nach Ausführungsformen umfasst das Programmmodul zweite Programminstruktionen. Durch Ausführen der zweiten Programminstruktionen wird ein dem Programmmodul zugeordneter Eintrag in der Blockchain erzeugt, welcher eine Freigabe zur Zuordnung des Programmmoduls zu der Vorrichtung umfasst. Das Programmmodul umfasst ferner dritte Programminstruktionen, durch deren Ausführen ein dem Programmmodul zugeordneter Eintrag in der Blockchain erzeugt wird, welcher das Programmmodul der Vorrichtung zuordnet. Dabei umfasst das Verfahren:
- durch einen Blockchain-Server des Blockchain-Netzwerks Empfangen einer ersten Aufforderung zum Freischalten einer Berechtigung zum Zuordnen des Programmmoduls zu der Vorrichtung durch den Vorrichtungshersteller, wobei die erste Aufforderung den öffentlichen kryptographischen Schlüssel des Vorrichtungsherstellers umfasst, das der Vorrichtung zuzuordnende Programmmodul identifiziert und mit dem privaten kryptographischen Schlüssel des Providers des Programmmoduls signiert ist,
- Ausführen der zweiten Programminstruktionen des durch die erste Aufforderung identifizierten Programmmoduls durch den Blockchain-Server, wobei das Ausführen der zweiten Programminstruktionen ein Prüfen der Signatur der ersten Aufforderung unter Verwendung des von dem Programmmodul identifizierten öffentlichen kryptographischen Schlüssels des asymmetrischen Schlüsselpaars umfasst, welches dem Provider zugeordnet ist, und, im Falle einer gültigen Signatur, ein Hinzufügen eines fünften Eintrags mit dem öffentlichen kryptographischen Schlüssel des Vorrichtungsherstellers, einer Zuordnungsfreigabe und einem fünften Zeitstempel zu dem zusätzlichen Block für die Blockchain,
- Empfangen einer zweiten Aufforderung des Vorrichtungsherstellers zum Zuordnen des Programmmoduls zum der Vorrichtung durch den Blockchain-Server, wobei die zweite Aufforderung das der Vorrichtung zuzuordnende Programmmodul identifiziert und mit dem privaten kryptographischen Schlüssel des Vorrichtungsherstellers signiert ist,
- Ausführen der dritten Programminstruktionen des durch den Datensatz identifizierten Programmmoduls durch den Blockchain-Server, wobei das Ausführen der dritten Programminstruktionen ein Prüfen der Signatur der zweiten Aufforderung unter Verwendung des in dem fünften Eintrag gespeicherten öffentlichen kryptographischen Schlüssels des asymmetrischen Schlüsselpaars umfasst, welches dem Vorrichtungshersteller zugeordnet ist, und, im Falle einer gültigen Signatur, ein Hinzufügen eines sechsten Eintrags mit dem öffentlichen kryptographischen Schlüssel der Vorrichtung, einer Zuordnung des Programmmoduls zu der Vorrichtung und einem sechsten Zeitstempel zu einem zusätzlichen Block für die Blockchain.

Ausführungsformen können den Vorteil haben, dass das Programmmodul von dem Provider erstellt und in die Blockchain eingefügt wird. Das so erstellte Programmmodul ist noch nicht personalisiert, d.h. es ist noch keiner bestimmten Vorrichtung zugeordnet. Dieses nicht-personalisiert Programmmodul wird durch den Vorrichtungshersteller personalisiert, d.h. einer Vorrichtung zugeordnet, indem eine Kennung der Vorrichtung in einem dem Programmmodul zugeordneten Block der Blockchain gespeichert wird. Bei der Kennung kann es sich beispielsweise um eine Identifikationsnummer der Vorrichtung oder einen der Vorrichtung zugeordneten öffentlichen kryptographischen Schlüssel handeln.

Beispielsweise fragt der Vorrichtungshersteller, wenn er eine neue Vorrichtung herstellt bzw. hergestellt hat, bei dem Provider ein zusätzliches Programmodul für die neue Vorrichtung an. Zudem übermittelt der Vorrichtungshersteller dem Provider seinen öffentlichen kryptographischen Schlüssel. Dieser öffentlichen kryptographischen Schlüssel wird von dem Provider freigeschaltet, so dass der Vorrichtungshersteller das Programmmodul für die neue Vorrichtung unter Verwendung eines dem öffentlichen kryptographischen Schlüssel des Vorrichtungsherstellers zugeordneten privaten kryptographischen Schlüssel des Vorrichtungsherstellers personalisieren kann.

Nach Ausführungsformen umfasst das Programmmodul vierte Programminstruktionen. Durch Ausführen der vierten Programminstruktionen wird ein dem Programmmodul zugeordneter Eintrag in der Blockchain erzeugt, welcher eine Freigabe zur Zuordnung des Programmmoduls zu der Vorrichtung umfasst. Das Zuordnen umfasst:
- durch einen Blockchain-Server des Blockchain-Netzwerks Empfangen einer dritten Aufforderung zum Freischalten einer Berechtigung zum Zuordnen des Programmmoduls zu der Vorrichtung durch den Vorrichtungshersteller, wobei die dritte Aufforderung ein Passwort und den öffentlichen kryptographischen Schlüssel des Vorrichtungsherstellers umfasst und das der Vorrichtung zuzuordnende Programmmodul identifiziert,
- Ausführen der vierten Programminstruktionen des durch die dritte Aufforderung identifizierten Programmmoduls durch den Blockchain-Server, wobei das Ausführen der vierten Programminstruktionen ein Prüfen des Passworts unter Verwendung eines in der Blockchain gespeicherten verschlüsselten Referenzwerts und, im Falle eines gültigen Referenzwerts, ein Hinzufügen eines siebten Eintrags mit dem öffentlichen kryptographischen Schlüssel des Vorrichtungsherstellers, einer Zuordnungsfreigabe und einem siebten Zeitstempel zu einem zusätzlichen Block für die Blockchain,
- Empfangen einer zweiten Aufforderung des Vorrichtungsherstellers zum Zuordnen des Programmmoduls zum der Vorrichtung durch den Blockchain-Server, wobei die zweite Aufforderung das der Vorrichtung zuzuordnende Programmmodul identifiziert und mit dem privaten kryptographischen Schlüssel des Vorrichtungsherstellers signiert ist,
- Ausführen der dritten Programminstruktionen des durch den Datensatz identifizierten Programmmoduls durch den Blockchain-Server, wobei das Ausführen der dritten Programminstruktionen ein Prüfen der Signatur der zweiten Aufforderung unter Verwendung des in dem fünften Eintrag gespeicherten öffentlichen kryptographischen Schlüssels des asymmetrischen Schlüsselpaars umfasst, welches dem Vorrichtungshersteller zugeordnet ist, und, im Falle einer gültigen Signatur, ein Hinzufügen eines sechsten Eintrags mit dem öffentlichen kryptographischen Schlüssel der Vorrichtung, einer Zuordnung des Programmmoduls zu der Vorrichtung und einem sechsten Zeitstempel zu einem zusätzlichen Block für die Blockchain.

Ausführungsformen können den Vorteil haben, dass dem Vorrichtungshersteller auf Anfrage ein Passwort von dem Provider des Programmmoduls übermittelt wird, mit welchem der Vorrichtungshersteller die Berechtigung zum Zuordnen des Programmmoduls zu einer Vorrichtung, d.h. ein Registrieren der Vorrichtung, für sich freischalten kann.

Bei dem Passwort kann es sich beispielsweise um eine "One-Time-Password" oder "OTP" handeln. Unter einem OTP wird hier ein Einmal-Passwort oder ein Einmal-Kennwort verstanden, welches nur für eine einmalige Verwendung gültig sein soll. Beispielsweis kann es sich bei einem solchen Einmal-Passwort um eine TAN handeln.

Nach Ausführungsformen sind einer oder mehrerer der zuvor genannten privaten kryptographischen Schlüssel in dem jeweiligen Speicher jeweils in einem geschützten Speicherbereich gespeichert.

Nach Ausführungsformen umfasst das Verfahren ferner eine Prüfung der in der Blockchain gespeicherten Zustandsdaten. Nach Ausführungsformen werden die Zustandsdaten auf Konsistenz geprüft. Im Falle von Kilometerständen eines Fahrzeugs dürfen die in der Blockchain protokollierten Werte beispielsweise niemals abnehmen. Nach Ausführungsformen wird geprüft, ob sich die Zustandsdaten ändern. Nach Ausführungsformen wird geprüft, ob die Zustandsdaten oder Änderungen der Zustandsdaten einen vordefinierten Schwellwert überschreiten. So können große Änderungen der Zustandsdaten, wie etwa eines Verbrauchs, auf ein mögliches Problem der Vorrichtung hinweisen.

Ausführungsformen umfassen ferner ein System, welches eine Vorrichtung mit einem Vorrichtungscomputersystem und ein Blockchain-Netzwerk mit zumindest einem Blockchain-Server umfasst. Das Vorrichtungscomputersystem umfasst einen Speicher. Ferner umfasst das Vorrichtungscomputersystem eine Kommunikationsschnittstelle zur Kommunikation über ein erstes Kommunikationsnetzwerk. Der zumindest eine Blockchain-Server ist dazu konfiguriert, ein in der Blockchain gespeichertes Programmmodul auszuführen und zusätzliche Blöcke für die Blockchain zu erstellen. Das System ist zum Ausführen eines Verfahrens nach einer der zuvor beschriebenen Ausführungsformen konfiguriert.

Nach Ausführungsformen umfasst das System ferner ein Wartungs- und/oder Reparaturcomputersystem. Das Wartungs- und/oder Reparaturcomputersystem umfasst einen Speicher und eine Kommunikationsschnittstelle zur Kommunikation über ein zweites Kommunikationsnetzwerk. Das System ist zum Ausführen eines Verfahrens nach einer der zuvor beschriebenen Ausführungsformen konfiguriert.

Nach Ausführungsformen umfasst das System ferner ein Computersystem eines Herstellers der Vorrichtung. Das Computersystem des Vorrichtungsherstellers einen Speicher und eine Kommunikationsschnittstelle zur Kommunikation über ein drittes Kommunikationsnetzwerk. Das System ist zum Ausführen eines Verfahrens nach einer der zuvor beschriebenen Ausführungsformen konfiguriert.

Nach Ausführungsformen umfasst das System ferner ein Computersystem eines Besitzers der Vorrichtung. Das Computersystem des Vorrichtungsbesitzers umfasst einen Speicher und eine Kommunikationsschnittstelle zur Kommunikation über ein viertes Kommunikationsnetzwerk. Das System ist zum Ausführen eines Verfahrens nach einer der zuvor beschriebenen Ausführungsformen konfiguriert.

Nach Ausführungsformen umfasst das System ferner ein Computersystem eines Providers des Programmmoduls. Das Computersystem eines Providers des Programmmoduls umfasst einen Speicher und eine Kommunikationsschnittstelle zur Kommunikation über ein fünftes Kommunikationsnetzwerk. Das System ist zum Ausführen eines Verfahrens nach einer der zuvor beschriebenen Ausführungsformen konfiguriert.

Die Verwendung von Ordinalzahlen wie erstes, zweites, drittes etc. dient hier, soweit sich aus dem konkreten Zusammenhang nicht eindeutig etwas anderes ergibt, allein der Unterscheidung voneinander verschiedener Elemente und soll keine bestimmte Reihenfolge implizieren.

Bei den zuvor genannten Kommunikationsnetzwerken kann es sich nach Ausführungsformen bei allen oder einem Teil davon um ein und dasselbe oder verschiedene Kommunikationsnetzwerke handeln.

Nach Ausführungsformen werden alle oder ein Teil der zuvor genannten Einträge, d.h. der ersten bis siebten Einträge, zu demselben zusätzlichen Block oder verschiedenen zusätzlichen Blöcken für die Blockchain hinzugefügt.

Im Weiteren werden Ausführungsformen der Erfindung mit Bezugnahme auf die Zeichnungen näher erläutert. Es zeigen:
- Figuren 1: Blockdiagramme einer ersten Ausführungsform eines exemplarischen Systems zum Protokollieren von Zustandsdaten einer Vorrichtung in einer Blockchain,
- Figuren 2: Blockdiagramme einer zweiten Ausführungsform eines exemplarischen Systems zum Protokollieren von Zustandsdaten einer Vorrichtung in einer Blockchain,
- Figur 3: ein Blockdiagramm einer Ausführungsform eines exemplarischen Systems zum Erfassen von Zustandsdaten einer Vorrichtung,
- Figur 4: ein Flussdiagramm einer ersten Ausführungsform eines exemplarischen Verfahrens zum Protokollieren von Zustandsdaten einer Vorrichtung in einer Blockchain,
- Figur 5: ein Flussdiagramm einer zweiten Ausführungsform eines exemplarischen Verfahrens zum Protokollieren von Zustandsdaten einer Vorrichtung in einer Blockchain, und
- Figur 6: ein Flussdiagramm einer dritten Ausführungsform eines exemplarischen Verfahrens zum Protokollieren von Zustandsdaten einer Vorrichtung in einer Blockchain.

Elemente der nachfolgenden Ausführungsformen, die einander entsprechen, werden mit denselben Bezugszeichen gekennzeichnet.

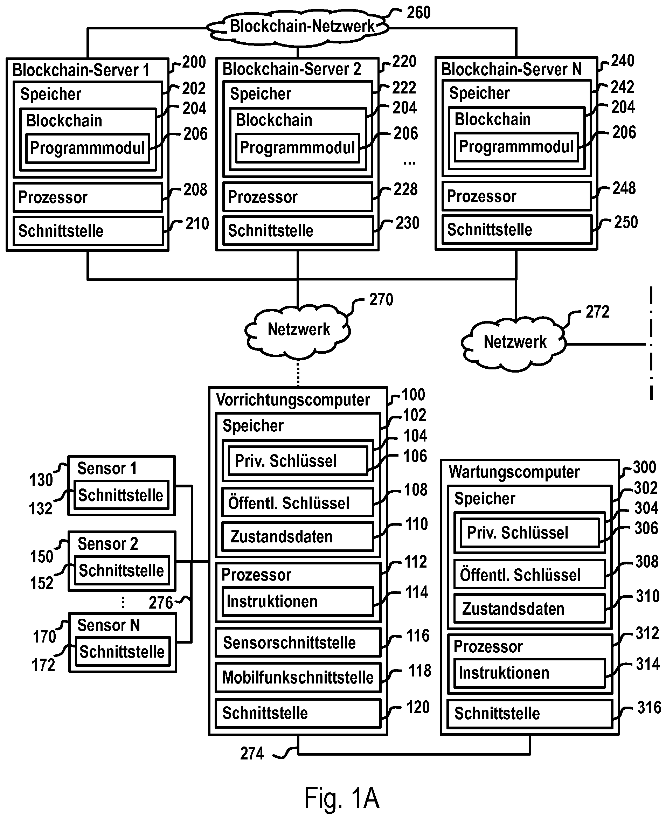

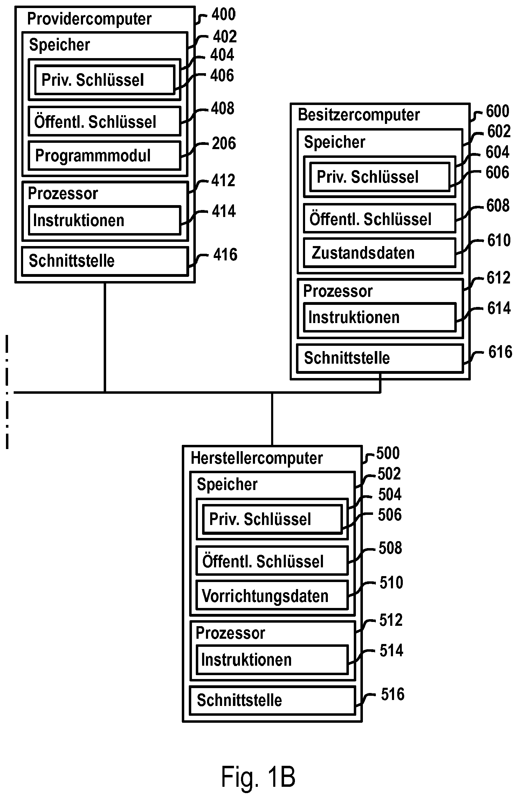

Figuren 1A und 1B zeigen eine erste Ausführungsform eines exemplarischen Systems zum Protokollieren von Zustandsdaten 110, 310, 510, 610 einer Vorrichtung in einer Blockchain 204. Bei der Vorrichtung handelt es sich beispielsweise um ein Fahrzeug, wie etwa ein Kraftfahrzeug. Die Vorrichtung umfasst ein Vorrichtungscomputersystem 100. Das Vorrichtungscomputersystem 100 weist einen Speicher 102 auf, in welchem ein öffentlicher kryptographischer Schlüssel 108 eines der Vorrichtung zugeordneten asymmetrischen Schlüsselpaars gespeichert ist. Ferner sind in dem Speicher 102 Zustandsdaten 110 der Vorrichtung gespeichert, welche das Vorrichtungscomputersystem 100 beispielsweise von vorrichtungseigenen Sensoren 130, 150, 170 oder einem Wartungs- und/oder Reparaturcomputersystem 300 empfangen hat. Diese Zustandsdaten können im Falle eines Fahrzeugs beispielsweise den Kilometerstand des Fahrzeugs umfassen. Ferner umfasst der Speicher 102 einen geschützten Speicherbereich 104, auf welchen ein Zugriff nur über einen Prozessor 112 des Vorrichtungscomputersystems 100 möglich ist und in dem ein privater kryptographischer Schlüssel 106 des der Vorrichtung zugeordneten asymmetrischen Schlüsselpaars gespeichert ist. Der privater kryptographischer Schlüssel 106 kann dazu verwendet werden, in die Blockchain einzutragende Datensätze mit Zustandsdaten der Vorrichtung zu signieren. Der Prozessor 112 ist dazu konfiguriert Programminstruktionen 114 auszuführen, durch deren Ausführung der Prozessor 112 das Vorrichtungscomputersystem 100 so steuert, dass ein Datensatz mit den Zustandsdaten 110 der Vorrichtung erzeugt und in der Blockchain 204 gespeichert wird. Schließlich kann der Prozessor 112 Programminstruktionen 114 ausführen, welche ein kryptographisches Protokoll implementieren. Mittels des kryptographischen Protokolls kann eine Datenübertragung zwischen dem Vorrichtungscomputersystem 100 und dem Wartungs- und/oder Reparaturcomputersystem 300, den Sensoren 130, 150, 170 und/oder den Blockchain-Servern 200, 220, 240 kryptographisch gesichert werden, etwa über eine Ende-zu-Ende-Verschlüsselung. Ferner umfasst das Vorrichtungscomputersystem 100 eine Kommunikationsschnittstelle 118, beispielsweise eine Mobilfunkschnittstelle, zur Kommunikation über ein Kommunikationsnetzwerk 270, beispielsweise ein Mobilfunknetzwerk. Über das Kommunikationsnetzwerk 270 kann das Vorrichtungscomputersystem 100 mit einem oder mehreren der Blockchain-Server 200, 220, 240 des Blockchain-Netzwerks 260 kommunizieren. Zudem umfasst das Vorrichtungscomputersystem 100 eine Sensorschnittstelle zur Kommunikation mit vorrichtungseigenen Sensoren 130, 150, 170 über ein vorrichtungseigenes Netzwerk 276, insbesondere zum Empfangen von Sensormesswerten, welche Zustandsdaten der Vorrichtung bereitstellen.

Die Vorrichtung umfasst zudem eine Mehrzahl von vorrichtungseigenen Sensoren 130, 150, 170, welche jeweils eine Sensorschnittstelle 132, 152, 172 zur Kommunikation mit dem Vorrichtungscomputersystem 100 über ein vorrichtungseigenes Netzwerk 276 aufweisen. Falls die Sensormesswerte kryptographisch gesichert, d.h. beispielsweise verschlüsselt und/oder signiert, an das Vorrichtungscomputersystem 100 übertragen werden sollen, umfassen die Sensoren 130, 150, 170 zudem jeweils einen Speicher ggf. mit einem geschützten Speicherbereich, entsprechende kryptographische Schlüssel, wie etwa ein dem jeweiligen Sensor zugeordnetes asymmetrisches kryptographisches Schlüsselpaar oder einen symmetrischen kryptographischen Schlüssel, und einen Prozessor mit Programminstruktionen zur Ausführung der kryptographisch gesicherten Kommunikation.

Ferner kann ein Wartungs- und/oder Reparaturcomputersystem 300 vorgesehen sein, welches einen Speicher 302 umfasst. Bei dem Computersysteme 300 kann sich beispielsweise um ein mobiles Diagnosegerät oder einen stationären Personalcomputer handeln. Beispielsweise handelt es sich um ein mobiles Diagnosegerät in Form eines speziellen tragbaren Computersystems mit verschiedenen Diagnosefunktionen für das Vorrichtungscomputersystem und/oder die Vorrichtungselektronik. Das Computersystem 300 kann beispielsweise unmittelbar über ein oder mehrere Kabel 274 mit dem Vorrichtungscomputersystem und/oder der Vorrichtungselektronik verbunden werden. In dem Speicher 302 ist ein öffentlicher kryptographischer Schlüssel 308 eines dem Wartungs- und/oder Reparaturcomputersystem zugeordneten asymmetrischen Schlüsselpaars gespeichert ist. Ferner sind in dem Speicher 302 Zustandsdaten 310 der Vorrichtung gespeichert. Diese Zustandsdaten 310 der Vorrichtung werden beispielsweise durch Sensoren des Wartungs- und/oder Reparaturcomputersystems bereitgestellt und/oder umfassen Angaben zur Wartungs- oder Reparaturarbeiten, welche eine Werkstatt oder ein Wartungs- und/oder Reparaturservice durchgeführt hat. Ferner können diese Zustandsdaten auch Angaben von Mitarbeitern der Werkstatt oder des Wartungs- und/oder Reparaturservices über den Zustand der Vorrichtung umfassen, insbesondere über festgestellte Mängel.

Ferner umfasst der Speicher 302 einen geschützten Speicherbereich 304, auf welchen ein Zugriff nur über einen Prozessor 312 des Computersystems 300 möglich ist und in dem ein privater kryptographischer Schlüssel 306 des dem Wartungs- und/oder Reparaturcomputersystem 300 zugeordneten asymmetrischen Schlüsselpaars gespeichert ist. Der Prozessor 312 ist dazu konfiguriert Programminstruktionen 314 auszuführen, durch deren Ausführung der Prozessor 312 das Computersystem 300 so steuert, dass die Zustandsdaten 310 der Vorrichtung zur Speicherung in der Blockchain 204 an das Vorrichtungscomputersystem 100 übertragen werden. Zum Nachweis der Authentizität der entsprechenden Zustandsdaten 310 können diese mit dem privaten kryptographischen Schlüssel 306 signiert sein. Die Authentizität des dem Wartungs- und/oder Reparaturcomputersystem 300 zugeordneten asymmetrischen Schlüsselpaar kann zudem beispielsweise durch ein Zertifikat und/oder eine entsprechende PKI belegt werden. Schließlich kann der Prozessor 312 Programminstruktionen 114 ausführen, welche ein kryptographisches Protokoll implementieren. Mittels des kryptographischen Protokolls kann eine Datenübertragung zwischen dem Wartungs- und/oder Reparaturcomputersystem 300 und dem Vorrichtungscomputersystem 100 über die Kommunikationsverbindung 274 kryptographisch gesichert werden. Beispielsweise werden die Zustandsdaten 310 vor dem Senden an das Vorrichtungscomputersystem 100 mit dem öffentlichen kryptographischen Schlüssel 108 des Vorrichtungscomputersystems 100 verschlüsselt, sodass sie von dem Vorrichtungscomputersystems 100 mittels des zugehörigen privaten Schlüssels 106 wieder entschlüsselt werden können.

Ferner umfasst das Wartungs- und/oder Reparaturcomputersystem 300 eine Kommunikationsschnittstelle 316 zur Kommunikation mit dem Vorrichtungscomputersystem 100 und dessen Kommunikationsschnittstelle 120 über die Kommunikationsverbindung 274. Bei der Kommunikationsverbindung 274 kann es sich beispielsweise um eine kabellose oder eine kabelgebundene Kommunikationsverbindung handeln.

Das Vorrichtungscomputersystem 100 kann beispielsweise über das Kommunikationsnetzwerk 270 mit dem Blockchain-Netzwerkwerk 260 kommunizieren. Das Blockchain-Netzwerkwerk 260 umfasst zumindest einen oder mehrere Blockchain-Server 200, 220, 240. Die Blockchain-Server 200, 220, 240 umfassen jeweils einen Speicher 202, 222, 242 mit der Blockchain 204 bzw. einer Kopie der Blockchain 204, welche in einem der Blöcke eine der Vorrichtung zugeordnetes Programmmodul 206 zum Eintragen von Zustandsdaten umfasst. Das Programmmodul 206 umfasst dabei Programminstruktionen. Durch ein Ausführen dieser Programminstruktionen wird ein dem Programmmodul 206 und damit der entsprechenden Vorrichtung zugeordneten Eintrag mit Zustandsdaten 110, 310, 510, 610 der Vorrichtung in der Blockchain 204 erzeugt. Zudem identifiziert das Programmmodul 206 den öffentlichen kryptographischen Schlüssel 108 der Vorrichtung. Beispielsweise ist der öffentlichen kryptographischen Schlüssel 108 in einem der Blöcke der Blockchain hinterlegt. Ferner umfasst jeder der Blockchain-Server 200, 220, 240 einen Prozessor 208, 230, 250, welcher jeweils dazu konfiguriert ist, die Programminstruktionen auszuführen, welche von dem in der Blockchain 204 gespeicherten Programmmodul 206 bereitgestellt werden. Schließlich umfassen die Blockchain-Server 200, 220, 240 jeweils eine Kommunikationsschnittstelle 210, 230, 250 zur Kommunikation über das Blockchain-Netzwerk 260 und/oder das Kommunikationsnetzwerk 270. Bei dem Blockchain-Netzwerk 260 handelt es sich beispielsweise um ein Peer-to-Peer-Netzwerk. Bei dem Kommunikationsnetzwerk 270 handelt es sich beispielsweise um ein kabelgebundenen Netzwerk oder ein kabelloses Netzwerk, wie etwa ein Mobilfunknetzwerk.

Ferner sind die Kommunikationsschnittstellen 210, 230, 250 zur Kommunikation über das Kommunikationsnetzwerk 272 konfiguriert. Über das Kommunikationsnetzwerk 272 können beispielsweise ein Computersystem 500 eines Herstellers der Vorrichtung, ein Computersystem 600 eines Besitzers der Vorrichtung und/oder ein Computersystem 400 eines Providers des Programmmoduls 206 mit einem oder mehreren der Blockchain-Server 200, 220, 240 kommunizieren. Bei dem Kommunikationsnetzwerk 272 kann es sich beispielsweise um ein kabelgebundenen Netzwerk oder ein kabelloses Netzwerk, wie etwa ein Mobilfunknetzwerk, handeln.

Das Computersystem 400 des Providers des Programmmoduls 206 umfasst einen Speicher 402 mit einem öffentlichen kryptographischen Schlüssel 408 eines dem Provider zugeordneten asymmetrischen Schlüsselpaars. Zudem umfasst der Speicher 402 das von dem Providercomputersystem 400 erstellte Programmmodul 206, welches in einem Block der Blockchain 204 gespeichert wird. Zudem umfasst der Speicher 402 einen geschützten Speicherbereich 404, auf welchen ein Zugriff nur über einen Prozessor 412 des Computersystems 400 möglich ist und in dem ein privater kryptographischer Schlüssel 406 des dem Provider zugeordneten asymmetrischen Schlüsselpaars gespeichert ist. Der Prozessor 412 ist dazu konfiguriert Programminstruktionen 414 auszuführen, durch deren Ausführung der Prozessor 412 das Computersystem 400 so steuert, dass es das Programmmodul 206 erstellt und zur Speicherung in der Blockchain 204 an einen der Blockchain-Server 200, 220, 240 überträgt. Zum Nachweis der Authentizität des entsprechenden Programmmoduls 206 kann dieses mit dem privaten kryptographischen Schlüssel 406 signiert sein. Ferner kann das Programmmodul 206 in der Blockchain einer Adresse zugeordnet sein, welche dem öffentlichen kryptographischen Schlüssel 408 des Providers entspricht. Somit ist das Programmmodul 206 initial dem Provider zugeordnet, welcher mithin die Verfügungsgewalt über das Programmmodul 206 besitzt. Die Authentizität des dem Provider zugeordneten asymmetrischen Schlüsselpaar kann zudem beispielsweise durch ein Zertifikat und/oder eine entsprechende PKI belegt werden. Schließlich kann der Prozessor 412 Programminstruktionen 414 ausführen, welche ein kryptographisches Protokoll implementieren. Mittels des kryptographischen Protokolls kann beispielsweise eine Datenübertragung zwischen dem Computersystem 400 des Providers und den Blockchain-Servern 200, 220, 240 kryptographisch gesichert werden. Schließlich umfasst das Computersystems 400 eine Kommunikationsschnittstelle 416 zur Kommunikation über das Kommunikationsnetzwerk 272. Nach Ausführungsformen handelt es sich bei dem Computersystem 400 beispielsweise um einen Blockchain-Servern des Blockchain-Netzwerks 260.

Das Computersystem 500 des Herstellers der Vorrichtung umfasst einen Speicher 502 mit einem öffentlichen kryptographischen Schlüssel 508 eines dem Hersteller zugeordneten asymmetrischen Schlüsselpaars. Zudem umfasst der Speicher 502 Vorrichtungsdaten 510 zum Personalisieren des Programmmoduls 206, d.h. zum Zuordnen des Programmmoduls 206 zu einer individuellen Vorrichtung. Hierzu werden die Vorrichtungsdaten 510 in einem Block der Blockchain 204 gespeichert. Die Vorrichtungsdaten 510 können dabei auch initiale Zustandsdaten der Vorrichtung umfassen. Zudem umfasst der Speicher 502 einen geschützten Speicherbereich 504, auf welchen ein Zugriff nur über einen Prozessor 512 des Computersystems 500 möglich ist und in dem ein privater kryptographischer Schlüssel 506 des dem Vorrichtungshersteller zugeordneten asymmetrischen Schlüsselpaars gespeichert ist. Der Prozessor 512 ist dazu konfiguriert Programminstruktionen 514 auszuführen, durch deren Ausführung der Prozessor 512 das Computersystem 500 so steuert, dass es das Programmmodul 206 personalisiert, d.h. die Vorrichtungsdaten 510 dem Programmmodul 206 zuordnet und in der Blockchain 204 speichert. Zum Nachweis der Authentizität eines entsprechenden Datensatzes mit den Vorrichtungsdaten 510 kann dieser mit dem privaten kryptographischen Schlüssel 506 signiert sein. Ferner kann das Programmmodul 206 in der Blockchain 204 beispielsweise einer Adresse zugeordnet werden, welche dem öffentlichen kryptographischen Schlüssel 508 des Vorrichtungsherstellers entspricht. Somit kann das Programmmodul 206 zum Personalisieren dem Vorrichtungshersteller zugeordnet werden, welcher fortan ebenso wie über die von ihm hergestellte Vorrichtung auch die Verfügungsgewalt über das Programmmodul 206 besitzt. Die Authentizität des dem Vorrichtungshersteller zugeordneten asymmetrischen Schlüsselpaar kann zudem beispielsweise durch ein Zertifikat und/oder eine entsprechende PKI belegt werden. Schließlich kann der Prozessor 512 Programminstruktionen 514 ausführen, welche ein kryptographisches Protokoll implementieren. Mittels des kryptographischen Protokolls kann beispielsweise eine Datenübertragung zwischen dem Computersystem 500 des Vorrichtungsherstellers und den Blockchain-Servern 200, 220, 240 kryptographisch gesichert werden. Schließlich umfasst das Computersystems 500 eine Kommunikationsschnittstelle 516 zur Kommunikation über das Kommunikationsnetzwerk 272.

Ferner kann ein Computersystem 600 eines Besitzers der Vorrichtung vorgesehen sein, welches einen Speicher 602 mit einem öffentlichen kryptographischen Schlüssel 608 eines dem Vorrichtungsbesitzer zugeordneten asymmetrischen Schlüsselpaars umfasst. Der Speicher 602 umfasst ferner Zustandsdaten 610 der Vorrichtung. Die Zustandsdaten 610 können beispielsweise einen Indikator eines Diebstahls und/oder einer Stilllegung der Vorrichtung umfassen. Ebenso können die Zustandsdaten 610 im Falle eines Fahrzeugs aber beispielsweise auch den Kilometerstand des Fahrzeugs angeben. Zudem umfasst der Speicher 602 einen geschützten Speicherbereich 604, auf welchen ein Zugriff nur über einen Prozessor 612 des Computersystems 600 möglich ist und in dem ein privater kryptographischer Schlüssel 606 des dem Vorrichtungsbesitzer zugeordneten asymmetrischen Schlüsselpaars gespeichert ist. Der Prozessor 612 ist dazu konfiguriert Programminstruktionen 614 auszuführen, durch deren Ausführung der Prozessor 612 das Computersystem 600 so steuert, dass ein Datensatz mit den Zustandsdaten 610 der Vorrichtung zum Speichern in der Blockchain 204 erzeugt und an einen der Blockchain-Server 200, 220, 240 sendet. Zum Nachweis der Authentizität eines entsprechenden Datensatzes mit den Zustandsdaten 610 kann dieser mit dem privaten kryptographischen Schlüssel 606 signiert sein. Ferner kann das Programmmodul 206 in der Blockchain 204 beispielsweise einer Adresse zugeordnet werden, welche dem öffentlichen kryptographischen Schlüssel 608 des Vorrichtungsbesitzers entspricht. Somit kann das Programmmodul 206 beispielsweise nach dem Erwerb der Vorrichtung durch den Besitzer, dem Vorrichtungsbesitzer zugeordnet werden, welcher fortan ebenso wie über die von ihm erworbene Vorrichtung auch die Verfügungsgewalt über das Programmmodul 206 besitzt. Die Authentizität des dem Vorrichtungsbesitzer zugeordneten asymmetrischen Schlüsselpaar kann zudem beispielsweise durch ein Zertifikat und/oder eine entsprechende PKI belegt werden. Schließlich kann der Prozessor 612 Programminstruktionen 614 ausführen, welche ein kryptographisches Protokoll implementieren. Mittels des kryptographischen Protokolls kann beispielsweise eine Datenübertragung zwischen dem Computersystem 600 des Vorrichtungsbesitzers und den Blockchain-Servern 200, 220, 240 kryptographisch gesichert werden. Schließlich umfasst das Computersystems 600 eine Kommunikationsschnittstelle 616 zur Kommunikation über das Kommunikationsnetzwerk 272.

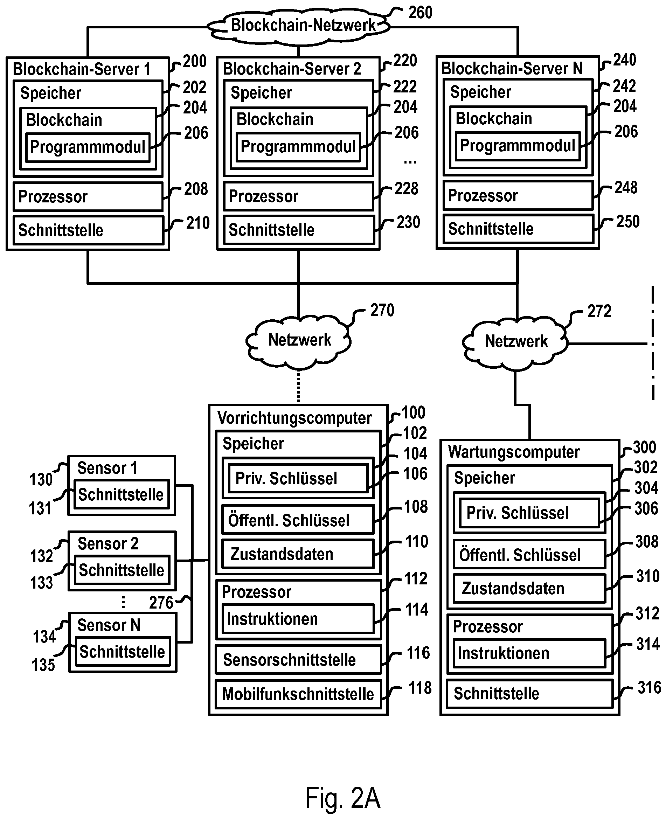

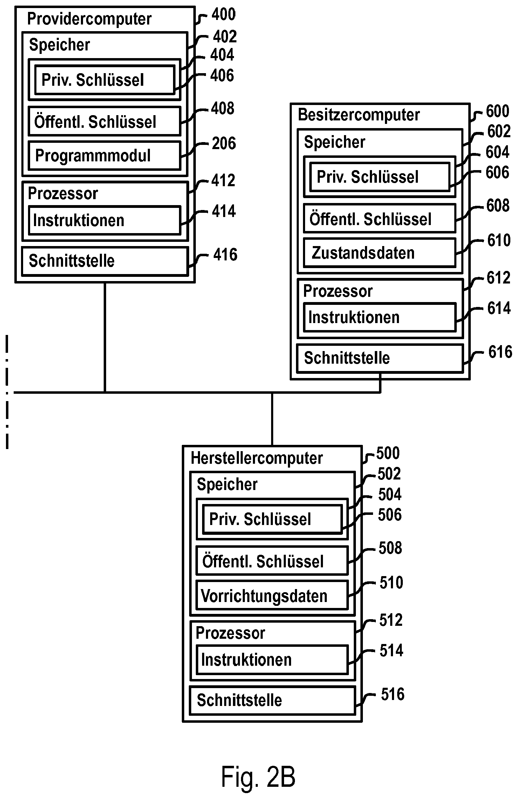

Figuren 2A und 2B zeigen eine zweite Ausführungsform eines exemplarischen Systems zum Protokollieren von Zustandsdaten 110, 310, 510, 610 der Vorrichtung in einer Blockchain 204. Das System entspricht dabei weitestgehend dem System aus den Figuren 1A und 1B. Im Gegensatz zu dem System gemäß den Figuren 1, ist im Falle der Figur 2A das Wartungs- und/oder Reparaturcomputersystem 300 dazu berechtigt selbständig Datensätze mit Zustandsdaten 310 an einen oder mehrere der Blockchain-Servern 200, 220, 240 zum Eintragen in die Blockchain 204 zu senden. Hierzu ist das Computersystem 300 dazu konfiguriert mit seiner Kommunikationsschnittstelle 316 über das Kommunikationsnetzwerk 272 mit dem Blockchain-Netzwerk 260 zu kommunizieren. Nach weiteren Ausführungsformen kann das Wartungs- und/oder Reparaturcomputersystem 300 zusätzlich wie bereits in Figur 1A gezeigt auch über das Vorrichtungscomputersystem Zustandsdaten in die Blockchain 204 eintragen lassen. In diesem Fall würde das Computersystem 300 gemäß Figur 2A zusätzlich über eine Kommunikationsverbindung 274, wie sie in Figur 1A gezeigt ist, verfügen.

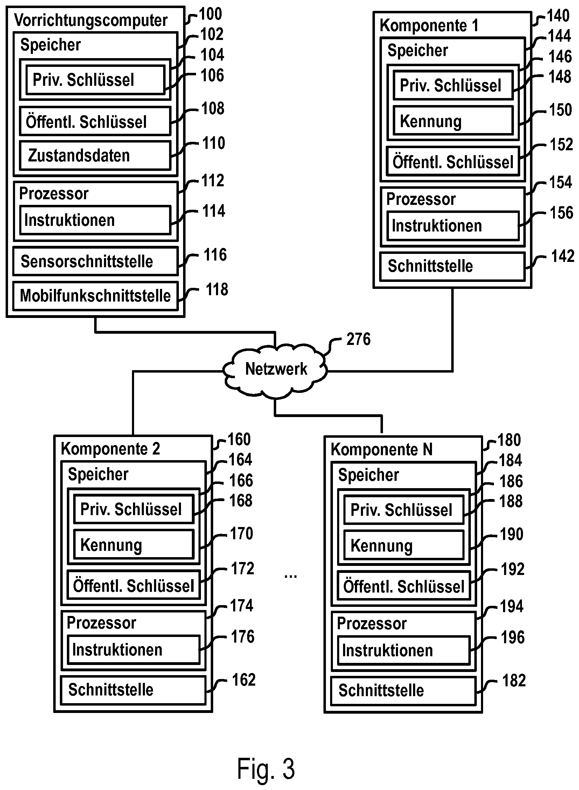

Figur 3 zeigt eine Ausführungsform eines exemplarischen Systems zum Erfassen von Zustandsdaten 110 derVorrichtung. Das Vorrichtungscomputersystem 100 entspricht den in den Figuren 1A und 2A gezeigten Ausführungsformen. Die vorrichtungseigenen Sensoren umfassen im Falle der Figur 3 eine Mehrzahl von Elektronikkomponenten 140, 160, 180 der Vorrichtungselektronik, welche über das vorrichtungseigene Netzwerk 276 mit dem Vorrichtungscomputersystem 100 verbunden sind.

Die Elektronikkomponenten 140, 160, 180 umfassen jeweils einen Speicher 144, 164, 184 mit einem öffentlichen kryptographischen Schlüssel 152, 172, 192 eines der jeweiligen Elektronikkomponente 140, 160, 180 zugeordneten asymmetrischen Schlüsselpaars. Zudem umfassen die Speicher 144, 164, 184 jeweils einen geschützten Speicherbereich 146, 166, 186, auf welchen ein Zugriff nur über einen Prozessor 154, 174, 194 der jeweiligen Elektronikkomponente 140, 160, 180 möglich ist und in dem ein privater kryptographischer Schlüssel 148, 168, 188 des der jeweiligen Elektronikkomponente 140, 160, 180 zugeordneten asymmetrischen Schlüsselpaars gespeichert ist. Zudem ist in dem geschützten Speicherbereich 146, 166, 186 jeweils eine Kennung 150, 170, 190 der entsprechenden Elektronikkomponente 140, 160, 180 gespeichert. Die Prozessoren 154, 174, 194 sind jeweils dazu konfiguriert Programminstruktionen 156, 176, 196 auszuführen, durch welche eine kryptographisch gesicherte Übertragung der Kennungen 150, 170, 190 an das Vorrichtungscomputersystem 100 implementiert wird. Schließlich umfassen die Elektronikkomponente 140, 160, 180 jeweils eine Kommunikationsschnittstelle 142, 162, 182 zur Kommunikation mit dem Vorrichtungscomputersystem 100 über das Netzwerk 276.

Das System gemäß Figur 3 ermöglicht eine Abfrage der Kennungen, d.h. zum Beispiel der Seriennummern, von einer oder mehreren in der Vorrichtung eingebauten Komponenten 140, 160, 180 der Vorrichtungselektronik durch das Vorrichtungscomputersystem 100 zum Zusammenstellen von Zustandsdaten 110 der Vorrichtung. Aus empfangenen Seriennummern kann das Vorrichtungscomputersystem 100 beispielsweise Zustandsdaten in Form eines die Zusammenstellung der Elektronikkomponenten 140, 160, 180 kennzeichnenden vorrichtungspezifischen Codes erstellen, der mit Hilfe des privaten kryptographischen Schlüssels 106 der Vorrichtung signiert und zum Eintragen in die Blockchain an einen der Blockchain-Servern 200, 220, 240 übertragen wird. Bei den Elektronikkomponenten 140, 160, 180 handelt es sich im Falle eines Fahrzeugs beispielsweise um Motorelektronikkomponenten, Fahrwerkselektronikkomponenten und/oder weitere Elektronikkomponenten, die jeweils als gesonderte Electronic Control Units (ECUs) ausgebildet sein können.

Vor der Abfrage der Kennungen, z.B. der Seriennummern, von den Elektronikkomponenten 140, 160, 180 müssen diese Komponenten beispielsweise zunächst untereinander und/oder gegenüber dem Vorrichtungscomputersystem 100 mit Hilfe der jeweiligen Schlüsselpaare kryptographisch authentifiziert werden. Die Authentizität der den Elektronikkomponenten 140, 160, 180 zugeordneten asymmetrischen Schlüsselpaare kann zudem beispielsweise durch Zertifikate und/oder jeweils eine entsprechende PKI belegt werden.

Beispielsweise erzeugt das Vorrichtungscomputersystem 100 bzw. eine authentifizierende Elektronikkomponente eine Zufallszahl, insbesondere ein Pseudo-Zufallszahl, welche mit dem öffentlichen kryptographischen Schlüssel 152, 172, 192 der zu authentifizierenden Elektronikkomponenten 140, 160, 180 verschlüsselt und an die entsprechende zu authentifizierenden Elektronikkomponenten 140, 160, 180 über das Netzwerk 276 gesendet wird, beispielsweise Elektronikkomponente 140. Die Elektronikkomponenten 140 empfängt die verschlüsselte Pseudo-Zufallszahl, entschlüsselt diese mit Hilfe ihres privaten kryptographischen Schlüssels 148 und sendet die entschlüsselte Pseudo-Zufallszahl wieder an das Vorrichtungscomputersystem 100 zurück. Nach Ausführungsformen verschlüsselt die Elektronikkomponente 140 die Pseudo-Zufallszahl mit dem öffentlichen kryptographischen Schlüssel 108 des Vorrichtungscomputersystem 100. Das Vorrichtungscomputersystem 100 empfängt die Pseudo-Zufallszahl von der Elektronikkomponente 140 und entschlüsseit diese gegebenenfalls mit ihrem privaten kryptographischen Schlüssel 106. Nur wenn die von dem Vorrichtungscomputersystem 100 empfangene Pseudo-Zufallszahl mit der ursprünglich gesendeten Zufallszahl übereinstimmt, ist die Elektronikkomponente 140 gegenüber dem Vorrichtungscomputersystem 100 authentifiziert, woraufhin deren Kennung 170 abgefragt werden kann. Die Übertragung der Kennung 170 kann beispielsweise in verschlüsselter Form erfolgen. Beispielsweise wird ein symmetrischer Schlüssel verwendet, der unter Verwendung der Pseudozufallszahl errechnet wird.

Falls die kryptographische Authentifizierung einer der Elektronikkomponenten 140, 160, 180 gegenüber dem Vorrichtungscomputersystem 100 fehlschlägt, so kann dieses keinen entsprechenden Code erzeugen und sendet daher als Zustandsdaten der Vorrichtung eine entsprechende Fehlermeldung an die Blockchain-Servern 200, 220, 240, welche diese daraufhin in die Blockchain 204 eintragen.

Fällt eine der Elektronikkomponenten 140, 160, 180 aus und muss diese durch eine neue Elektronikkomponente mit einer neuen Kennung ersetzt werden, so ändert sich durch einen Austausch einer der Elektronikkomponenten 140, 160, 180 der Zustand der Vorrichtung, was sich damit auch in einem veränderten Code niederschlägt. Nach Ausführungsformen wird der Code jeweils mit dem zuletzt berechneten Code verglichen. Der zuletzt berechnete Code kann beispielsweise in dem Speicher 102 des Vorrichtungscomputers 100 gespeichert sein oder aus der Blockchain 204 abgefragt werden. Unterscheidet sich der neu berechnete Code von dem zuletzt berechneten Code, so umfasst der von dem Vorrichtungscomputers 100 erstellte Datensatz mit dem neuen Code beispielsweise zusätzlich alle einzelnen Kennungen 150, 170, 190 der Elektronikkomponenten 140, 160, 180. Nach weiteren Ausführungsformen werden initial einmal alle Kennungen 150, 170, 190 aller Elektronikkomponenten 140, 160, 180 in der Blockchain 204 gespeichert. Anschließend werden bei Änderungen der Zusammenstellung nur diejenigen Kennungen zusammen mit dem neuen Code in der Blockchain gespeichert, welche sich geändert haben, d.h. neu sind. Somit kann beim Austausch einer der Elektronikkomponenten 140, 160, 180 anhand der der Blockchain 204 zudem ermittelt werden, welche der Elektronikkomponenten 140, 160, 180 ausgetauscht und durch was diese ersetzt wurde.

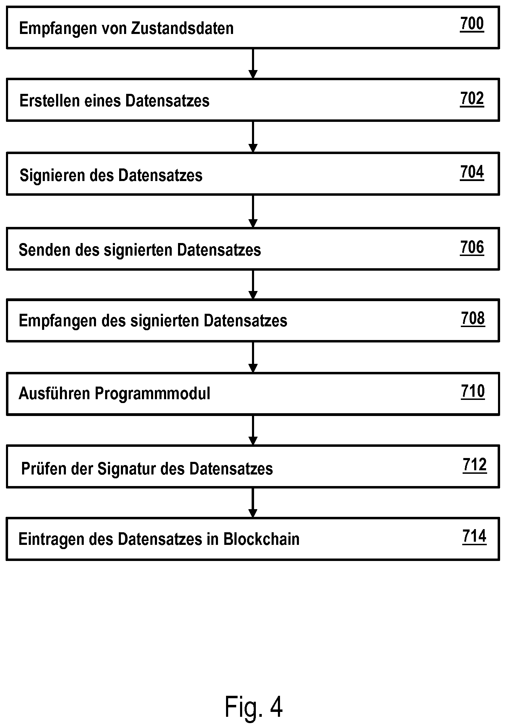

Figur 4 zeigt eine erste Ausführungsform eines exemplarischen Verfahrens zum Protokollieren von Zustandsdaten einer Vorrichtung in einer Blockchain. Die Zustandsdaten werden beispielsweise durch ein Computersystem der Vorrichtung selbst zusammengestellt und zum Eintragen in die Blockchain an einen Blockchain-Server eines Blockchain-Netzwerks gesendet. In Block 700 werden Zustandsdaten empfangen. Diese Zustandsdaten können beispielsweise von vorrichtungseigenen Sensoren oder externen Sensoren stammen. Je nach Ausführungsform der Sensoren kann vor der Übertragung der Sensormesswerte zunächst eine Authentifizierung eines oder mehrerer Sensoren durch das Vorrichtungscomputersystem und/oder eine Authentifizierung des Vorrichtungscomputersystems durch einen oder mehrere der Sensoren vorgesehen sein. Ferner kann auch eine Authentifizierung von Sensoren untereinander vorgesehen sein. Eine Authentifizierung kann beispielsweise unter Verwendung von den zu authentifizierenden Einrichtungen zugeordneten asymmetrischen Schlüsselpaaren erfolgen.

Werden Sensormesswerte beispielsweise von einem Computersystem einer autorisierten Werkstatt oder einem autorisierten Wartungs- und/oder Reparaturservice bereitgestellt, kann beispielsweise vorgesehen sein, dass das Vorrichtungscomputersystem ein asymmetrisches Schlüsselpaar bestehend aus einem öffentlichen kryptographischen Schlüssel und einem privaten kryptographischen Schlüssel sowie einem diesem Schlüsselpaar zugeordneten Zertifikat umfasst, welches der betreffenden Vorrichtung zugeordnet ist. Die Vorrichtung ist in dem Zertifikat vermerkt. Ferner umfasst das Computersystem der autorisierten Werkstatt oder des autorisierten Wartungs- und/oder Reparaturservices zudem ein asymmetrisches Schlüsselpaar bestehend aus einem öffentlichen kryptographischen Schlüssel und einem privaten kryptographischen Schlüssel sowie einem diesem Schlüsselpaar zugeordneten Zertifikat, welches der betreffenden autorisierten Werkstatt oder dem betreffenden autorisierten Wartungs- und/oder Reparaturservices zugeordnet ist. Die autorisierte Werkstatt oder der autorisierte Wartungs- und/oder Reparaturservice ist in dem Zertifikat vermerkt. Beispielsweise ist das Zertifikat und damit auch das asymmetrische Schlüsselpaar dem Computersystem der autorisierten Werkstatt oder des autorisierten Wartungs- und/oder Reparaturservices zugeordnet.

Für die Durchführung einer gegenseitigen kryptographischen Authentifizierung generiert das Vorrichtungscomputersystem und/oder das Wartungs- und/oder Reparaturcomputersystem beispielsweise eine Zufallszahl, insbesondere ein Pseudo-Zufallszahl. Die Pseudo-Zufallszahl(en) werden mit dem jeweiligen privaten kryptographischen Schlüssel von Vorrichtungscomputersystem und/oder von Wartungs- und/oder Reparaturcomputersystem verschlüsselt zwischen Vorrichtungscomputersystem und Wartungs- und/oder Reparaturcomputersystem ausgetauscht. Zudem wird mit der verschlüsselten Pseudo-Zufallszahl beispielsweise jeweils auch ein Zertifikat mit dem öffentlichen Schlüssel zum Entschlüsseln der Pseudozufallszahl mitgesendet. Somit können das Vorrichtungscomputersystem und/oder das Wartungs- und/oder Reparaturcomputersystem über den Besitz des jeweiligen privaten Schlüssels authentifiziert werden.

Nach einer weiteren Ausführungsform wird zur Authentifizierung zunächst eine Zufallszahl, insbesondere ein Pseudo-Zufallszahl von dem Vorrichtungscomputersystem und/oder von dem Wartungs- und/oder Reparaturcomputersystem berechnet. Die entsprechende Pseudo-Zufallszahl wird mit dem öffentlichen kryptographischen Schlüssel des Empfängercomputersystems verschlüsselt und an das entsprechende Empfängercomputersystem gesandt. Dieses kann die empfangene verschlüsselte Pseudo-Zufallszahl mit seinem privaten kryptographischen Schlüssel entschlüsseln. Nach Ausführungsformen wird die Pseudo-Zufallszahl anschließend mit dem öffentlichen kryptographischen Schlüssel des ursprünglichen Sendercomputersystems verschlüsselt und an dieses zurückgesendet. Das ursprüngliche Sendercomputersystem kann die Pseudo-Zufallszahl mit seinem privaten kryptographischen Schlüssel entschlüsseln und mit der ursprünglichen Pseudo-Zufallszahl vergleichen. Stimmen diese überein, so ist das Empfängercomputersystem authentifiziert. In diesem Fall ist außerdem das Sendercomputersystem authentifiziert. Wird die Pseudo-Zufallszahl nicht mit dem öffentlichen kryptographischen Schlüssel des Sendercomputersystems verschlüsselt, kann beispielsweise ein analoges Verfahren umgekehrt angewandt werden, um das Sendercomputersystem ebenfalls zu authentifizieren. Ferner kann unter Verwendung der Pseudo-Zufallszahl auch ein symmetrischer kryptographischer Schlüssel zur Verschlüsselung der weiteren Kommunikation zwischen den Computersystemen berechnet werden.

Die Übertragung von Sensordaten kann beispielsweise auf eine Anfrage durch das Vorrichtungscomputersystem hin erfolgen. Nach einer alternativen Ausführungsform erfolgt die Übertragung durch den Sensor selbständig. Eine solche selbständige Übertragung kann beispielsweise auf einer Erfüllung eines vordefinierten Kriteriums hin erfolgen. Ein solches vordefiniertes Kriterium kann der beispielsweise ein Ablauf eines vordefinierten Zeitintervalls sein oder ein erfasst Sensormesswert erfüllt ein entsprechendes Kriterium. Beispielsweise liegt der Sensormesswert über oder unter einem vordefinierten Schwellenwert.

In Block 702 erstellt das Vorrichtungscomputersystem einen Datensatz zum Eintragen in die Blockchain, welcher die einzutragenden Zustandsdaten umfasst und zudem das der Vorrichtung zugeordnete Programmmodul identifiziert. Das Programmmodul kann beispielsweise durch eine Kennung, eine dem Programmmodul zugeordnete Adresse oder eine Kennung des Blocks, welcher das Programmmodul umfasst, identifiziert werden. In Block 704 signiert das Vorrichtungscomputersystem den Datensatz mit einem dem Vorrichtungscomputersystem zugeordneten privaten kryptographischen Schlüssel. In Block 706 wird der signierte Datensatz zum Eintragen in die Blockchain an einen Blockchain-Server des Blockchain-Netzwerks gesendet. In Block 708 empfängt der Blockchain-Server den Datensatz. Anhand des Datensatzes identifiziert der Blockchain-Server das zu verwendenden Programmmodul, welches in der Blockchain gespeichert ist. In Block 710 wird das Programmmodul durch den Blockchain-Server unter Verwendung des empfangenen Datensatzes ausgeführt. In Block 712 wird die Signatur des Datensatzes geprüft. Beispielsweise ist in der Blockchain der öffentliche kryptographische Schlüssel des Vorrichtungscomputersystems hinterlegt. Nach Ausführungsformen ist das Vorrichtungscomputersystem nur berechtigt Zustandsdaten in die Blockchain einzutragen, wenn es hierfür gültig registriert wurde. Beispielsweise wird geprüft, ob der öffentliche kryptographische Schlüssel des Vorrichtungscomputers für das Programmmodul gültig in der Blockchain hinterlegt sein, d.h. ob der entsprechende öffentliche kryptographische Schlüssel zusammen mit einer Kennung des Programmmoduls und einer Signatur des Providers des Programmmoduls in einem Block der Blockchain gespeichert ist. Alternativ kann der entsprechende öffentliche kryptographische Schlüssel mit einer Signatur gespeichert sein, welche auf durch eine in der Blockchain gespeicherte Kette von Signaturen auf eine Signatur des Providers des Programmmoduls zurückgeführt werden kann. Nach Ausführungsformen kann die Blockchain auch Zertifikate umfassen, welche entsprechende öffentliche kryptographische Schlüssel zum Prüfen von Signaturen umfassen und deren Authentizität belegen. Nach Ausführungsformen wird die Authentizität entsprechender Zertifikat beispielsweise durch eine von der Blockchain bereitgestellte PKI, etwa eine hierarchische PKI, belegt.

Ergibt die Prüfung, dass die Signatur des in die Blockchain einzutragenden Datensatzes gültig ist, erfolgt in Block 714 ein Eintragen des Datensatzes mit den Zustandsdaten der Vorrichtung durch den Blockchain-Server in einen zusätzlichen Block der Blockchain. Nach Ausführungsformen umfasst der Eintrag einen Zeitstempel. Nachausführungsformen bezeichnet der Zeitstempel den Zeitpunkt der Messung der den Zustandsdaten zugrundeliegenden Messwerten, den Zeitpunkt des Erstellens des Datensatzes und/oder den Zeitpunkt der Eintragung des entsprechenden Eintrags in den Block der Blockchain bzw. des entsprechenden Blocks in die Blockchain.

Die Figur 4 wurde hier unter Bezugnahme auf das Vorrichtungscomputersystem beschrieben. In analoger Weise können auch Einträge von Zustandsdaten und Vorrichtungsspezifikationen von anderen Computersystemen erfolgen, wie etwa einem Providercomputersystem, einem Wartungs- und/oder Reparaturcomputersystem, einem Computersystem eines Vorrichtungsherstellers und/oder dem Computersystem eines Vorrichtungsbesitzers. Nach Ausführungsformen ist Voraussetzung hierfür, dass die entsprechenden Computersysteme zu solchen Einträgen berechtigt sind. Eine entsprechende Berechtigung kann wie im Fall Vorrichtungscomputersystem durch signierte Hinterlegung eines dem Computersystem zugeordneten öffentlichen kryptographischen Schlüssel erfolgen.

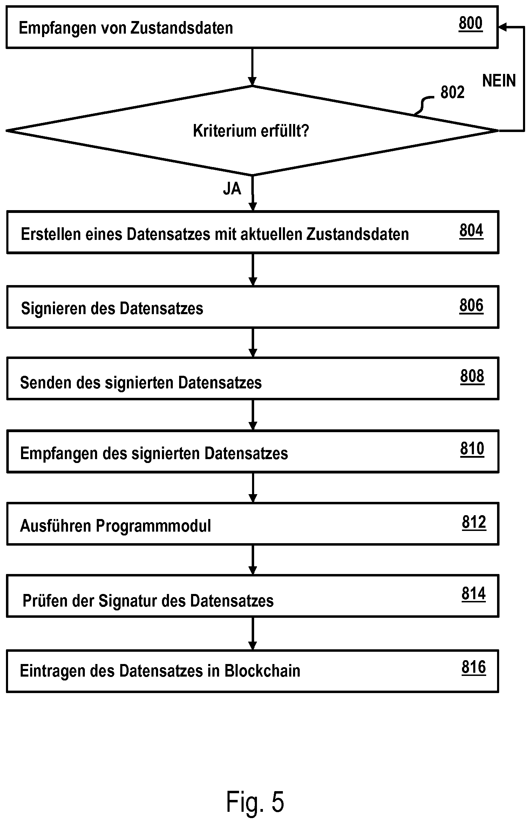

Figur 5 zeigt eine zweite Ausführungsform eines exemplarischen Verfahrens zum Protokollieren von Zustandsdaten einer Vorrichtung in einer Blockchain. Wie in Schritt 700 der Figur 2 werden auch in Schritt 800 der Figur 3 Zustandsdaten empfangen. In Schritt 802 wird geprüft, ob ein vordefiniertes Kriterium zum Erstellen eines Datensatzes mit den empfangenen Zustandsdaten und Eintragen des entsprechenden Datensatzes in die Blockchain erfüllt ist. Ist das Kriterium erfüllt, so wird das Verfahren in Block 804 mit dem Erstellen eines Datensatzes fortgesetzt, welcher die aktuellen Zustandsdaten umfasst. Ist das Kriterium nicht erfüllt, so wird das Verfahren in Block 800 fortgesetzt bis das Kriterium erfüllt wird. Bei dem Kriterium kann es sich beispielsweise um ein Zeitkriterium handeln. Ist eine vordefinierte Zeitspanne abgelaufen, erfolgt ein Eintrag in der Blockchain. Die aktuellen Zustandsdaten umfassen dabei beispielsweise entweder die zuletzt erfassten Zustandsdaten oder alle in dem Zeitintervall seit der letzten Erstellung eines Datensatzes empfangenen Daten. Als Kriterium für ein Erstellen eines Datensatzes kann im Falle eines Fahrzeugs beispielsweise auch die Beendigung einer Fahrt dienen, wobei eine Fahrt beispielsweise mit dem Starten der Zündung des Fahrzeugs beginnt und mit dem Ausschalten der Zündung endet. Handelt es sich bei den Zustandsdaten um Zustandsdaten, bei welchen nur der aktuellste Wert jeweils relevant ist, wie beispielsweise bei dem Kilometerstand eines Fahrzeugs, so wird nach Ausführungsformen nur der zuletzt erfasste und damit aktuellste Messwert in den Datensatz aufgenommen. Handelt es bei den Zustandsdaten um Zustandsdaten, bei welchen alle erfassten Werte relevant sind, wie beispielsweise bei Fehlermeldungen, so werden nach Ausführungsformen alle im relevanten Zeitintervall erfassten Zustandsdaten in den Datensatz aufgenommen. Ferner kann das Kriterium beispielsweise ein Über- oder Unterschreiten eines Schwellenwerts durch einen erfassten Messwert sein. Beispielsweise werden relevante Zustandsdaten, wie etwa ein aktueller Kilometerstand im Falle eines Fahrzeugs, jeweils bei Erreichen eines bestimmten Kilometerstands eingetragen. Beispielsweise erfolgt eine Eintragung all 100 km, 500 km, 1.000 km, 2.000 km, 5.000 km oder 10.000 km. Die weiteren Schritte 804 bis 816 sind analog zu den Schritten 702 bis 714 der Figur 4.

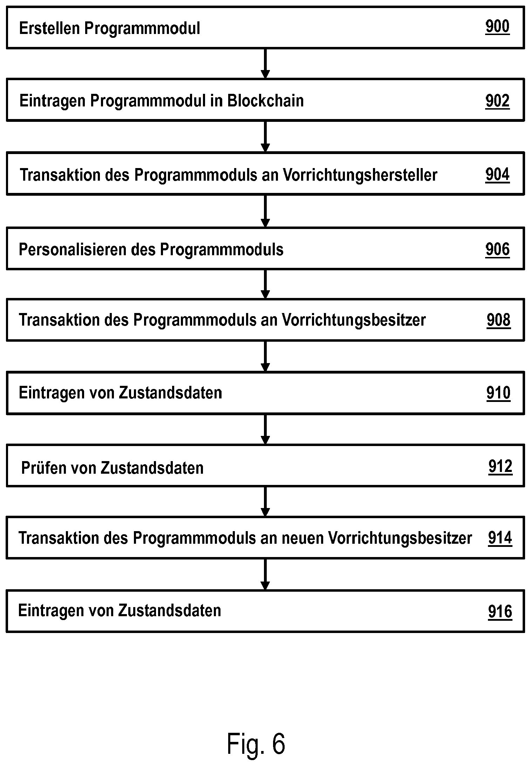

Figur 6 zeigt eine dritte Ausführungsform eines exemplarischen Verfahrens zum Protokollieren von Zustandsdaten einer Vorrichtung in einer Blockchain. In Block 900 wird von dem Provider Computersystem ein Programmmodul erstellt. Die Authentizität des Programmmoduls wird beispielsweise durch eine Signatur mit einem dem Provider zugeordneten privaten kryptographischen Schlüssel belegt. Die Authentizität der Signatur kann beispielsweise durch einen zugehörigen öffentlichen kryptographischen Schlüssel gegebenenfalls in Kombination mit einem entsprechenden Zertifikat nachgewiesen werden. In Block 902 wird das Programmmodul in die Blockchain eingetragen. Nach Ausführungsformen darf beispielsweise nur ein bestimmter Provider oder nur eine begrenzte Anzahl an Providern Programmmodule in die Blockchain eintragen. Das Programmmodul ist beispielsweise noch keiner bestimmten Vorrichtung zugeordnet. Vielmehr umfasst das Programmmodul Programinstruktionen, welche bestimmte Datentypen und Teilnehmertypen des Protokollierungsverfahrens definieren, wie etwa Zustandsdaten und Vorrichtungsspezifikationen, einen Provider des Programmmoduls, eine Vorrichtung, einen Hersteller der Vorrichtung, einen Besitzer der Vorrichtung, eine Werkstatt oder einen Wartungs- und/oder Reparaturservice. Nach Ausführungsformen ist das Programmmodul initial einer Adresse des Providers zugeordnet, welche beispielsweise einen dem Provider zugeordneten öffentlichen Schlüssel umfasst.

In Block 904 erfolgt eine Transaktion des Programmmoduls von der Adresse des Providers an eine Adresse des Vorrichtungsherstellers. Beispielsweise umfasst die dem Vorrichtungshersteller zugeordnete Adresse einen öffentlichen kryptographischen Schlüssel des Vorrichtungsherstellers. Zusätzlich zur Transaktion des Programmmoduls an die Adresse des Vorrichtungsherstellers wird die Berechtigung des Vorrichtungsherstellers zum Personalisieren des Programmmoduls für eine bestimmte Vorrichtung freigeschaltet. Die Freischaltung kann beispielsweise durch einen entsprechenden Funktionsaufruf des Programmmoduls durch den Provider oder durch eine Eingabe eines Passworts von Seiten des Vorrichtungsherstellers erfolgen. Das entsprechende Passwort wird dem Vorrichtungshersteller beispielsweise durch den Provider zur Verfügung gestellt. Bei dem Passwort handelt es sich beispielsweise um eine Einmalpasswort, wie etwa eine TAN. Das Passwort wird dem Vorrichtungshersteller von dem Provider beispielsweise über eine kryptographisch gesicherte Verbindung zwischen einem Computersystem des Vorrichtungsherstellers und einem Computersystem des Providers zur übermittelt. Beispielsweise handelt es sich bei der kryptographisch gesicherten Verbindung um eine verschlüsselte Ende-zu-Ende-Verbindung. Unter einer "verschlüsselten Ende-zu-Ende-Verbindung" bzw. einem "verschlüsselten Ende-zu-Ende-Übertragungskanal" wird hier eine Verbindung zwischen einem Sender und einem Empfänger mit einer Ende-zu-Ende-Verschlüsslung verstanden, bei der zu übertragende Daten vom Sender verschlüsselt und erst vom Empfänger wieder entschlüsselt werden. Die Verschlüsselung übertragener Daten erfolgt somit über alle Übertragungsstationen hinweg, sodass Zwischenstationen aufgrund der Verschlüsslung keine Kenntnis vom Inhalt der übertragenen Daten erlagen können. Die Verbindung wird durch die Verschlüsselung kryptografisch abgesichert, um ein Ausspähen und/oder eine Manipulation der Übertragung zu verhindern, wobei hierzu ein sogenanntes Secure-Messaging-Verfahren eingesetzt werden kann. Eine Ende-zu-Ende-Verschlüsslung beruht beispielsweise auf zwei symmetrischen kryptographischen Schlüsseln, wobei ein erster der symmetrischen Schlüssel zum Verschlüsseln von Nachrichten und ein zweite der symmetrischen Schlüssel zum Authentifizieren des Senders der Nachricht dient.

Der Schlüssel zum Authentifizieren des Senders der Nachricht kann beispielsweise zum Erstellen eines Nachrichtenauthentifizierungscodes (Message Authentication Code, MAC) dienen. Mittels eines MAC lässt sich Gewissheit über den Ursprung der Nachrichten erhalten und deren Integrität verifizieren. MAC-Algorithmen erfordern zwei Eingabeparameter, erstens die zu schützenden Daten und zweitens einen geheimen Schlüssel. Aus diesen beiden wird ein Nachrichtenauthentifizierungscode in Form einer Prüfsumme berechnet. Der Sender einer Nachricht berechnet für die zu übermittelnden Daten der Nachricht einen MAC und sendet die Nachricht zusammen mit dem MAC an den Empfänger. Der Empfänger berechnet den MAC zu der empfangenen Nachricht mit seinem Schlüssel und vergleicht den berechneten MAC mit dem empfangenen MAC. Aus einer Übereinstimmung beider Werte folgt, dass die Nachricht von einer Partei abgeschickt wurde, welche Zugriff auf den geheimen Schlüssel besitzt und die Nachricht wurde während der Übertragung nicht verändert.

In Block 906 wird das Programmmodul von dem Vorrichtungshersteller personalisier, d.h. das Programmmodul wird der Vorrichtung zugeordnet. Hierzu wird beispielsweise ein mit dem privaten kryptographischen Schlüssel des Vorrichtungsherstellers signierter Eintrag in der Blockchain erzeugt, welcher einen öffentlichen kryptographischen Schlüssel der Vorrichtung dem Programmmodul zuordnet. Zudem kann der Eintrag Vorrichtungsspezifikationen der Vorrichtung umfassen, d.h. Attribute der Vorrichtung.

In Block 908 erfolgt eine Transaktion des Programmmoduls von der Adresse des Vorrichtungsherstellers an eine Adresse eines Vorrichtungsbesitzers, welcher die Vorrichtung von dem Vorrichtungshersteller erwirbt. Beispielsweise umfasst die dem Vorrichtungsbesitzer zugeordnete Adresse einen öffentlichen kryptographischen Schlüssel des Vorrichtungsbesitzers. In Block 910 werden Zustandsdaten der Vorrichtung unter Verwendung des Programmmoduls beispielsweise durch das Vorrichtungscomputersystem in die Blockchain eingetragen.

In Block 912 können nun beispielsweise die Zustandsdaten der Vorrichtung durch einen Kaufinteressenten geprüft werden. Nach Ausführungsformen werden Zustandsdaten welche nicht öffentlich sind verschlüsselt in die Blockchain eingetragen. Beispielsweise werden entsprechende Zustandsdaten mit einem öffentlichen kryptographischen Schlüssel des eintragenden Computersystems verschlüsselt, so dass diese nur durch das eintragende Computersystem mit dessen privaten kryptographischen Schlüssel entschlüsselt werden können. Im Falle eines Fahrzeugs können beispielsweise Kilometerstand oder gefahrene Kilometer öffentliche Zustandsdaten sein, während Daten zu Ausgangsorten und Zielorten der Fahrten sowie zu den gewählten Routen private Daten sein können. In Block 914 erfolgt eine Transaktion des Programmmoduls von der Adresse des bisherigen Vorrichtungsbesitzers an eine Adresse eines neuen Vorrichtungsbesitzers, welcher die Vorrichtung von dem bisherigen Vorrichtungsbesitzer erwirbt. Beispielsweise umfasst die dem neuen Vorrichtungsbesitzer zugeordnete Adresse einen öffentlichen kryptographischen Schlüssel des neuen Vorrichtungsbesitzers. In Block 916 werden weiterhin Zustandsdaten der Vorrichtung, beispielsweise durch das Vorrichtungscomputersystem, in die Blockchain eingetragen.

### Bezugszeichenliste

- 100: Vorrichtungscomputersystem
- 102: Speicher
- 104: geschützter Speicherbereich
- 106: privater kryptographischer Schlüssel
- 108: öffentlicher kryptographischer Schlüssel
- 110: Zustandsdaten
- 112: Prozessor
- 114: Programminstruktionen
- 116: Sensorschnittstelle
- 118: Kommunikationsschnittstelle
- 120: Kommunikationsschnittstelle
- 130: Sensor
- 131: Sensorschnittstelle
- 132: Sensor
- 133: Sensorschnittstelle
- 134: Sensor
- 135: Sensorschnittstelle
- 140: Elektronikkomponente
- 142: Sensorschnittstelle
- 144: Speicher
- 146: geschützter Speicherbereich
- 148: privater kryptographischer Schlüssel
- 150: Kennung
- 152: öffentlicher kryptographischer Schlüssel
- 154: Prozessor
- 156: Programminstruktionen
- 160: Elektronikkomponente
- 162: Sensorschnittstelle
- 164: Speicher
- 166: geschützter Speicherbereich
- 168: privater kryptographischer Schlüssel
- 170: Kennung
- 172: öffentlicher kryptographischer Schlüssel
- 174: Prozessor
- 176: Programminstruktionen
- 180: Elektronikkomponente
- 182: Sensorschnittstelle
- 184: Speicher
- 186: geschützter Speicherbereich
- 188: privater kryptographischer Schlüssel
- 190: Kennung
- 192: öffentlicher kryptographischer Schlüssel
- 194: Prozessor
- 196: Programminstruktionen
- 200: Blockchain-Server
- 202: Speicher
- 204: Blockchain
- 206: Programmmodul
- 208: Prozessor
- 210: Kommunikationsschnittstelle
- 220: Blockchain-Server
- 222: Speicher
- 228: Prozessor
- 230: Kommunikationsschnittstelle
- 240: Blockchain-Server
- 242: Speicher
- 248: Prozessor
- 250: Kommunikationsschnittstelle
- 260: Blockchain-Netzwerk
- 270: Kommunikationsnetzwerk
- 272: Kommunikationsnetzwerk
- 274: Kommunikationsverbindung
- 276: Netzwerk
- 300: Wartungs- und/oder Reparaturcomputersystem
- 302: Speicher
- 304: geschützter Speicherbereich
- 306: privater kryptographischer Schlüssel
- 308: öffentlicher kryptographischer Schlüssel
- 310: Zustandsdaten
- 312: Prozessor
- 314: Programminstruktionen
- 316: Kommunikationsschnittstelle
- 400: Providercomputersystem
- 402: Speicher
- 404: geschützter Speicherbereich
- 406: privater kryptographischer Schlüssel
- 408: öffentlicher kryptographischer Schlüssel
- 412: Prozessor
- 414: Programminstruktionen
- 416: Kommunikationsschnittstelle
- 500: Herstellercomputersystem
- 502: Speicher
- 504: geschützter Speicherbereich
- 506: privater kryptographischer Schlüssel
- 508: öffentlicher kryptographischer Schlüssel
- 510: Vorrichtungsdaten
- 512: Prozessor
- 514: Programminstruktionen
- 516: Kommunikationsschnittstelle
- 600: Besitzercomputersystem
- 602: Speicher
- 604: geschützter Speicherbereich
- 606: privater kryptographischer Schlüssel
- 608: öffentlicher kryptographischer Schlüssel
- 610: Zustandsdaten
- 612: Prozessor
- 614: Programminstruktionen
- 616: Kommunikationsschnittstelle

## Patentansprüche

1. Verfahren zum Protokollieren von Zustandsdaten (110, 310, 510, 610) einer Vorrichtung in einer Blockchain (204), wobei die Vorrichtung ein Vorrichtungscomputersystem (100) umfasst, wobei das Vorrichtungscomputersystem (100) einen Speicher (102) umfasst, wobei in dem Speicher (102) ein privater kryptographischer Schlüssel (106) eines der Vorrichtung zugeordneten asymmetrischen Schlüsselpaars gespeichert ist, wobei das Vorrichtungscomputersystem (100) eine Kommunikationsschnittstelle (118) zur Kommunikation über ein erstes Kommunikationsnetzwerk (270) umfasst, wobei die Blockchain (204) in einem Block ein Programmmodul (206) mit ersten Programminstruktionen umfasst, wobei das Programmmodul (206) der Vorrichtung zugeordnet ist und durch Ausführen der ersten Programminstruktionen ein dem Programmmodul (206) zugeordneter Eintrag mit Zustandsdaten (110, 310, 510, 610) der Vorrichtung in der Blockchain (204) erzeugt wird, wobei das Programmmodul (206) einen öffentlichen kryptographischen Schlüssel (108) des der Vorrichtung zugeordneten asymmetrischen Schlüsselpaars identifiziert,
wobei das Verfahren umfasst:
• Empfangen der Zustandsdaten (110, 310) der Vorrichtung durch das Vorrichtungscomputersystem (100),
• Erstellen eines ersten Datensatzes zum Eintragen in die Blockchain (204), wobei der erste Datensatz die Zustandsdaten (110, 310) der Vorrichtung umfasst und das der Vorrichtung zugeordnete Programmmodul (206) identifiziert,
• Signieren des ersten Datensatzes durch das Vorrichtungscomputersystem (100) mit dem privaten kryptographischen Schlüssel (106),
• Senden des signierten ersten Datensatzes durch das Vorrichtungscomputersystem (100) über das erste Kommunikationsnetzwerk (270) an einen Blockchain-Server (200, 220, 240) einer Mehrzahl von Blockchain-Servern (200, 220, 240) eines Blockchain-Netzwerks (260), wobei die Blockchain-Server (200, 220, 240) dazu konfiguriert sind, zusätzliche Blöcke für die Blockchain (204) zu erstellen,
• Empfangen des signierten ersten Datensatzes durch den Blockchain-Server (200, 220, 240),
• Ausführen der ersten Programminstruktionen des durch den Datensatz identifizierten Programmmoduls (206) durch den Blockchain-Server (200, 220, 240), wobei das Ausführen der ersten Programminstruktionen ein Prüfen der Signatur des ersten Datensatzes unter Verwendung des von dem Programmmodul (206) identifizierten öffentlichen kryptographischen Schlüssels (108) umfasst und, im Falle einer gültigen Signatur, ein Hinzufügen eines ersten Eintrags mit dem signierten ersten Datensatz und einem ersten Zeitstempel zu einem zusätzlichen Block für die Blockchain (204).
wobei die Vorrichtung zumindest einen Sensor (130, 150, 170) zum Erfassen der Zustandsdaten (110, 310) der Vorrichtung umfasst und wobei die Zustandsdaten (110, 310) der Vorrichtung von dem zumindest einen Sensor (130, 150, 170) empfangen werden, wobei die Zustandsdaten (110, 310) eine einer Mehrzahl von Elektronikkomponenten (140, 160, 180) der Vorrichtung zugeordnete Kennung (150, 170, 190) umfassen, wobei diese Kennung ein Charakteristikum der Vorrichtung ist, welches eine konkrete Zusammenstellung der Elektronikkomponenten (140, 160, 180) der Vorrichtung und damit den Zustand der Vorrichtung definiert.

2. Verfahren nach Anspruch 1, wobei es sich bei der Vorrichtung um eine Produktionsanlage, eine Verarbeitungsanlage, eine Förderanlage, eine Energiegewinnungsanlage, eine Wärmegewinnungsanlage, eine Steuerungsanlage und/oder eine Überwachungsanlage handelt, oder
wobei es sich bei der Vorrichtung um ein Fahrzeug handelt, wobei die Zustandsdaten (110, 310) vorzugsweise den Kilometerstand des Fahrzeugs umfassen.

3. Verfahren nach einem der Ansprüche 1 bis 2, wobei die Zustandsdaten (110, 310) eine Störmeldung der Vorrichtung umfassen, und/oder wobei die Zustandsdaten (110, 310) eine Software-ID eines Softwareupdates des Vorrichtungscomputersystems (100) umfassen.

4. Verfahren nach einem der vorangehenden Ansprüche, wobei das Vorrichtungscomputersystem (100) die Zustandsdaten (310) von einem Wartungs- und/oder Reparaturcomputersystem (300) empfängt, wobei die von dem Wartungs- und/oder Reparaturcomputersystem (300) empfangenen Zustandsdaten (310) mit einem privaten kryptographischen Schlüssel (306) eines dem Wartungs- und/oder Reparaturcomputersystem zugeordneten asymmetrischen Schlüsselpaars signiert sind und wobei das Verfahren ferner umfasst:
• Prüfen der Signatur der von dem Wartungs- und/oder Reparaturcomputersystem empfangenen Daten unter Verwendung eines öffentlichen kryptographischen Schlüssels (308) des dem Wartungs- und/oder Reparaturcomputersystem zugeordneten asymmetrischen Schlüsselpaars,
• im Falle einer gültigen Signatur, Verwenden der von dem Wartungs- und/oder Reparaturcomputersystem empfangenen Daten zum Erstellen des ersten Datensatzes,
wobei der erste Datensatz vorzugsweise zusätzlich eine ID des Wartungs- und/oder Reparaturcomputersystems als Ursprung der Zustandsdaten (310) umfasst,
wobei der erste Datensatz als ID des Wartungs- und/oder Reparaturcomputersystems vorzugsweise die Signatur der von dem Wartungs- und/oder Reparaturcomputersystem (300) empfangen Zustandsdaten (310) umfasst.

5. Verfahren nach Anspruch 4, wobei die von dem Wartungs- und/oder Reparaturcomputersystem (300) der empfangenen Zustandsdaten (310) Daten über ausgeführte Wartungs- und/oder Reparaturmaßnahmen umfassen,
wobei die von dem Wartungs- und/oder Reparaturcomputersystem (300) empfangenen Zustandsdaten (310) vorzugsweise zumindest eine Vorrichtungsteil-ID eines ausgetauschten Vorrichtungsteils umfassen.

6. Verfahren nach einem der vorangehenden Ansprüche, wobei das Erstellen des ersten Datensatzes nach Ablauf eines vordefinierten Zeitintervalls erfolgt, und/oder
wobei das Erstellen des ersten Datensatzes auf das Empfangen der Zustandsdaten (110, 310) erfolgt, wenn die Zustandsdaten (110, 310) ein vordefiniertes Kriterium erfüllen,
wobei das Kriterium vorzugsweise ein Erreichen eines vordefinierten Kilometerstands ist.

7. Verfahren nach einem der vorangehenden Ansprüche, wobei das Programmmodul (206) den öffentlichen kryptographischen Schlüssel (308) des dem Wartungs- und/oder Reparaturcomputersystem zugeordneten asymmetrischen Schlüsselpaars identifiziert, wobei in einem Speicher (302) des Wartungs- und/oder Reparaturcomputersystems (300) der private kryptographische Schlüssel (306) des dem Wartungs- und/oder Reparaturcomputersystem zugeordneten asymmetrischen Schlüsselpaars gespeichert ist, wobei das Wartungs- und/oder Reparaturcomputersystem (300) eine Kommunikationsschnittstelle (316) zur Kommunikation über ein zweites Kommunikationsnetzwerk (272) umfasst und
wobei das Verfahren ferner umfasst:
• Erstellen eines zweiten Datensatzes zum Eintragen in die Blockchain (204) durch das Wartungs- und/oder Reparaturcomputersystem (300), wobei der zweite Datensatz Zustandsdaten (310) der Vorrichtung umfasst und das der Vorrichtung zugeordnete Programmmodul (206) identifiziert,
• Signieren des zweiten Datensatzes durch das Wartungs- und/oder Reparaturcomputersystem (300) mit dem privaten kryptographischen Schlüssel (306) des Wartungs- und/oder Reparaturcomputersystems,
• Senden des signierten zweiten Datensatzes durch das Wartungs- und/oder Reparaturcomputersystem (300) über das zweite Kommunikationsnetzwerk (272) an einen Blockchain-Server (200, 220, 240) des Blockchain-Netzwerks (260),
• Empfangen des signierten zweiten Datensatzes durch den Blockchain-Server (200, 220, 240),
• Ausführen der ersten Programminstruktionen des durch den zweiten Datensatz identifizierten Programmmoduls (206) durch den Blockchain-Server (200, 220, 240), wobei das Ausführen der ersten Programminstruktionen ein Prüfen der Signatur des zweiten Datensatzes unter Verwendung des von dem Programmmodul (206) identifizierten öffentlichen kryptographischen Schlüssels (308) des dem Wartungs- und/oder Reparaturcomputersystem zugeordneten asymmetrischen Schlüsselpaars umfasst und, im Falle einer gültigen Signatur, ein Hinzufügen eines zweiten Eintrags mit dem signierten zweiten Datensatz und einem zweiten Zeitstempel zu einem zusätzlichen Block für die Blockchain (204).

8. Verfahren nach einem der vorangehenden Ansprüche, wobei das Programmmodul (206) einen öffentlichen kryptographischen Schlüssel (508) eines einem Hersteller der Vorrichtung zugeordneten asymmetrischen Schlüsselpaars identifiziert, wobei in einem Speicher (502) eines Computersystems (500) des Vorrichtungsherstellers ein privater kryptographischer Schlüssel (506) des dem Vorrichtungshersteller zugeordneten asymmetrischen Schlüsselpaars gespeichert ist, wobei das Computersystem (500) des Vorrichtungsherstellers eine Kommunikationsschnittstelle (516) zur Kommunikation über ein drittes Kommunikationsnetzwerk (272) umfasst und
wobei das Verfahren ferner umfasst:
• Erstellen eines dritten Datensatzes zum Eintragen in die Blockchain (204) durch das Computersystem (500) des Vorrichtungsherstellers, wobei der dritte Datensatz Zustandsdaten (510) der Vorrichtung umfasst und das der Vorrichtung zugeordnete Programmmodul (206) identifiziert,
• Signieren des dritten Datensatzes durch das Computersystem (500) des Vorrichtungsherstellers mit dem privaten kryptographischen Schlüssel (506) des Vorrichtungsherstellers,
• Senden des signierten dritten Datensatzes durch das Computersystem (500) des Vorrichtungsherstellers über das dritte Kommunikationsnetzwerk (272) an einen Blockchain-Server (200, 220, 240) des Blockchain-Netzwerks (260),
• Empfangen des signierten dritten Datensatzes durch den Blockchain-Server (200, 220, 240),
• Ausführen der ersten Programminstruktionen des durch den dritten Datensatz identifizierten Programmmoduls (206) durch den Blockchain-Server (200, 220, 240), wobei das Ausführen der ersten Programminstruktionen ein Prüfen der Signatur des dritten Datensatzes unter Verwendung des von dem Programmmodul (206) identifizierten öffentlichen kryptographischen Schlüssels (508) des dem Vorrichtungshersteller zugeordneten asymmetrischen Schlüsselpaars umfasst und, im Falle einer gültigen Signatur, ein Hinzufügen eines dritten Eintrags mit dem signierten dritten Datensatz und einem dritten Zeitstempel zu einem zusätzlichen Block für die Blockchain (204),
wobei der dritte Datensatz vorzugsweise technische Vorrichtungsspezifikationen umfasst.

9. Verfahren nach einem der vorangehenden Ansprüche, wobei das Programmmodul (206) einen öffentlichen kryptographischen Schlüssel (608) eines einem Besitzer der Vorrichtung zugeordneten asymmetrischen Schlüsselpaars identifiziert, wobei in einem Speicher (602) eines Computersystems (600) des Vorrichtungsbesitzers ein privater kryptographischer Schlüssel (606) des dem Vorrichtungsbesitzer zugeordneten asymmetrischen Schlüsselpaars gespeichert ist, wobei das Computersystem (600) des Vorrichtungsbesitzers eine Kommunikationsschnittstelle (616) zur Kommunikation über ein viertes Kommunikationsnetzwerk (272) umfasst und
wobei das Verfahren ferner umfasst:
• Erstellen eines vierten Datensatzes zum Eintragen in die Blockchain (204) durch das Computersystem (600) des Vorrichtungsbesitzers, wobei der vierte Datensatz Zustandsdaten (610) der Vorrichtung umfasst und das der Vorrichtung zugeordnete Programmmodul (206) identifiziert,
• Signieren des vierten Datensatzes durch das Computersystem (600) des Vorrichtungsbesitzers mit dem privaten kryptographischen Schlüssel (606) des Vorrichtungsbesitzers,
• Senden des signierten vierten Datensatzes durch das Computersystem (600) des Vorrichtungsbesitzers über das vierte Kommunikationsnetzwerk (272) an einen Blockchain-Server (200, 220, 240) des Blockchain-Netzwerks (260),
• Empfangen des signierten vierten Datensatzes durch den Blockchain-Server (200, 220, 240),
• Ausführen der ersten Programminstruktionen des durch den vierten Datensatz identifizierten Programmmoduls (206) durch den Blockchain-Server (200, 220, 240), wobei das Ausführen der ersten Programminstruktionen ein Prüfen der Signatur des vierten Datensatzes unter Verwendung des von dem Programmmodul (206) identifizierten öffentlichen kryptographischen Schlüssels (608) des dem Vorrichtungsbesitzer zugeordneten asymmetrischen Schlüsselpaars umfasst und, im Falle einer gültigen Signatur, ein Hinzufügen eines vierten Eintrags mit dem signierten vierten Datensatz und einem vierten Zeitstempel zu einem zusätzlichen Block für die Blockchain (204),
wobei der vierte Datensatz vorzugsweise einen Indikator eines Diebstahls und/oder einer Stilllegung der Vorrichtung umfasst.

10. Verfahren nach einem der vorangehenden Ansprüche, wobei in einem Speicher (402) eines Computersystems (400) eines Providers des Programmmoduls (206) ein privater kryptographischer Schlüssel (406) einer ersten Adresse gespeichert ist, welche dem Provider des Programmmoduls (206) zugeordnet ist, wobei das Computersystem (400) des Providers eine Kommunikationsschnittstelle (416) zur Kommunikation über ein fünftes Kommunikationsnetzwerk (272) umfasst, wobei in dem Speicher (502) des Computersystems (500) des Vorrichtungsherstellers ein privater kryptographischer Schlüssel (506) einer zweiten Adresse gespeichert ist, welche dem Vorrichtungshersteller zugeordnet ist und
wobei das Verfahren umfasst:
• Erstellen einer ersten Transaktionsanweisung zur Transaktion des Programmmoduls (206) von der dem Provider des Programmmoduls (206) zugeordneten ersten Adresse an die dem Vorrichtungshersteller zugeordneten zweite Adresse durch das Computersystem (400) des Providers,
• Signieren der ersten Transaktionsanweisung durch das Computersystem (400) des Providers mit dem privaten kryptographischen Schlüssel (406) der ersten Adresse,
• Senden der signierten ersten Transaktionsanweisung durch das Computersystem (400) des Providers über das fünfte Kommunikationsnetzwerk (272) an einen Blockchain-Server (200, 220, 240) des Blockchain-Netzwerks (260),
• Empfangen der signierten ersten Transaktionsanweisung durch den Blockchain-Server (200, 220, 240),
• Prüfen durch den Blockchain-Server (200, 220, 240), ob die erste Transaktionsanweisung mit dem der ersten Adresse zugeordneten privaten kryptographischen Schlüssel (406) signiert ist,
• im Falle einer gültigen Signatur, Hinzufügen der ersten Transaktionsanweisung zu einem zusätzlichen Block für die Blockchain (204), und/oder
wobei in dem Speicher (602) des Computersystems (600) des Vorrichtungsbesitzers ein privater kryptographischer Schlüssel (606) einer dritten Adresse gespeichert ist, welche dem Vorrichtungsbesitzer zugeordnet ist und
wobei das Verfahren umfasst:
• Erstellen einer zweiten Transaktionsanweisung zur Transaktion des Programmmoduls (206) von der dem Vorrichtungshersteller zugeordneten zweiten Adresse an die dem Vorrichtungsbesitzer zugeordnete dritte Adresse durch das Computersystem (500) des Vorrichtungsherstellers,
• Signieren der zweiten Transaktionsanweisung durch das Computersystem (500) des Vorrichtungsherstellers mit dem privaten kryptographischen Schlüssel (506) der zweiten Adresse,
• Senden der signierten zweiten Transaktionsanweisung durch das Computersystem (500) des Vorrichtungsherstellers über das dritte Kommunikationsnetzwerk (272) an einen Blockchain-Server (200, 220, 240) des Blockchain-Netzwerks (260),
• Empfangen der zweiten Transaktionsanweisung durch den Blockchain-Server (200, 220, 240),
• Prüfen durch den Blockchain-Server (200, 220, 240), ob die zweite Transaktionsanweisung mit dem der zweiten Adresse zugeordneten privaten kryptographischen Schlüssel (506) signiert ist,
• im Falle einer gültigen Signatur, Hinzufügen der zweiten Transaktionsanweisung zu einem zusätzlichen Block für die Blockchain (204).

11. Verfahren nach einem der vorangehenden Ansprüche, wobei das Programmmodul (206) zweite Programminstruktionen umfasst und wobei durch Ausführen der zweiten Programminstruktionen ein dem Programmmodul (206) zugeordneter Eintrag in der Blockchain (204) erzeugt wird, welcher eine Freigabe zur Zuordnung des Programmmoduls (206) zu der Vorrichtung umfasst, wobei das Programmmodul (206) ferner dritte Programminstruktionen umfasst und durch Ausführen der dritten Programminstruktionen ein dem Programmmodul (206) zugeordneter Eintrag in der Blockchain (204) erzeugt wird, welcher das Programmmodul (206) der Vorrichtung zuordnet,
wobei das Verfahren umfasst:
• durch einen Blockchain-Server (200, 220, 240) des Blockchain-Netzwerks (260) Empfangen einer ersten Aufforderung zum Freischalten einer Berechtigung zum Zuordnen des Programmmoduls (206) zu der Vorrichtung durch den Vorrichtungshersteller, wobei die erste Aufforderung den öffentlichen kryptographischen Schlüssel (508) des Vorrichtungsherstellers umfasst, das der Vorrichtung zuzuordnende Programmmodul (206) identifiziert und mit dem privaten kryptographischen Schlüssel (406) des Providers des Programmmoduls (206) signiert ist,
• Ausführen der zweiten Programminstruktionen des durch die erste Aufforderung identifizierten Programmmoduls (206) durch den Blockchain-Server (200, 220, 240), wobei das Ausführen der zweiten Programminstruktionen ein Prüfen der Signatur der ersten Aufforderung unter Verwendung des von dem Programmmodul (206) identifizierten öffentlichen kryptographischen Schlüssels (408) des asymmetrischen Schlüsselpaars umfasst, welches dem Provider zugeordnet ist, und, im Falle einer gültigen Signatur, ein Hinzufügen eines fünften Eintrags mit dem öffentlichen kryptographischen Schlüssel (508) des Vorrichtungsherstellers, einer Zuordnungsfreigabe und einem fünften Zeitstempel zu einem zusätzlichen Block für die Blockchain (204),
• Empfangen einer zweiten Aufforderung des Vorrichtungsherstellers zum Zuordnen des Programmmoduls (206) zu der Vorrichtung durch den Blockchain-Server (200, 220, 240), wobei die zweite Aufforderung das der Vorrichtung zuzuordnende Programmmodul (206) identifiziert und mit dem privaten kryptographischen Schlüssel (506) des Vorrichtungsherstellers signiert ist,
• Ausführen der dritten Programminstruktionen des durch den Datensatz identifizierten Programmmoduls (206) durch den Blockchain-Server (200, 220, 240), wobei das Ausführen der dritten Programminstruktionen ein Prüfen der Signatur der zweiten Aufforderung unter Verwendung des in dem fünften Eintrag gespeicherten öffentlichen kryptographischen Schlüssels (508) des asymmetrischen Schlüsselpaars umfasst, welches dem Vorrichtungshersteller zugeordnet ist, und, im Falle einer gültigen Signatur, ein Hinzufügen eines sechsten Eintrags mit dem öffentlichen kryptographischen Schlüssel (108) der Vorrichtung, einer Zuordnung des Programmmoduls (206) zu der Vorrichtung und einem sechsten Zeitstempel zu einem zusätzlichen Block für die Blockchain (204), und/oder
wobei das Programmmodul (206) vierte Programminstruktionen umfasst und wobei durch Ausführen der vierten Programminstruktionen ein dem Programmmodul (206) zugeordneter Eintrag in der Blockchain (204) erzeugt wird, welcher eine Freigabe zur Zuordnung des Programmmoduls (206) zu der Vorrichtung umfasst,
wobei das Zuordnen umfasst:
• durch einen Blockchain-Server (200, 220, 240) des Blockchain-Netzwerks (260) Empfangen einer dritten Aufforderung zum Freischalten einer Berechtigung zum Zuordnen des Programmmoduls (206) zu der Vorrichtung durch den Vorrichtungshersteller, wobei die dritte Aufforderung ein Passwort und den öffentlichen kryptographischen Schlüssel (508) des Vorrichtungsherstellers umfasst und das der Vorrichtung zuzuordnende Programmmodul (206) identifiziert,
• Ausführen der vierten Programminstruktionen des durch die dritte Aufforderung identifizierten Programmmoduls (206) durch den Blockchain-Server (200, 220, 240), wobei das Ausführen der vierten Programminstruktionen ein Prüfen des Passworts unter Verwendung eines in der Blockchain (204) gespeicherten verschlüsselten Referenzwerts und, im Falle eines gültigen Referenzwerts, ein Hinzufügen eines siebten Eintrags mit dem öffentlichen kryptographischen Schlüssel (508) des Vorrichtungsherstellers, einer Zuordnungsfreigabe und einem siebten Zeitstempel zu einem zusätzlichen Block für die Blockchain (204),
• Empfangen einer zweiten Aufforderung des Vorrichtungsherstellers zum Zuordnen des Programmmoduls (206) zu der Vorrichtung durch den Blockchain-Server (200, 220, 240), wobei die zweite Aufforderung das der Vorrichtung zuzuordnende Programmmodul (206) identifiziert und mit dem privaten kryptographischen Schlüssel (506) des Vorrichtungsherstellers signiert ist,
• Ausführen der dritten Programminstruktionen des durch den Datensatz identifizierten Programmmoduls (206) durch den Blockchain-Server (200, 220, 240), wobei das Ausführen der dritten Programminstruktionen ein Prüfen der Signatur der zweiten Aufforderung unter Verwendung des in dem fünften Eintrag gespeicherten öffentlichen kryptographischen Schlüssels (508) des asymmetrischen Schlüsselpaars umfasst, welches dem Vorrichtungshersteller zugeordnet ist, und, im Falle einer gültigen Signatur, ein Hinzufügen des sechsten Eintrags mit dem öffentlichen kryptographischen Schlüssel (108) der Vorrichtung, einer Zuordnung des Programmmoduls (206) zu der Vorrichtung und einem sechsten Zeitstempel zu einem zusätzlichen Block für die Blockchain (204).

12. Verfahren nach einem der vorangehenden Ansprüche, wobei einer oder mehrerer der privaten kryptographischen Schlüssel (106, 306, 406, 506, 606) in dem jeweiligen Speicher (102, 302, 402, 502, 602) jeweils in einem geschützten Speicherbereich (104, 304, 404, 504, 604) gespeichert sind, und/oder
wobei das Verfahren ferner eine Prüfung der in der Blockchain (204) gespeicherten Zustandsdaten (110, 310) umfasst.

13. System, welches eine Vorrichtung mit einem Vorrichtungscomputersystem (100) und ein Blockchain-Netzwerk (260) mit zumindest einem Blockchain-Server (200, 220, 240) umfasst,
wobei das Vorrichtungscomputersystem (100) einen Speicher (102) umfasst, wobei das Vorrichtungscomputersystem (100) eine Kommunikationsschnittstelle (118) zur Kommunikation über ein erstes Kommunikationsnetzwerk (270) umfasst,
wobei die Vorrichtung zumindest einen Sensor (130, 150, 170) zum Erfassen von Zustandsdaten (110, 310) der Vorrichtung umfasst und wobei die Zustandsdaten (110, 310) der Vorrichtung von dem zumindest einen Sensor (130, 150, 170) empfangen werden, wobei die Zustandsdaten (110, 310) eine einer Mehrzahl von Elektronikkomponenten (140, 160, 180) der Vorrichtung zugeordnete Kennung (150, 170, 190) umfassen, wobei diese Kennung ein Charakteristikum der Vorrichtung ist, welches eine konkrete Zusammenstellung der Elektronikkomponenten (140, 160, 180) der Vorrichtung und damit den Zustand der Vorrichtung definiert,
wobei der zumindest eine Blockchain-Server (200, 220, 240) dazu konfiguriert ist, ein in der Blockchain (204) gespeichertes Programmmodul (206) auszuführen und zusätzliche Blöcke für die Blockchain (204) zu erstellen, und
wobei das System zum Ausführen eines Verfahrens nach einem der Ansprüche 1 bis 6 konfiguriert ist.

14. System nach Anspruch 13, welches ferner ein Wartungs- und/oder Reparaturcomputersystem (300) umfasst, wobei das Wartungs- und/oder Reparaturcomputersystem (300) einen Speicher (302) umfasst, wobei das Wartungs- und/oder Reparaturcomputersystem (300) eine Kommunikationsschnittstelle (316) zur Kommunikation über ein zweites Kommunikationsnetzwerk (272) umfasst,
wobei das System zum Ausführen eines Verfahrens nach Anspruch 7 konfiguriert ist, und/oder
welches ferner ein Computersystem eines Herstellers (500) der Vorrichtung umfasst, wobei das Computersystem (500) des Vorrichtungsherstellers einen Speicher (502) umfasst, wobei das Computersystem (500) des Vorrichtungsherstellers eine Kommunikationsschnittstelle (516) zur Kommunikation über ein drittes Kommunikationsnetzwerk (272) umfasst,
wobei das System zum Ausführen eines Verfahrens nach Anspruch 8 konfiguriert ist, und/oder
welches ferner ein Computersystem (600) eines Besitzers der Vorrichtung umfasst, wobei das Computersystem (600) des Vorrichtungsbesitzers einen Speicher (602) umfasst, wobei das Computersystem (600) des Vorrichtungsbesitzers eine Kommunikationsschnittstelle (616) zur Kommunikation über ein viertes Kommunikationsnetzwerk (272) umfasst,
wobei das System zum Ausführen eines Verfahrens nach einem der Ansprüche 9 bis 10 konfiguriert ist, und/oder
welches ferner ein Computersystem (400) eines Providers des Programmmoduls (206) umfasst, wobei das Computersystem (400) eines Providers des Programmmoduls (206) einen Speicher (402) umfasst, wobei das Computersystem (400) des Providers eine Kommunikationsschnittstelle (416) zur Kommunikation über ein fünftes Kommunikationsnetzwerk (272) umfasst,
wobei das System zum Ausführen eines Verfahrens nach einem der Ansprüche 10 bis 12 konfiguriert ist.

## Claims

1. A method for logging condition data (110, 310, 510, 610) of a device in a blockchain (204), wherein the device comprises a device computer system (100), wherein the device computer system (100) comprises a memory (102), wherein a private cryptographic key (106) of an asymmetric key pair associated with the device is stored in the memory (102), wherein the device computer system (100) comprises a communication interface (118) for communicating via a first communication network (270), wherein the blockchain (204) comprises, in a block, a program module (206) with first program instructions, wherein the program module (206) is associated with the device and an entry associated with the program module (206) with condition data (110, 310, 510, 610) of the device is generated in the blockchain (204) by executing the first program instructions, wherein the program module (206) identifies a public cryptographic key (108) of the asymmetric key pair associated with the device,
wherein the method comprises:
• receiving the condition data (110, 310) of the device by the device computer system (100),
• creating a first data record for entry into the blockchain (204), wherein the first data record comprises the condition data (110, 310) of the device and identifies the program module (206) associated with the device,
• signing the first data record by the device computer system (100) with the private cryptographic key (106),
• sending the signed first record by the device computer system (100) via the first communication network (270) to a blockchain server (200, 220, 240) of a plurality of blockchain servers (200, 220, 240) of a blockchain network (260), wherein the blockchain servers (200, 220, 240) are configured to create additional blocks for the blockchain (204),
• receiving the signed first data record by the blockchain server (200, 220, 240),
• executing, by the blockchain server (200, 220, 240), the first program instructions of the program module (206) identified by the data record, wherein executing the first program instructions comprises verifying the signature of the first data record using the public cryptographic key (108) identified by the program module (206), and, in the case of a valid signature, adding a first entry comprising the signed first data record and a first timestamp to an additional block for the blockchain (204),
wherein the device comprises at least one sensor (130, 150, 170) for detecting the condition data (110, 310) of the device, and wherein the condition data (110, 310) of the device are received by the at least one sensor (130, 150, 170), wherein the condition data (110, 310) comprise an identifier (150, 170, 190) associated with a plurality of electronic components (140, 160, 180) of the device, wherein this identifier is a characteristic of the device, which defines a specific compilation of the electronic components (140, 160, 180) of the device and thus the condition of the device.

2. The method according to claim 1, wherein the device is a production plant, a processing plant, a conveying plant, an energy recovery plant, a heat recovery plant, a control plant and/or a monitoring plant, or
wherein the device is a vehicle, wherein the condition data (110, 310) preferably comprise the mileage of the vehicle.

3. The method according to any one of claims 1 to 2, wherein the condition data (110, 310) comprise a fault message of the device, and/or
wherein the condition data (110, 310) comprise a software ID of a software update of the device computer system (100).

4. The method according to any one of the preceding claims, wherein the device computer system (100) receives the condition data (310) from a maintenance and/or repair computer system (300), wherein the condition data (310) received from the maintenance and/or repair computer system (300) are signed with a private cryptographic key (306) of an asymmetric key pair associated with the maintenance and/or repair computer system, and wherein the method further comprises:
• verifying the signature of the data received by the maintenance and/or repair computer system using a public cryptographic key (308) of the asymmetric key pair associated with the maintenance and/or repair computer system,
• in the case of a valid signature, using the data received from the maintenance and/or repair computer system to create the first data record,
wherein the first data record preferably additionally comprises an ID of the maintenance and/or repair computer system as the origin of the condition data (310),
wherein the first data record preferably comprises the signature of the condition data (310) received from the maintenance and/or repair computer system (300) as the ID of the maintenance and/or repair computer system.

5. The method according to claim 4, wherein the condition data (310) received from the maintenance and/or repair computer system (300) comprise data regarding performed maintenance and/or repair measures,
wherein the condition data (310) received from the maintenance and/or repair computer system (300) preferably comprise at least one device part ID of a replaced device part.

6. The method according to any one of the preceding claims, wherein the first data record is created after a predefined time interval has elapsed, and/or
wherein the first data record is created upon receipt of the condition data (110, 310) when the condition data (110, 310) fulfil a predefined criterion,
wherein the criterion is preferably that a predefined kilometre reading is reached.

7. The method according to any one of the preceding claims, wherein the program module (206) identifies the public cryptographic key (308) of the asymmetric key pair associated with the maintenance and/or repair computer system, wherein the private cryptographic key (306) of the asymmetric key pair associated with the maintenance and/or repair computer system is stored in a memory (302) of the maintenance and/or repair computer system (300), wherein the maintenance and/or repair computer system (300) comprises a communication interface (316) for communication via a second communication network (272), and
wherein the method further comprises:
• creating a second data record for entry into the blockchain (204) by the maintenance and/or repair computer system (300), wherein the second data record comprises condition data (310) of the device and identifies the program module (206) associated with the device,
• signing the second data record by the maintenance and/or repair computer system (300) with the private cryptographic key (306) of the maintenance and/or repair computer system,
• sending the signed second data record by the maintenance and/or repair computer system (300) via the second communication network (272) to a blockchain server (200, 220, 240) of the blockchain network (260),
• receiving the signed second data record by the blockchain server (200, 220, 240),
• executing, by the blockchain server (200, 220, 240), the first program instructions of the program module (206) identified by the second data record, wherein executing the first program instructions comprises verifying the signature of the second data record using the public cryptographic key (308), identified by the program module (206), of the asymmetric key pair associated with the maintenance and/or repair computer system, and, in the case of a valid signature, adding a second entry comprising the signed second data record and a second timestamp to an additional block for the blockchain (204).

8. The method according to any one of the preceding claims, wherein the program module (206) identifies a public cryptographic key (508) of an asymmetric key pair associated with a manufacturer of the device, wherein a private cryptographic key (506) of the asymmetric key pair associated with the device manufacturer is stored in a memory (502) of a computer system (500) of the device manufacturer, wherein the computer system (500) of the device manufacturer comprises a communication interface (516) for communicating via a third communication network (272), and
wherein the method further comprises:
• creating a third data record for entry into the blockchain (204) by the computer system (500) of the device manufacturer, wherein the third data record comprises condition data (510) of the device and identifies the program module (206) associated with the device,
• signing the third data record by the computer system (500) of the device manufacturer with the private cryptographic key (506) of the device manufacturer,
• sending the signed third data record by the computer system (500) of the device manufacturer via the third communication network (272) to a blockchain server (200, 220, 240) of the blockchain network (260),
• receiving the signed third data record by the blockchain server (200, 220, 240),
• executing, by the blockchain server (200, 220, 240), the first program instructions of the program module (206) identified by the third data record, wherein executing the first program instructions comprises verifying the signature of the third data record using the public cryptographic key (508), identified by the program module (206), of the asymmetric key pair associated with the device manufacturer, and, a valid signature, adding a third entry comprising the signed third data record and a third timestamp to an additional block for the blockchain (204),
wherein the third data record preferably comprises technical device specifications.

9. The method according to any one of the preceding claims, wherein the program module (206) identifies a public cryptographic key (608) of an asymmetric key pair associated with an owner of the device, wherein a private cryptographic key (606) of the asymmetric key pair associated with the device owner is stored in a memory (602) of a computer system (600) of the device owner, wherein the computer system (600) of the device owner comprises a communication interface (616) for communication via a fourth communication network (272),
wherein the method further comprises:
• creating a fourth data record for entry into the blockchain (204) by the computer system (600) of the device owner, wherein the fourth data record comprises condition data (610) of the device and identifies the program module (206) associated with the device,
• signing the fourth data record by the computer system (600) of the device owner with the private cryptographic key (606) of the device owner,
• sending the signed fourth data record by the computer system (600) of the device owner via the fourth communication network (272) to a blockchain server (200, 220, 240) of the blockchain network (260),
• receiving the signed fourth data record by the blockchain server (200, 220, 240),
• executing, by the blockchain server (200, 220, 240), the first program instructions of the program module (206) identified by the fourth data record, wherein executing the first program instructions comprises verifying the signature of the fourth data record using the public cryptographic key (608) of the asymmetric key pair associated with the device owner identified by the program module (206), and, in the case of a valid signature, adding a fourth entry comprising the signed fourth data record and a fourth timestamp to an additional block for the blockchain (204),
wherein the fourth data record preferably comprises an indicator of theft and/or immobilisation of the device.

10. The method according to any one of the preceding claims, wherein a private cryptographic key (406) of a first address, which is associated with the provider of the program module (206), is stored in a memory (402) of a computer system (400) of a provider of the program module (206), wherein the computer system (400) of the provider comprises a communication interface (416) for communication via a fifth communication network (272), wherein a private cryptographic key (506) of a second address associated with the device manufacturer is stored in the memory (502) of the computer system (500) of the device manufacturer, and
wherein the method comprises:
• creating a first transaction instruction for the transaction of the program module (206) from the first address associated with the provider of the program module (206) to the second address associated with the device manufacturer by the computer system (400) of the provider,
• signing the first transaction instruction by the computer system (400) of the provider with the private cryptographic key (406) of the first address,
• sending the signed first transaction instruction by the computer system (400) of the provider via the fifth communication network (272) to a blockchain server (200, 220, 240) of the blockchain network (260),
• receiving the signed first transaction instruction by the blockchain server (200, 220, 240),
• checking, by the blockchain server (200, 220, 240), whether the first transaction instruction is signed with the private cryptographic key (406) associated with the first address,
• in the case of a valid signature, adding the first transaction instruction to an additional block for the blockchain (204), and/or
wherein a private cryptographic key (606) of a third address associated with the device owner is stored in the memory (602) of the computer system (600) of the device owner, and
wherein the method comprises:
• creating a second transaction instruction for transaction of the program module (206) from the second address associated with the device manufacturer to the third address associated with the device owner by the computer system (500) of the device manufacturer,
• signing the second transaction instruction by the computer system (500) of the device manufacturer with the private cryptographic key (506) of the second address,
• sending the signed second transaction instruction by the computer system (500) of the device manufacturer via the third communication network (272) to a blockchain server (200, 220, 240) of the blockchain network (260),
• receiving the second transaction instruction by the blockchain server (200, 220, 240),
• checking, by the blockchain server (200, 220, 240), whether the second transaction instruction is signed with the private cryptographic key (506) associated with the second address,
• in the case of a valid signature, adding the second transaction instruction to an additional block for the blockchain (204).

11. The method according to any one of the preceding claims, wherein the program module (206) comprises second program instructions, and wherein, by executing the second program instructions, an entry in the blockchain (204) is generated which is associated with the program module (206) and which comprises an approval for associating the program module (206) to the device, wherein the program module (206) further comprises third program instructions and, by executing the third program instructions, an entry associated with the program module (206) is generated in the blockchain (204) and associates the program module (206) with the device,
wherein the method comprises:
• receiving, by a blockchain server (200, 220, 240) of the blockchain network (260), a first request for enabling authorisation to associate the program module (206) with the device by the device manufacturer, wherein the first request comprises the public cryptographic key (508) of the device manufacturer, identifies the program module (206) to be associated with the device, and is signed with the private cryptographic key (406) of the provider of the program module (206),
• executing, by the blockchain server (200, 220, 240), the second program instructions of the program module (206) identified by the first request, wherein executing the second program instructions comprises verifying the signature of the first request using the public cryptographic key (408), identified by the program module (206), of the asymmetric key pair associated with the provider, and, in the case of a valid signature, adding a fifth entry comprising the public cryptographic key (508) of the device manufacturer, an association approval, and a fifth timestamp to an additional block for the blockchain (204),
• receiving a second request from the device manufacturer to associate the program module (206) with the device by the blockchain server (200, 220, 240), wherein the second request identifies the program module (206) to be associated with the device and is signed with the private cryptographic key (506) of the device manufacturer,
• executing, by the blockchain server (200, 220, 240), the third program instructions of the program module (206) identified by the data record, wherein executing the third program instructions comprises verifying the signature of the second request using the public cryptographic key (508), stored in the fifth record, of the asymmetric key pair associated with the device manufacturer, and, in the case of a valid signature, adding a sixth entry comprising the public cryptographic key (108) of the device, an association of the program module (206) with the device, and a sixth timestamp to an additional block for the blockchain (204), and/or
wherein the program module (206) comprises fourth program instructions, and wherein, by executing the fourth program instructions, an entry associated with the program module (206) is generated in the blockchain (204) and comprises an approval for associating the program module (206) with the device,
wherein the association comprises:
• receiving, by a blockchain server (200, 220, 240) of the blockchain network (260), a third request to enable authorisation to associate the program module (206) with the device by the device manufacturer, wherein the third request comprises a password and the public cryptographic key (508) of the device manufacturer and identifies the program module (206) to be associated with the device,
• executing, by the blockchain server (200, 220, 240), the fourth program instructions of the program module (206) identified by the third request, wherein executing the fourth program instructions comprises checking the password using a locked reference value stored in the blockchain (204) and, in the case of a valid reference value, adding a seventh entry comprising the public cryptographic key (508) of the device manufacturer, an association approval, and a seventh timestamp to an additional block for the blockchain (204),
• receiving, by the blockchain server (200, 220, 240), a second request from the device manufacturer to associate the program module (206) with the device, wherein the second request identifies the program module (206) to be associated with the device and is signed with the private cryptographic key (506) of the device manufacturer,
• executing, by the blockchain server (200, 220, 240), the third program instructions of the program module (206) identified by the data record, wherein executing the third program instructions comprises verifying the signature of the second request using the public cryptographic key (508), stored in the fifth entry, of the asymmetric key pair associated with the device manufacturer, and, in the case of a valid signature, adding the sixth entry comprising the public cryptographic key (108) of the device, an association of the program module (206) with the device, and a sixth timestamp to an additional block for the blockchain (204).

12. The method according to any one of the preceding claims, wherein one or more of the private cryptographic keys (106, 306, 406, 506, 606) are stored in the respective memory (102, 302, 402, 502, 602), in each case in a protected memory area (104, 304, 404, 504, 604), and/or
wherein the method further comprises checking the condition data (110, 310) stored in the blockchain (204).

13. A system comprising a device with a device computer system (100) and a blockchain network (260) with at least one blockchain server (200, 220, 240),
wherein the device computer system (100) comprises a memory (102), wherein the device computer system (100) comprises a communication interface (118) for communicating via a first communication network (270),
wherein the device comprises at least one sensor (130, 150, 170) for detecting condition data (110, 310) of the device, and wherein the condition data (110, 310) of the device are received by the at least one sensor (130, 150, 170), wherein the condition data (110, 310) comprise an identifier (150, 170, 190) associated with a plurality of electronic components (140, 160, 180) of the device, wherein this identifier is a characteristic of the device, which defines a specific compilation of the electronic components (140, 160, 180) of the device and thus the condition of the device,
wherein the at least one blockchain server (200, 220, 240) is configured to execute a program module (206) stored in the blockchain (204) and to create additional blocks for the blockchain (204), and
wherein the system is configured to carry out a method according to any one of claims 1 to 6.

14. The system according to claim 13, further comprising a maintenance and/or repair computer system (300), wherein the maintenance and/or repair computer system (300) comprises a memory (302), wherein the maintenance and/or repair computer system (300) comprises a communication interface (316) for communicating via a second communication network (272),
wherein the system is configured to carry out a method according to claim 7, and/or further comprises a computer system of a manufacturer (500) of the device, wherein the computer system (500) of the device manufacturer comprises a memory (502), wherein the computer system (500) of the device manufacturer comprises a communication interface (516) for communicating via a third communication network (272),
wherein the system is configured to carry out a method according to claim 8, and/or further comprises a computer system (600) of an owner of the device, wherein the computer system (600) of the device owner comprises a memory (602), wherein the computer system (600) of the device owner comprises a communication interface (616) for communicating via a fourth communication network (272),
wherein the system is configured to carry out a method according to any one of claims 9 to 10, and/or
further comprises a computer system (400) of a provider of the program module (206), wherein the computer system (400) of a provider of the program module (206) comprises a memory (402), wherein the computer system (400) of the provider comprises a communication interface (416) for communication via a fifth communication network (272),
wherein the system is configured to carry out a method according to any one of claims 10 to 12.

## Revendications

1. Procédé d'enregistrement de données d'état (110, 310, 510, 610) d'un dispositif dans une chaine de blocs (204), où le dispositif est un système informatique de dispositif (100), où le système informatique de dispositif (100) comprend une mémoire (102), où une clé cryptographique privée (106) d'une paire de clés asymétrique associée au dispositif est enregistrée dans la mémoire (102), où le système informatique de dispositif (100) comprend une interface de communication (118) permettant la communication par le biais d'un premier réseau de communication (270), où la chaine de blocs (204) comprend un module de programme (206) avec des premières instructions de programme dans un bloc, où le module de programme (206) est associé au dispositif et par l'exécution des premières instructions de programme une entrée associée au module de programme (206) avec des données d'état (110, 310, 510, 610) du dispositif est créée dans la chaine de blocs (204), où le module de programme (206) identifie une clé cryptographique publique (108) de la paire de clés asymétrique associée au dispositif,
le procédé comprenant :
• la réception des données d'état (110, 310) du dispositif par le système informatique de dispositif (100),
• l'établissement d'un premier ensemble de données à entrer dans la chaine de blocs (204), où le premier ensemble de données comprend les données d'état (110, 310) du dispositif et identifie le module de programme (206) associé au dispositif,
• la signature du premier ensemble de données par le système informatique de dispositif (100) avec la clé cryptographique privée (106),
• l'envoi du premier ensemble de données signé par le système informatique de dispositif (100) par le biais du premier réseau de communication (270) à un serveur de chaines de blocs (200, 220, 240) parmi une multiplicité de serveurs de chaines de blocs (200, 220, 240) d'un réseau de chaines de blocs (260), où les serveurs de chaines de blocs (200, 220, 240) sont conçus pour établir des blocs supplémentaires destinés à la chaine de blocs (204),
• la réception du premier ensemble de données signé par le serveur de chaine de blocs (200, 220, 240),
• l'exécution des premières instructions de programme du module de programme (206) identifié par l'ensemble de données par le serveur de chaine de blocs (200, 220, 240), où l'exécution des premières instructions de programme comprend une vérification de la signature du premier ensemble de données moyennant l'emploi de la clé cryptographique publique (108) identifiée par le module de programme (206), et, dans le cas d'une signature valide, l'ajout d'une première entrée avec le premier ensemble de données signé et d'une première estampille horaire à un bloc supplémentaire pour la chaine de blocs (204),
où le dispositif comprend au moins un capteur (130, 150, 170) pour la détection des données d'état (110, 310) du dispositif et où les données d'état (110, 310) du dispositif sont réceptionnées par l'au moins un capteur (130, 150, 170), où les données d'état (110, 310) comprennent un identifiant (150, 170, 190) associé à une multiplicité de composants électroniques (140, 160, 180) du dispositif, où cet identifiant est une caractéristique du dispositif, laquelle définit une composition concrète des composants électroniques (140, 160, 180) du dispositif et par conséquent l'état du dispositif.

2. Procédé selon la revendication 1, dans lequel, dans le cas du dispositif, il s'agit d'une installation de production, une installation de traitement, une installation de transport, une installation de production d'énergie, une installation de production de chaleur, une installation de commande et/ou une installation de surveillance, ou
dans lequel, dans le cas du dispositif, il s'agit d'un véhicule, où les données d'état (110, 310) comprennent par exemple l'état kilométrique du véhicule.

3. Procédé selon l'une des revendications 1 à 2, dans lequel les données d'état (110, 310) comprennent un message d'erreur du dispositif, et/ou
dans lequel les données d'état (110, 310) comprennent un ID de logiciel d'une mise à jour de logiciel du système informatique de dispositif (100).

4. Procédé selon l'une des revendications précédentes, dans lequel le système informatique de dispositif (100) réceptionne les données d'état (310) à partir d'un système informatique d'entretien et/ou de réparation (300), où les données d'état (310) reçues à partir du système informatique d'entretien et/ou de réparation (300) sont signées avec une clé cryptographique privée (306) d'une paire de clés asymétrique associée au système informatique d'entretien et/ou de réparation et où le procédé comprend en outre :
• la vérification de la signature des données reçues à partir du système informatique d'entretien et/ou de réparation moyennant l'emploi d'une clé cryptographique publique (308) de la paire de clés asymétrique associée au système informatique d'entretien et/ou de réparation,
• dans le cas d'une signature valide, l'emploi des données reçues à partir du système informatique d'entretien et/ou de réparation pour l'établissement du premier ensemble de données,
dans lequel le premier ensemble de données comprend de préférence de manière complémentaire un ID du système informatique d'entretien et/ou de réparation servant d'origine pour les données d'état (310),
dans lequel le premier ensemble de données sous forme d'ID du système informatique d'entretien et/ou de réparation comprend de préférence la signature des données d'état (310) réceptionnées à partir du système informatique d'entretien et/ou de réparation (300).

5. Procédé selon la revendication 4, dans lequel les données d'état (310) réceptionnées à partir du système informatique d'entretien et/ou de réparation (300) comprennent des données concernant des actions d'entretien et/ou de réparation exécutées,
dans lequel les données d'état (310) réceptionnées à partir du système informatique d'entretien et/ou de réparation (300) comprennent de préférence au moins un ID de pièce de dispositif d'une pièce de dispositif échangée.

6. Procédé selon l'une des revendications précédentes, dans lequel l'établissement du premier ensemble de données a lieu après l'écoulement d'un intervalle de temps prédéfini, et/ou
dans lequel l'établissement du premier ensemble de données a lieu suite à la réception des données d'état (110, 310) lorsque les données d'état (110, 310) satisfont à un critère prédéfini, dans lequel le critère est de préférence l'aboutissement à un état kilométrique prédéfini.

7. Procédé selon l'une des revendications précédentes, dans lequel le module de programme (206) identifie la clé cryptographique publique (308) de la paire de clés asymétrique associée au système informatique d'entretien et/ou de réparation, où la clé cryptographique privée (306) de la paire de clés asymétrique associée au système informatique d'entretien et/ou de réparation est enregistrée dans une mémoire (302) du système informatique d'entretien et/ou de réparation (300), où le système informatique d'entretien et/ou de réparation (300) comprend une interface de communication (316) permettant la communication par le biais d'un deuxième réseau de communication (272), et
où le procédé comprend en outre :
• l'établissement d'un deuxième ensemble de données à entrer dans la chaine de blocs (204) par le système informatique d'entretien et/ou de réparation (300), où le deuxième ensemble de données comprend les données d'état (310) du dispositif et identifie le module de programme (206) associé au dispositif,
• la signature du deuxième ensemble de données par le système informatique d'entretien et/ou de réparation (300) avec la clé cryptographique privée (306) du système informatique d'entretien et/ou de réparation,
• l'envoi du deuxième ensemble de données signé par le système informatique d'entretien et/ou de réparation (300) par le biais du deuxième réseau de communication (272) à un serveur de chaines de blocs (200, 220, 240) du réseau de chaines de blocs (260),
• la réception du deuxième ensemble de données signé par le serveur de chaine de blocs (200, 220, 240),
• l'exécution des premières instructions de programme du module de programme (206) identifié par le deuxième ensemble de données par le serveur de chaine de blocs (200, 220, 240), où l'exécution des premières instructions de programme comprend une vérification de la signature du deuxième ensemble de données moyennant l'emploi de la clé cryptographique publique (308) de la paire de clés asymétrique associée au système informatique d'entretien e/ou de réparation identifiée par le module de programme (206), et, dans le cas d'une signature valide, l'ajout d'une deuxième entrée avec le deuxième ensemble de données signé et d'une deuxième estampille horaire à un bloc supplémentaire pour la chaine de blocs (204).

8. Procédé selon l'une des revendications précédentes, dans lequel le module de programme (206) identifie une clé cryptographique publique (508) d'une paire de clés asymétrique associée à un fabricant du dispositif, où une clé cryptographique privée (506) de la paire de clés asymétrique associée au fabricant de dispositif est enregistrée dans une mémoire (502) du système informatique (500) du fabricant de dispositif, où le système informatique (500) du fabricant de dispositif comprend une interface de communication (516) permettant la communication par le biais d'un troisième réseau de communication (272), et
où le procédé comprend en outre :
• l'établissement d'un troisième ensemble de données à entrer dans la chaine de blocs (204) par le système informatique (500) du fabricant de dispositif, où le troisième ensemble de données comprend des données d'état (510) du dispositif et identifie le module de programme (206) associé au dispositif,
• la signature du troisième ensemble de données par le système informatique (500) du fabricant de dispositif avec la clé cryptographique privée (506) du fabricant de dispositif,
• l'envoi du troisième ensemble de données signé par le système informatique (500) du fabricant de dispositif par le biais du troisième réseau de communication (272) à un serveur de chaines de blocs (200, 220, 240) du réseau de chaines de blocs (260),
• la réception du troisième ensemble de données signé par le serveur de chaine de blocs (200, 220, 240),
• l'exécution des premières instructions de programme du module de programme (206) identifié par le troisième ensemble de données par le serveur de chaine de blocs (200, 220, 240), où l'exécution des premières instructions de programme comprend une vérification de la signature du troisième ensemble de données moyennant l'emploi de la clé cryptographique publique (508) de la paire de clés asymétrique associée au fabricant de dispositif identifiée par le module de programme (206), et, dans le cas d'une signature valide, l'ajout d'une troisième entrée avec le troisième ensemble de données signé et d'une troisième estampille horaire à un bloc supplémentaire pour la chaine de blocs (204),
dans lequel le troisième ensemble de données comprend de préférence des spécifications techniques de dispositif.

9. Procédé selon l'une des revendications précédentes, dans lequel le module de programme (206) identifie une clé cryptographique publique (608) d'une paire de clés asymétrique associée à un propriétaire du dispositif, où une clé cryptographique privée (606) de la paire de clés asymétrique associée au propriétaire de dispositif est enregistrée dans une mémoire (602) du système informatique (600) du propriétaire de dispositif, où le système informatique (600) du propriétaire de dispositif comprend une interface de communication (616) permettant la communication par le biais d'un quatrième réseau de communication (272), et
où le procédé comprend en outre :
• l'établissement d'un quatrième ensemble de données à entrer dans la chaine de blocs (204) par le système informatique (600) du propriétaire de dispositif, où le quatrième ensemble de données comprend des données d'état (610) du dispositif et identifie le module de programme (206) associé au dispositif,
• la signature du quatrième ensemble de données par le système informatique (600) du propriétaire de dispositif avec la clé cryptographique privée (606) du propriétaire de dispositif,
• l'envoi du quatrième ensemble de données signé par le système informatique (600) du propriétaire de dispositif par le biais du quatrième réseau de communication (272) à un serveur de chaînes de blocs (200, 220, 240) du réseau de chaînes de blocs (260),
• la réception du quatrième ensemble de données signé par le serveur de chaine de blocs (200, 220, 240),
• l'exécution des premières instructions de programme du module de programme (206) identifié par le quatrième ensemble de données par le serveur de chaine de blocs (200, 220, 240), où l'exécution des premières instructions de programme comprend une vérification de la signature du quatrième ensemble de données moyennant l'emploi de la clé cryptographique publique (608) de la paire de clés asymétrique associée au possesseur de dispositif identifiée par le module de programme (206), et, dans le cas d'une signature valide, l'ajout d'une quatrième entrée avec le quatrième ensemble de données signé et d'une quatrième estampille horaire à un bloc supplémentaire pour la chaine de blocs (204),
dans lequel le quatrième ensemble de données comprend de préférence un indicateur de vol et/ou un déclassement du dispositif.

10. Procédé selon l'une des revendications précédentes, dans lequel une clé cryptographique privée (406) d'une première adresse, laquelle est associée au fournisseur du module de programme (206), est enregistrée dans une mémoire (402) d'un système informatique (400) d'un fournisseur du module de programme (206), où le système informatique (400) du fournisseur comprend une interface de communication (416) permettant la communication par le biais d'un cinquième réseau de communication (272), où une clé cryptographique privée (506) d'une deuxième adresse, laquelle est associée au fabricant de dispositif, est enregistrée dans la mémoire (502) du système informatique (500) du fabricant de dispositif, et
où le procédé comprend :
• l'établissement d'une première instruction de transaction pour la transaction du module de programme (206) de la première adresse associée au fournisseur de module de programme (206) vers la deuxième adresse associée au fabricant de dispositif par le système informatique (400) du fournisseur,
• la signature de la première instruction de transaction par le système informatique (400) du fournisseur avec la clé cryptographique privée (406) de la première adresse,
• l'envoi de la première instruction de transaction signée par le système informatique (400) du fournisseur par le biais du cinquième réseau de communication (272) à un serveur de chaînes de blocs (200, 220, 240) du réseau de chaînes de blocs (260),
• la réception de la première instruction de transaction signée par le serveur de chaîne de blocs (200, 220, 240),
• la vérification, par le serveur de chaîne de blocs (200, 220, 240) si la première instruction de transaction est signée avec la clé cryptographique privée (406) associée à la première adresse,
• dans le cas d'une signature valide, l'ajout d'une première instruction de transaction à un bloc supplémentaire pour la chaîne de blocs (204),
et/ou
dans lequel une clé cryptographique privée (606) d'une troisième adresse, laquelle est associée au propriétaire de dispositif, est enregistrée dans la mémoire (602 du système informatique (600) du propriétaire de dispositif, et
où le procédé comprend :
• l'établissement d'une deuxième instruction de transaction pour la transaction du module de programme (206) de la deuxième adresse associée au fabricant de dispositif vers la troisième adresse associée au propriétaire de dispositif par le système informatique (500) du fabricant de dispositif,
• la signature de la deuxième instruction de transaction par le système informatique (500) du fabricant de dispositif avec la clé cryptographique privée (506) de la deuxième adresse,
• l'envoi de la deuxième instruction de transaction signée par le système informatique (500) du fabricant de dispositif à un serveur de chaînes de blocs (200, 220, 240) du réseau de chaînes de blocs (260) par le biais du troisième réseau de communication (272),
• la réception de la deuxième instruction de transaction par le serveur de chaîne de blocs (200, 220, 240),
• la vérification, par le serveur de chaîne de blocs (200, 220, 240) si la deuxième instruction de transaction est signée avec la clé cryptographique privée (506) associée à la deuxième adresse,
• dans le cas d'une signature valide, l'ajout de la deuxième instruction de transaction à un bloc supplémentaire pour la chaîne de blocs (204).

11. Procédé selon l'une des revendications précédentes, dans lequel le module de programme (206) comprend des deuxièmes instructions de programme et dans lequel, par l'exécution des deuxièmes instructions de programme, une entrée associée au module de programme (206) est créée dans la chaîne de blocs (204), laquelle comprend une libération pour l'association du module de programme (206) au dispositif, où le module de programme (206) comprend en outre des troisièmes instructions de programme, et par l'exécution des troisièmes instructions de programme, une entrée associée au module de programme (206) est créée dans la chaîne de blocs (204), laquelle associe le module de programme (206) au dispositif,
où le procédé comprend :
• par un serveur de chaînes de blocs (200, 220, 240) du réseau de chaînes de blocs (260), la réception d'une première demande pour la libération d'une autorisation pour l'association du module de programme (206) au dispositif par le fabricant de dispositif, où la première demande comprend la clé cryptographique publique (508) du fabricant de dispositif, qu'identifie le module de programme (206) associé au dispositif et est signée avec la clé cryptographique privée (406) du fournisseur du module de programme (206),
• l'exécution des deuxièmes instructions de programme du module de programme (206) identifié par la première demande par le serveur de chaînes de blocs (200, 220, 240), où l'exécution des deuxièmes instructions de programme comprend une vérification de la signature de la première demande moyennant l'emploi de la clé cryptographique publique (408) de la paire de clés asymétrique, laquelle est associée au fournisseur, identifiée par le module de programme (206), et, dans le cas d'une signature valide, l'ajout d'une cinquième entrée avec la clé cryptographique publique (508) du fabricant de dispositif, d'une libération d'association et d'une cinquième estampille horaire à un bloc supplémentaire pour la chaine de blocs ( 204),
• la réception d'une deuxième demande du fabricant de dispositif pour l'association du module de programme (206) au dispositif par le serveur de chaînes de blocs (200, 220, 240), où la deuxième demande identifie le module de programme (206) associé au dispositif et est signée avec la clé cryptographique privée (506) du fabricant de dispositif,
• l'exécution des troisièmes instructions de programme du module de programme (206) identifié par l'ensemble de données par le serveur de chaînes de blocs (200, 220, 240), où l'exécution des troisièmes instructions de programme comprend une vérification de la signature de la deuxième demande moyennant l'emploi de la clé cryptographique publique (508) de la paire de clés asymétrique, enregistrée dans la cinquième entrée, laquelle est associée au fabricant de dispositif, et, dans le cas d'une signature valide, l'ajout d'une sixième entrée avec la clé cryptographique publique (108) du dispositif, d'une association du module de programme (206) au dispositif et d'une sixième estampille horaire à un bloc supplémentaire pour la chaine de blocs ( 204), et/ou
dans lequel le module de programme (206) comprend des quatrièmes instructions de programme et dans lequel, par l'exécution des quatrièmes instructions de programme, une entrée associée au module de programme (206) est créée dans la chaine de blocs (204), laquelle comprend une libération pour l'association du module de programme (206) au dispositif,
où l'association comprend :
• par un serveur de chaînes de blocs (200, 220, 240) du réseau de chaînes de blocs (260), la réception d'une troisième demande pour la libération d'une autorisation pour l'association du module de programme (206) au dispositif par le fabricant de dispositif, où la troisième demande comprend un mot de passe et la clé cryptographique publique (508) du fabricant de dispositif et qui identifie le module de programme (206) associé au dispositif,
• l'exécution des quatrièmes instructions de programme du module de programme (206) identifié par la troisième demande par le serveur de chaînes de blocs (200, 220, 240), où l'exécution des quatrièmes instructions de programme comprend une vérification du mot de passe, moyennant l'emploi d'une valeur de référence chiffrée enregistrée dans la chaîne de blocs (204), et, dans le cas d'une valeur de référence valide, l'ajout d'une septième entrée avec la clé cryptographique publique (508) du fabricant de dispositif, d'une libération d'association et d'une septième estampille horaire à un bloc supplémentaire pour la chaîne de blocs (204),
• la réception d'une deuxième demande du fabricant de dispositif pour l'association du module de programme (206) au dispositif par le serveur de chaînes de blocs (200, 220, 240), où la deuxième demande identifie le module de programme (206) associé au dispositif et est signée avec la clé cryptographique privée (506) du fabricant de dispositif,
• l'exécution des troisièmes instructions de programme du module de programme (206) identifié par l'ensemble de données par le serveur de chaînes de blocs (200, 220, 240), où l'exécution des troisièmes instructions de programme comprend une vérification de la signature de la deuxième demande moyennant l'emploi de la clé cryptographique publique (508) de la paire de clés asymétrique, enregistrée dans la cinquième entrée, laquelle est associée au fabricant de dispositif, et, dans le cas d'une signature valide, l'ajout d'une sixième entrée avec la clé cryptographique publique (108) du dispositif, d'une association du module de programme (206) au dispositif et d'une sixième estampille horaire à un bloc supplémentaire pour la chaine de blocs (204).

12. Procédé selon l'une des revendications précédentes, dans lequel une ou plusieurs parmi les clés cryptographiques privées (106, 306, 406, 506, 606) sont respectivement enregistrées dans une zone de mémoire (104, 304, 404, 504, 604) respective dans la mémoire (102, 302, 402, 502, 602) respective, et/ou
où le procédé comprend en outre une vérification des données d'état (110, 310) enregistrées dans la chaine de blocs (204).

13. Système, lequel comprend un dispositif avec un système informatique de dispositif (100) et un réseau de chaines de blocs (260) avec au moins un serveur de chaines de blocs (200, 220, 240),
dans lequel le système informatique de dispositif (100) comprend une mémoire (102), où le système informatique de dispositif (100) comprend une interface de communication (118) permettant la communication par le biais d'un premier réseau de communication (270),
dans lequel le dispositif comprend au moins un capteur (130, 150, 170) pour la détection de données d'état (110, 310) du dispositif et où les données d'état (110, 310) du dispositif sont réceptionnées par l'au moins un capteur (130, 150, 170), où les données d'état (110, 310) comprennent un identifiant (150, 170, 190) associé à une multiplicité de composants électroniques (140, 160, 180) du dispositif, où cet identifiant est une caractéristique du dispositif, laquelle définit une composition concrète des composants électroniques (140, 160, 180) du dispositif et par conséquent l'état du dispositif,
dans lequel l'au moins un serveur de chaines de blocs (200, 220, 240) est conçu pour exécuter un module de programme (206) enregistré dans la chaine de blocs (204) et établir des blocs supplémentaires pour la chaine de blocs (204), et
où le système est conçu pour l'exécution d'un procédé selon l'une des revendications 1 à 6.

14. Système selon la revendication 13, lequel comprend en outre un système d'entretien et/ou de réparation (300), où le système d'entretien et de réparation (300) comprend une mémoire (302), où le système d'entretien et de réparation (300) comprend une interface de communication (316) pour la communication par le biais d'un deuxième réseau de communication (272),
où le système est conçu pour l'exécution d'un procédé selon la revendication 7, et/ou lequel comprend en outre un système informatique d'un fabricant (500) du dispositif, où le système informatique (500) du fabricant de dispositif comprend une mémoire (502), où le système informatique (500) du fabricant de dispositif comprend une interface de communication (516) pour la communication par le biais d'un troisième réseau de communication (272),
où le système est conçu pour l'exécution d'un procédé selon la revendication 8, et/ou lequel comprend en outre un système informatique (600) d'un propriétaire du dispositif, où le système informatique (600) du propriétaire de dispositif comprend une mémoire (602), où le système informatique (600) du propriétaire de dispositif comprend une interface de communication (616) pour la communication par le biais d'un quatrième réseau de communication (272),
où le système est conçu pour l'exécution d'un procédé selon l'une des revendications 9 à 10, et/ou
lequel comprend en outre un système informatique (400) d'un fournisseur du module de programme (206), où le système informatique (400) d'un fournisseur du module de programme (206) comprend une mémoire (402), où le système informatique (400) du fournisseur comprend une interface de communication (416) pour la communication par le biais d'un cinquième réseau de communication (272),
où le système est conçu pour l'exécution d'un procédé selon l'une des revendications 10 à 12.
